# EUROPEAN PATENT APPLICATION

(11) **EP 3 398 681 A1**
(43) Date of publication of application: **07.11.2018**
(21) Application number: 18180839.5
(22) Date of filing: 07.03.2014
(51) Int. Cl.: B01L 3/00, B01L 7/00

(54) **MICROFLUIDIC DEVICE**

(30) Priority: 14.03.2013 US 201313803208; 14.03.2013 US 201313803303; 18.10.2013 US 201361892746 P
(62) Divisional of application: 14714061.0
(71) Applicant: Formulatrix, Inc., Waltham, MA 02451 (US)
(72) Inventor: YAMANA, Kabir James, Cambridge, Massachusetts 02140 (US); YAMANA-HAYES, Sean, Cambridge, Massachusetts 02141-1105 (US); STEVENSON, Jeremy, Lexington, Massachusetts 02421 (US); YOUNG, Stephen, Brookfield, Massachusetts 01506 (US)
(74) Representative: Hoffmann Eitle

(57) **Abstract**

Microfluidic devices of the present disclosure relate to quick and inexpensive microfluidic manipulation/handling. A number of channels may be supplied with fluid ingredient(s). In some embodiments, a number of protrusions as well as a sealing material may be disposed adjacent to the channels. When the channels are supplied with fluid ingredient(s), the channels may be partitioned into a number of separate cavities that are fluidly isolated from one another. For instance, a sealing material may be compressed so as to deform into the channels, obstructing fluid flow. In some embodiments, the channels supply fluid ingredients to a number of pre-formed cavities. Once the cavities are supplied with fluid ingredient, channels connecting the cavities may be sealed off; that is, the cavities may be subject to fluid isolation. When appropriate, contents within reaction chambers may be subject to further processing (e.g., thermal cycling, various analyses).

## Description

### FIELD

Aspects of the present disclosure relate generally to methods and apparatuses for microfluidic handling.

### DISCUSSION OF RELATED ART

Polymerase chain reaction (PCR) is a versatile tool for applications in molecular biology. PCR may be used to amplify the amount of a specific gene present in a sample of DNA that may otherwise contain a number of different genes. As such, PCR can be used for a variety of experiments, including genetic testing, forensic analysis, etc. Variants of PCR can be used to quantitatively determine how much of a particular gene of interest is present within a sample of extracted DNA. This can be useful, for example, in determining whether the sample is heterozygous or homozygous for a specific gene of interest.

Modern laboratory experiments often require multiple sets of reagents to be combined according to every possible permutation. An example of such an experiment is polymerase chain reaction (PCR). PCR typically utilizes a DNA sample, PCR typically involves the use of a DNA primer that is complementary to a DNA sample at specific gene locations, and a "master mix" solution that contains DNA polymerase and various reagents (e.g., nucleotides) that facilitate PCR.

When exposed to a relatively high temperature (e.g., greater than 90 C), double helix molecules of a DNA sample are separated into single strands. At a relatively lower temperature (e.g., 50-70 C), DNA primers attach at target sites to single strands of the DNA sample. At an intermediate range of temperature (e.g., 70-80 C), the polymerase facilitates elongation of DNA fragments formed from the initial attachment of primers to the single-stranded DNA molecules. The double-stranded DNA products of one PCR cycle can then be split at the relatively high temperature range and subsequently bound to new primer strands, doubling the amount of DNA in every cycle, until the reagents are exhausted. Thus, the concentration of a DNA sample containing a target DNA sequence, when subject to PCR, may increase exponentially.

PCR is often used for combinatorial analysis of multiple DNA sample solutions and multiple primers. For example, ten different samples being tested for the presence of five different genes will require fifty different reactions. Because primers are often specially fabricated for each target gene, the use of such primers can be expensive. Further, existing microfluidic systems that combine multiple groups of reagents together are typically complicated in design and manufacturing. As a result, combining such reagents to test each permutation is conventionally done via hand pipetting or with a robotic system, and can be both costly and time consuming.

Digital PCR may be useful for determining the concentration of a particular gene of interest within a DNA sample. Digital PCR involves dividing a DNA sample into a large number of separate aliquots. As a result, some fraction of the aliquots will contain a DNA sequence corresponding to the gene of interest, and some fraction of the aliquots will not contain the DNA sequence of interest. The aliquots are then amplified to determine whether a DNA molecule containing the gene of interest was present within each aliquot. Based on the number of aliquots that have undergone exponential growth, the original concentration of DNA prior to dilution may be determined. Conventional systems that employ digital PCR are generally expensive and complex.

There is a need for simpler, less expensive microfluidic systems that retain the robustness of more expensive systems while minimizing the cost per reaction.

### SUMMARY

The inventors have appreciated that a microfluidic device that provides the ability to facilitate multiple combinations of small volume reagents, in a controlled yet inexpensive manner, would be advantageous, particularly in scientific settings (e.g., PCR detection, combinatorial PCR). The inventors have further appreciated that it would be beneficial to develop a quick and cost effective system for dividing a fluid ingredient evenly into a large array of separate chambers and subjecting each of the chambers to fluid isolation from one another (e.g., for digital PCR).

The present disclosure relates to microfluidic devices and their methods of use and construction. Such devices may be used to accommodate multiple series of combinatorial and/or high-throughput chemical/biological reactions more easily than existing techniques/methods.

In an embodiment, a microfluidic device is provided. The device includes a first layer defining a first cavity; a first channel arranged to provide fluid entry to the first cavity; a second layer defining a second cavity; a second channel arranged to provide fluid entry to the second cavity; and at least one separating material providing fluid separation between the first cavity and the second cavity, wherein compression of the first and second layers relative to one another causes sealing of the first channel and the second channel resulting in obstruction of the first cavity and the second cavity from further fluid entry, and wherein manipulation of the at least one separating material causes removal of the fluid separation allowing for fluid communication between the first cavity and second cavity.

In another embodiment, a method of microfluidic handling is provided. The method includes filling a first cavity defined by a first layer with fluid through a channel; filling a second cavity defined by a second layer with fluid through a channel; providing a fluid separation between the first cavity and the second cavity; compressing the first and second layers relative to one another to cause sealing of the channels resulting in obstruction of the first cavity and the second cavity from further fluid entry; and removing the fluid separation and allowing for fluid communication between the first cavity and second cavity.

In yet another embodiment, a microfluidic device is provided. The device includes a first layer defining a first cavity; a first channel arranged to provide fluid entry to the first cavity; a second layer defining a second cavity; a second channel arranged to provide fluid entry to the second cavity; and at least one separating material providing fluid separation between the first cavity and the second cavity, wherein the first and second channels are adapted to be sealed resulting in obstruction of the first cavity and the second cavity from further fluid entry, and wherein heating or dissolving of the at least one separating material causes removal of the fluid separation allowing for fluid communication between the first cavity and second cavity.

In another embodiment, a method of microfluidic handling is provided. The method includes filling a first cavity defined by a first layer with fluid through a channel; filling a second cavity defined by a second layer with fluid through a channel; providing at least one separating material as a fluid separation between the first cavity and the second cavity; sealing the channels of the first and second layers resulting in obstruction of the first cavity and the second cavity from further fluid entry; and heating or dissolving the at least one separating material to remove the fluid separation and allowing for fluid communication between the first cavity and second cavity.

In yet another embodiment, a microfluidic device is provided. The device includes a first layer defining a plurality of cavities; a plurality of channels arranged to provide fluid entry to the plurality of cavities; a second layer disposed adjacent to the first layer; and wherein compression of the first and second layers relative to one another causes sealing of the plurality of channels resulting in obstruction of the plurality of cavities from further fluid entry.

In another embodiment, a microfluidic device is provided. The microfluidic device includes a first layer defining at least one channel; a second layer having a plurality of protrusions disposed adjacent to the at least one channel; and a sealing material disposed adjacent to the at least one channel, wherein the plurality of protrusions are adapted to force at least a portion of the sealing material into the at least one channel upon application of pressure toward the at least one channel, causing partitioning of the at least one channel into a plurality of separate cavities.

In another embodiment, a method of microfluidic handling is provided. The method includes supplying a fluid to at least one channel defined by a first layer, the at least one channel disposed adjacent to a sealing material and a second layer having a plurality of protrusions; pressing the plurality of protrusions toward the at least one channel; and forcing at least a portion of the sealing material into the at least one channel to partition the at least one channel into a plurality of separate cavities containing the fluid.

In another embodiment, a method of fluidly isolating a plurality of cavities connected to a channel bounded by a sealing material is provided. The method includes filling said plurality of cavities with a fluid ingredient containing nucleic acids; and forcing said sealing material into said channel such that adjacent cavities are fluidly isolated serially one after another.

In another embodiment, a method of fluidly isolating a plurality of cavities formed by a surface of a first layer and connected to at least one input well formed by a second surface of said first layer, said first layer contacting a sealing material is provided. The method includes filling said plurality of cavities with a fluid ingredient containing nucleic acids; and compressing said sealing material so as to obstruct further fluid flow between said plurality of cavities.

In another embodiment, a microfluidic device is provided. The device includes a plurality of cavities; at least one input well providing fluid entry to said plurality of cavities; and wherein said plurality of cavities and said input well are disposed in different surfaces of a layer.

Advantages, novel features, and objects of the invention will become apparent from the following detailed description of the invention when considered in conjunction with the accompanying drawings, which are schematic and which are not intended to be drawn to scale. For purposes of clarity, not every component is labeled in every figure, nor is every component of each embodiment of the invention shown where illustration is not necessary to allow those of ordinary skill in the art to understand the invention.

### BRIEF DESCRIPTION OF THE DRAWINGS

The accompanying drawings are not intended to be drawn to scale. In the drawings, each identical or nearly identical component that is illustrated in various figures is represented by a like numeral. Various embodiments of the invention will now be described, by way of example, with reference to the accompanying drawings.
Fig. 1 shows a top view of a microfluidic device in accordance with some embodiments;
Fig. 2 illustrates an exploded perspective view of the microfluidic device of Fig. 1;
Figs. 3A-3C depict different layers of the microfluidic device of Fig. 1;
Fig. 4 shows a cross-sectional view of the microfluidic device of Fig. 1;
Fig. 5 depicts a top view of a microfluidic device in use in accordance with some embodiments;
Fig. 6 shows a top view of a microfluidic device having one layer filled in accordance with some embodiments;
Fig. 7A shows a top view of a microfluidic device having two layers filled in accordance with some embodiments;
Fig. 7B illustrates a cross-sectional view of the microfluidic device of Fig. 7A;
Fig. 8A depicts a top view of a microfluidic device with isolated cavities in accordance with some embodiments;
Fig. 8B illustrates a cross-sectional view of the microfluidic device of Fig. 8A;
Fig. 9A shows a top view indicating a cross-section of a microfluidic device;
Fig. 9B illustrates a series of cross-sectional views of a microfluidic device where the channels are being sealed in accordance with some embodiments;
Fig. 9C illustrates a series of cross-sectional views of another microfluidic device where the channels are being sealed in accordance with some embodiments;
Fig. 9D depicts a series of cross-sectional views of yet another microfluidic device where the channels are being sealed in accordance with some embodiments;
Fig. 10A shows a top view of a microfluidic device with combined cavities in accordance with some embodiments;
Fig. 10B illustrates a cross-sectional view of a microfluidic device with a thinned separating material in accordance with some embodiments;
Fig. 10C depicts a cross-sectional view of a microfluidic device with corresponding cavities combined in accordance with some embodiments;
Fig. 10D depicts another cross-sectional view of a microfluidic device with corresponding cavities combined in accordance with some embodiments;
Fig. 10E shows another cross-sectional view of a microfluidic device with corresponding cavities combined in accordance with some embodiments;
Fig. 10F illustrates another cross-sectional view of a microfluidic device with where fluid ingredients in corresponding cavities are mixed in accordance with some embodiments;
Fig. 11A shows an exploded perspective view of portions of yet another microfluidic device in accordance with some embodiments;
Fig. 11B illustrates a cross-sectional view of the microfluidic device of Fig. 11A;
Fig. 12A shows an exploded perspective view of portions of another microfluidic device in accordance with some embodiments;
Fig. 12B illustrates a cross-sectional view of the microfluidic device of Fig. 12A;
Fig. 13A shows a top view close-up of a microfluidic device in accordance with some embodiments;
Fig. 13B depicts a perspective view close-up of a microfluidic device in accordance with some embodiments;
Fig. 14 depicts a perspective view close-up of a microfluidic device in accordance with some embodiments;
Fig. 15 illustrates a microfluidic device coupled with a thermal cycling assembly in accordance with some embodiments;
Fig. 16A depicts an exploded perspective view of another microfluidic device in accordance with some embodiments;
Fig. 16B shows a cross-sectional view of the microfluidic device of Fig. 16A;
Fig. 16C shows a cross-sectional view of the micro fluidic device of Fig. 16A with sealed channels;
Fig. 17A depicts an exploded perspective view of yet another micro fluidic device in accordance with some embodiments;
Fig. 17B shows a cross-sectional view of the micro fluidic device of Fig. 17A;
Fig. 17C shows a cross-sectional view of the microfluidic device of Fig. 17A with sealed channels;
Fig. 18A depicts an exploded perspective view of another microfluidic device in accordance with some embodiments;
Fig. 18B shows a cross-sectional view of the assembled microfluidic device of Fig. 18A;
Fig. 19A depicts an exploded perspective view of another microfluidic device in accordance with some embodiments;
Fig. 19B shows a cross-sectional view of the assembled microfluidic device of Fig. 19A;
Fig. 20A depicts an exploded perspective view of another microfluidic device in accordance with some embodiments;
Fig. 20B shows a cross-sectional view of the assembled microfluidic device of Fig. 20A;
Fig. 21 depicts an exploded perspective view of another microfluidic device in accordance with some embodiments;
Fig. 22A depicts an exploded perspective view of another microfluidic device in accordance with some embodiments;
Fig. 22B shows a cross-sectional view of the assembled microfluidic device of Fig. 22A;
Fig. 22C shows a cross-sectional view of the assembled microfluidic device of Fig. 22B in a different state;
Fig. 23 shows a cross-sectional view of another microfluidic device in accordance with some embodiments;
Fig. 24 shows a cross-sectional view of another microfluidic device in accordance with some embodiments;
Fig. 25 shows a top plan view of a microfluidic device according to some embodiments;
Fig. 26 shows a top plan view of another microfluidic device according to some embodiments;
Fig. 27 shows a top plan view of yet another microfluidic device according to some embodiments;
Fig. 28A shows a top plan view of a microfluidic device according to some embodiments;
Fig. 28B-28D show cross-sectional views of the microfluidic device of Fig. 28A according to some embodiments;
Fig. 28E shows a cross-sectional view of another microfluidic device according to some embodiments;
Fig. 29 shows a top plan view of a bottom portion of a microfluidic device according to some embodiments;
Fig. 30 shows a perspective view of a bottom portion of the microfluidic device of Fig. 29 according to some embodiments;
Fig. 31A shows a top plan view of a microfluidic device according to some embodiments;
Fig. 31B shows a perspective view of a top portion of the microfluidic device of Fig. 31A according to some embodiments;
Fig. 32A shows a top plan view of a microfluidic device according to some embodiments;
Figs. 32B-32F show cross-sectional views of the microfluidic device of Fig. 32A in use according to some embodiments;
Figs. 33A-33C show cross-sectional views of various microfluidic devices according to some embodiments;
Fig. 34 shows a cross-sectional view of a microfluidic device according to some embodiments.

### DETAILED DESCRIPTION

The present disclosure relates to microfluidic devices that provide for multiple combinations to be made of a number of groups of fluid ingredients, inexpensively and efficiently. For instance, in a laboratory setting, a user faced with multiple groups of reagents that are to be combined in every possible permutation for combinatorial analysis (e.g., PCR detection) may easily implement embodiments of microfluidic devices discussed herein to achieve this goal.

The present disclosure also relates to microfluidic devices that allow for a fluid ingredient to be divided evenly into separate volumes (e.g., through partitioned cavities). Those separate volumes may be fluidly isolated from one another in a quick and easy manner.

In some embodiments, when in use, a microfluidic device may perform a combinatorial analysis between different groups of fluid reagents (e.g., a group of DNA samples and a group of DNA primers). Such a combinatorial analysis may be performed via an array of chambers where each chamber includes at least two cavities that are, initially, fluidly separated. For instance, a plurality of first cavities of one layer may be separated by a separating material from a plurality of second cavities of another layer. The plurality of first cavities may be appropriately filled with fluid from a first group of fluid source reservoirs (e.g., DNA samples). The plurality of second cavities may also be appropriately filled with fluid from a second group of fluid source reservoirs (e.g., DNA primers).

Accordingly, the device may facilitate every combination between the different groups of fluid reagents (e.g., DNA samples and DNA primers). Once respective cavities are suitably filled, each cavity of each chamber is fluidly isolated from one another. Subsequently, the fluid separation between corresponding cavities of each chamber is removed, allowing fluids located within corresponding cavities to mix. Upon mixing, various conditions leading to appropriate reactions (e.g., PCR, biological reactions, chemical reactions, etc.) may be implemented.

Microfluidic devices of the present disclosure may include a number of layers where each layer defines a number of cavities. A number of channels may be arranged to provide fluid entry to the cavities. In some embodiments, certain layers may define both the cavities and the channels. In some embodiments, separate layers may define separate cavities and channels. Further, in some cases, a separating material may provide fluid separation between a number of the cavities, such as cavities that correspond to a reaction chamber.

When the cavities are adequately supplied with appropriate fluid ingredient(s), the channels that initially provide fluid connection between the cavities may be sealed so as to prevent further fluid entry into the cavities. In some embodiments, the layers of the device may be compressed relative to one another (e.g., due to external clamping, probing or rolling of the device) so as to cause the channels to seal. For example, such compression may cause a sealing material to be deformed into the space defined by the channel.

In situations where a separating material divides corresponding cavities of a reaction chamber and it is desired for the contents within those cavities to mix, the separating material may be suitably manipulated so that the fluid separation between cavities is removed. Such removal allows for mixing of the respective fluid ingredients of the corresponding cavities. In some embodiments, portions of the separating material may be heated or dissolved so that the fluid separation between corresponding cavities of a chamber is removed.

Microfluidic devices described herein may include an array of reaction chambers. Initially, each chamber may include one or more fluid separation(s) (e.g., a separating material such as a film, a membrane, etc.) between a number of cavities. In some embodiments, a separating material is disposed between layers that define cavities and/or channels, allowing for fluid enclosure within the cavities and channels. The separating material may further divide reaction chambers of the device into corresponding cavities, preventing fluid from otherwise flowing between the corresponding cavities of each chamber. Thus, while the cavities of each chamber may be individually filled with a fluid ingredient, the fluid ingredients located within each of the corresponding cavities of the chamber are unable to be mixed as long as the fluid separation is present to divide the cavities.

Before removal of the fluid separation between corresponding cavities of the same chamber, if removal occurs at all, neighboring cavities (e.g., cavities defined by an appropriate layer of the device) may be fluidly isolated (e.g., sealed or obstructed from further fluid entry) from one another. Such fluid isolation may occur through deformation (e.g., plastic deformation) of a suitable sealing material into channels that would otherwise provide fluid connection between the cavities.

In some embodiments, the separating material itself may be the sealing material that is deformed so as to cause each of the cavities of the device to be fluidly isolated from one another. For instance, appropriate portions of the separating material, which also act as a sealing material, may deform into channels causing a seal to obstruct fluid from flowing between neighboring cavities connected by the channels. The separating material may be further deformed so as to create an opening between corresponding cavities of each reaction chamber. Once an opening is created between corresponding cavities of a chamber, the chamber is no longer under fluid separation and, as a result, the contents located within each of the corresponding cavities can be combined.

Aspects of the present disclosure provide for arrangement(s) and/or technique(s) for making the process of combining different groups of reagents into separate reaction chambers quick and efficient. Aspects presented herein also provide for even division or partitioning of a fluid ingredient into small volumes and along with fluid isolation of those small volumes. It can be appreciated that microfluidic devices described herein may include any suitable number of layers, components, separating materials, sealing materials, adhesives, etc., in any appropriate arrangement or configuration, and that particular examples of the present disclosure are not intended to be limiting.

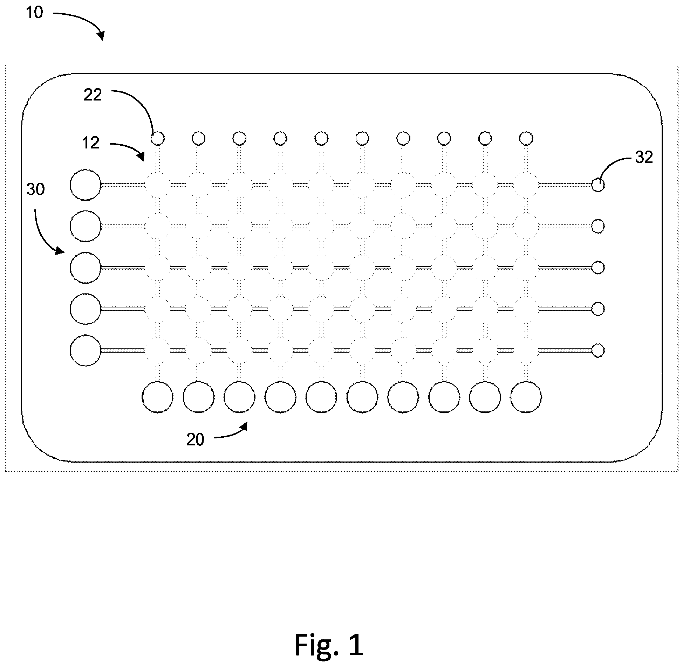

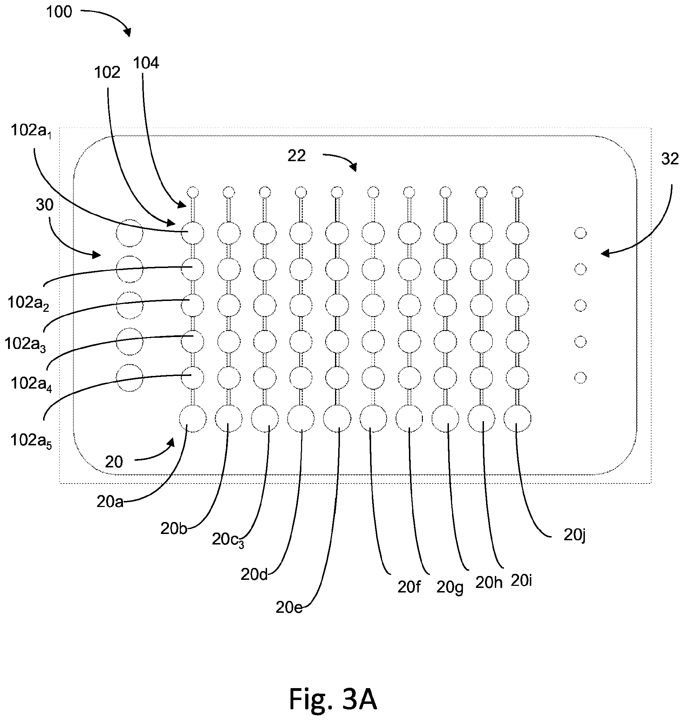

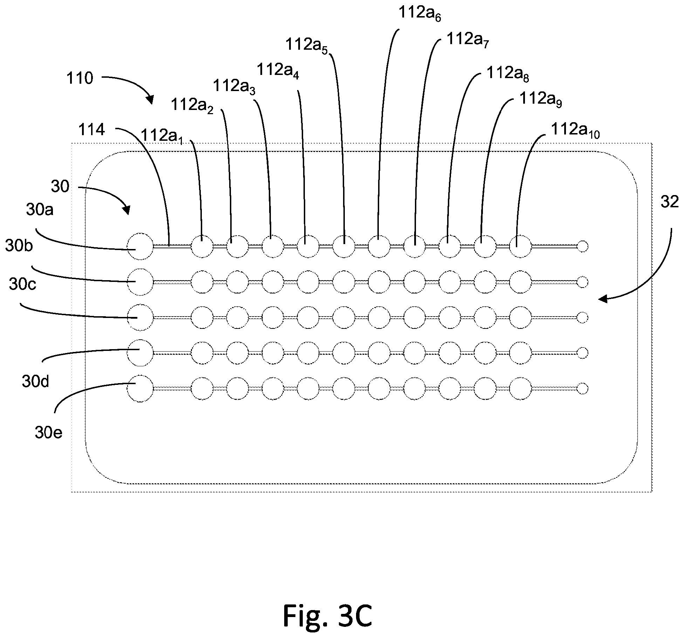

Fig. 1 depicts an embodiment of a microfluidic device 10 having an array of chambers 12 where each chamber is divided into corresponding cavities 102, 112 (separate cavities 102, 112 are further illustrated in Figs. 3A and 3C). Inlets 20, 30 and vents 22, 32 provide for appropriate filling of fluid ingredients into respective groups of cavities, as described in more detail further below, for subsequent reaction.

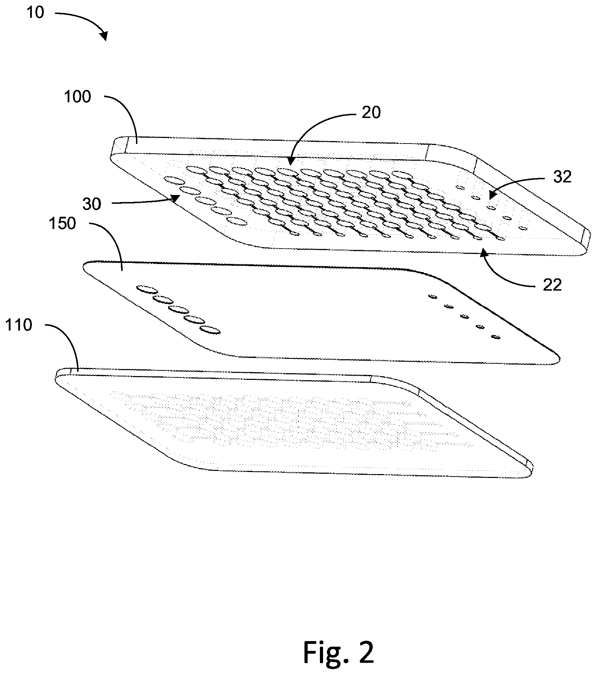

Fig. 2 depicts an exploded view of this embodiment showing the microfluidic device 10 to include a first layer 100, a second layer 110 and an intermediate layer 150 disposed in between the first and second layers. The intermediate layer 150 acts as a separating material that provides fluid separation between corresponding cavities that make up each chamber. As discussed further below, the intermediate layer 150 can also act as a sealing material for fluidly isolating each of the cavities from one another.

Fig. 3A depicts the first layer 100 which defines a number of cavities 102 that are divided into subsets of cavities. Each subset of cavities includes a respective inlet 20, for supply of a fluid ingredient to each of the cavities, and vent 22, for exhaust of excess fluid (e.g., air, ingredient(s), etc.) when appropriate. Illustrated in Fig. 3A, ten different fluid source reservoirs are provided as respective inlets for filling each of the subsets of cavities. That is, the first layer has ten inlets 20a, 20b, 20c, 20d, 20e, 20f, 20g, 20h, 20i, 20j where each inlet is in fluid connection with five cavities 102 and vents 22. Respective inlets 20, cavities 102 and vents of a subset are, in turn, connected to one another via a plurality of channels 104.

For example, a fluid ingredient may be supplied through inlet 20a to each cavity of the subset of cavities 102a₁, 102a₂, 102a₃, 102a₄, 102a₅ via a channel 104, which allows the cavities 102a₁, 102a₂, 102a₃, 102a₄, 102a₅ to be in fluid communication during filling. Accordingly, different fluid ingredients may be supplied to each subset of cavities corresponding to the inlets 20a, 20b, 20c, 20d, 20e, 20f, 20g, 20h, 20i, 20j. Inlets 30 and corresponding vents 32 are also provided in first layer 100 so as to reach through to the second layer 110 for providing suitable fluid lines to supply cavities within the second layer.

As provided herein, channels 104 may include any part of the passageway through which fluid may flow, for example, between an inlet 20 and a vent 22, or between two or more of the cavities 102. Thus, a single channel may be considered to include multiple cavities by virtue of the cavities being in fluid communication. For example, a channel 104 may include each of cavities 102a₁, 102a₂, 102a₃, 102a₄, 102a₅ which are in fluid communication.

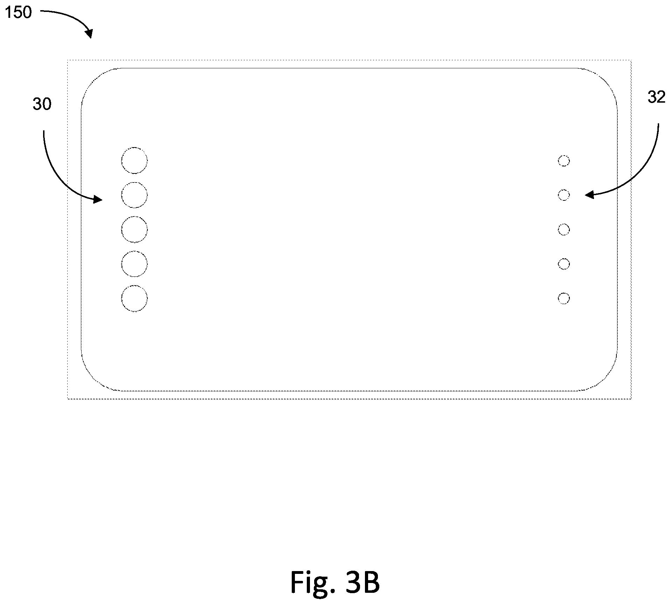

Fig. 3B shows an intermediate layer 150 that includes a separating material having holes that form part of the inlets 30 and vents 32 leading to second layer 110. That is, the holes of the intermediate layer 150 allow for fluid connection between respective fluid source reservoirs that are provided as inlets 30 originating at the first layer 100 and respective cavities 112 and channels 114 of the second layer. Accordingly, in this embodiment, fluid ingredient may be supplied through the first layer 100 to fill appropriate cavities 112 and channels 114 of the second layer 110. Further, the vents 32 may allow excess fluid from the second layer to escape through the first layer.

Fig. 3C depicts the second layer 110 which, similar to the first layer 100, defines a number of cavities 112 divided into subsets of cavities. Each subset of cavities includes a respective inlet 30 and vent 32 so that fluid ingredients may be appropriately supplied to each of the cavities. As shown in Fig. 3C, the second layer has five inlets 30a, 30b, 30c, 30d, 30e where each inlet is in fluid communication with ten cavities 112 and vents 32 which are each, in turn, connected to one another via respective channels 114.

For instance, a fluid ingredient may be supplied through inlet 30a to each cavity of a subset of cavities 112a₁, 112a₂, 112a₃, 112a₄, 112a₅, 112a₆, 112a₇, 112a₈, 112a₉, 112a₁₀ via channel 114. During filling, the channel 114 provides fluid connection between each of the cavities 112a₁, 112a₂, 112a₃, 112a₄, 112a₅, 112a₆, 112a₇, 112a₈, 112a₉, 112a_{10.} It follows that different fluid ingredients may be supplied to each subset of cavities corresponding to the inlets 30a, 30b, 30c, 30d, 30e.

Similarly to that described above with respect to channels 104, channels 114 may include any part of the passageway through which fluid may flow, for example, between an inlet 30 and a vent 32, or between two or more of the cavities 112. For instance, a channel 114 may include each of cavities 112a₁, 112a₂, 112a₃, 112a₄, 112a₅, 112a₆, 112a₇, 112a₈, 112ag, 112a₁₀ which are in fluid communication.

It can be appreciated that the above embodiment is presented by way of example only and is not meant to limit the present disclosure. For example, microfluidic devices described herein may include any suitable configuration of layers and components that provide for an appropriate arrangement of cavities and/or channels that may facilitate separate reactions in the cavities, or chambers that include one or more cavities.

In some embodiments, certain regions of the intermediate layer 150 or the entire layer itself accommodate adherence or attachment of the first and second layers together. For example, the layer may include one or more materials (e.g., adhesive, adhesive on a backing, etc.) that facilitate bonding between the layers. In some embodiments, a different layer and/or material not explicitly shown in the figures is used to adhere various layers together.

In some embodiments, portions of the intermediate layer 150 may form a barrier on one side (e.g., the bottom) of the first layer 100 so as to appropriately enclose the cavities 102 and channels 104. Conversely, portions of the intermediate layer 150 may form a barrier on one side (e.g., the top) of the second layer 110 so as to provide suitable enclosure for the cavities 112 and channels 114. Accordingly, the intermediate layer 150 (e.g., separating material) may provide fluid separation of a chamber into corresponding cavities (e.g., a first cavity from the first layer and a second cavity from the second layer that are in alignment with one another).

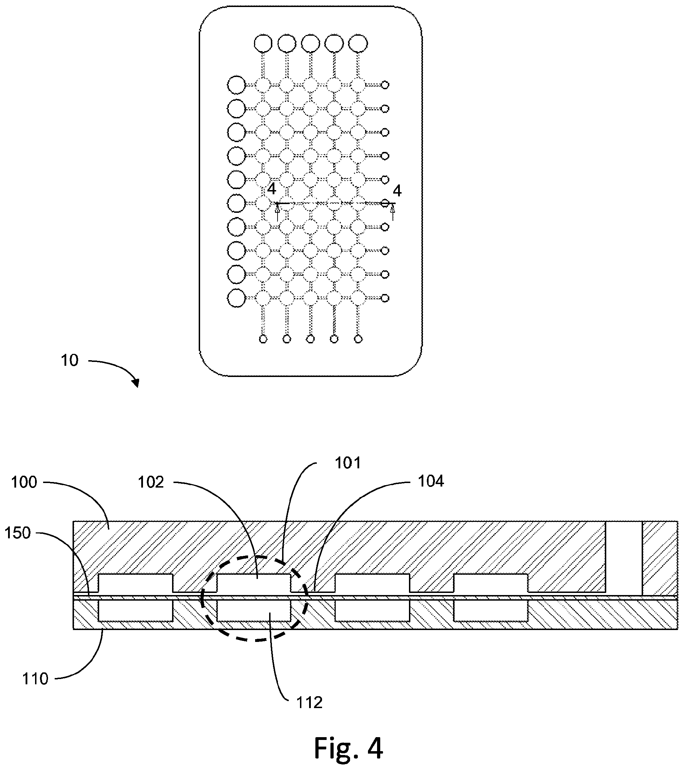

The cross-sectional view depicted in Fig. 4 shows an embodiment including a number of chambers with corresponding cavities of each chamber.

Channels connect cavities associated with respective layers together. As shown, a first layer 100 and a second layer 110 are respectively bonded to the intermediate layer 150 on either side. The intermediate layer 150 provides for a separating material that forms a fluid separation between corresponding cavities of each chamber. In some embodiments, the first and second layers are generally stiffer (e.g., relatively more rigid) than the intermediate layer. In other embodiments, the first and second layers are of a similar stiffness, or less stiff, than the intermediate layer. The first and second layers, as compared with one another, may be of a similar or different stiffness.

As shown in Fig. 4 and indicated by the dashed circle, the chamber 101 includes a first cavity 102 of the first layer and a second cavity 112 of the second layer, divided by the separating material of the intermediate layer. The channel 104 provides a fluid connection between other cavities 102 of the first layer. Similarly, the channel 114 (which is not expressly shown as it comes through the cross-sectional plane) provides a fluid connection between other cavities 112 of the second layer.

While the intermediate layer 150 is depicted as a single monolithic membrane that serves as a separating material between corresponding cavities of each chamber as well as forming a barrier to form a suitable enclosure for respective cavities 102, 112 and channels 104, 114, it can be appreciated that the intermediate layer may include a number of components that are separate from one another. In some embodiments, the intermediate layer may include individual separating material components that are placed at discrete positions relative to respective cavities and channels of the first and second layers. For example, the intermediate layer may include a particular separating material, or portions thereof, that are appropriately positioned so as to define the cavities, and a different separating material, or portions thereof, that define the channels. Such an arrangement may be beneficial when it is preferred that various regions of the separating material exhibit different properties (e.g., more rigid, more soft) depending on whether the material is located directly adjacent to a cavity, or a channel.

A separating material may be composed of any suitable material or composition. In some embodiments, the separating material includes a plastic/polymer, such as polyethylene, polypropylene, ethylene-vinyl acetate, an elastomer such as silicone rubber, or a wax such as paraffin or microcrystalline wax, or combinations thereof. As such, the separating material may include a blend of several different compositions or may be provided in various configurations, such as in layered or more discrete arrangements, where different pieces of the separating material are placed at various locations. As discussed further below, during use, the separating material may also be used as a sealing material for preventing fluid flow between cavities through connecting channels. Or, a different sealing material may be used in combination with a distinct separating material.

Layers of microfluidic devices described herein may include any suitable material and may be composed of similar or different materials. In some embodiments, a layer is made of a relatively rigid plastic, for example, polypropylene, polyethylene, polycarbonate, PTFE, etc. Alternatively, a layer may include a flexible, rubber-like material such as silicone or other elastomer. Other potential materials include glass, ceramics, silicon, or the like. As such, a layer may be rigid or deformable. Such materials may be translucent or clear so as to easily allow for optical measurements of the contents within the chambers/cavities.

Individual layers of the microfluidic device may be made by any suitable method. In some embodiments, layers are fabricated via injection molding, by embossing the cavities and channels into a thin sheet of plastic, etching, or any other suitable method. For example, spaces that define the cavities and channels may be formed (e.g., molded, etched) in a plastic/polymer or elastomeric material that makes up the layer.

In some embodiments, different layers may define cavities and channels that are initially in fluid communication. For example, a first layer may define a number of cavities without defining the channels that connect the cavities together; an additional layer adjacent to the first layer may define those channels that connect the cavities. Such channels may be appropriately sealed, for example, by compression of the two layers relative to each other.

As such, a layer may define one or more cavities and/or channels of the device, such as in embodiments that depict the first and second layers 100, 110. Or, as also discussed above, a layer may include a separating material and/or a sealing material, such as the intermediate layer 150.

Accordingly, in some embodiments, a layer may include acrylic adhesive, natural rubber adhesive, or silicone adhesive. Such materials may be suitable to deform into channels of the device (e.g., as a sealing material) when subject to compression. In some embodiments, adhesives may be disposed on a relatively rigid layer, or alternatively, on a separate backing. Examples of suitable backings may include polypropylene, polyethylene, polycarbonate, and/or other suitable plastics.

Various components (e.g., layers, adhesives, etc.) of microfluidic devices described herein may be adhered together by any suitable method. For example, an adhesive may be used to bond one or more components together, such as for bonding a separating/sealing material and the first and/or second layers. In some embodiments, the components of the microfluidic device are compressed together (e.g., via clamping, rolling, or other externally applied force) so as to result in an evenly distributed bond between surfaces of different layers.

For certain materials, the application of an appropriate amount of compression and/or heat may result in certain characteristics of the separating/sealing material, or other components of the device, to change. For example, at elevated temperatures, certain materials such as wax will become increasingly tacky and/or adhesive, resulting in strong adherence between components of the device. Accordingly, the different layers of the device, including a wax layer, may be assembled and then subject to compression and heating for an appropriate period of time, allowing the wax to create a bond. In some embodiments, one or more appropriate solvents may be used to promote bonding between layers.

As discussed above, microfluidic devices according to the present disclosure may be useful to facilitate multiple combinations of different groups of reagents. In some embodiments, once fluid ingredients of corresponding cavities in various chambers are combined/mixed, the chamber(s) may be subject to thermal cycling. For example, a heat source configured for thermal cycling (e.g., to facilitate PCR) may be placed in contact, or otherwise coupled, with the first and/or second layer. In some cases, the layer in which the heat source is in contact may be relatively thin and/or may include a thermally conductive material so as to facilitate heat transfer.

Referring to the embodiment of Figs. 1-4, the first layer 100 provides ten inlets 20 with five cavities 102 fluidly connected to each respective inlet 20 and the second layer 110 provides five inlets 30 with ten cavities 112 fluidly connected to each respective inlet 30. Accordingly, the device may accommodate a total of fifty different reactions based on mixtures of different combinations of reagents, depending on the supply of various fluid ingredients. Taking combinatorial PCR reactions described previously as an example, each of the inlets 20 of the first layer 100 may be supplied with ten different DNA samples to be analyzed and, hence, each of the inlets 30 of the second layer 110 may be supplied with five different DNA primer mixes as target probes for analysis of the respective DNA samples.

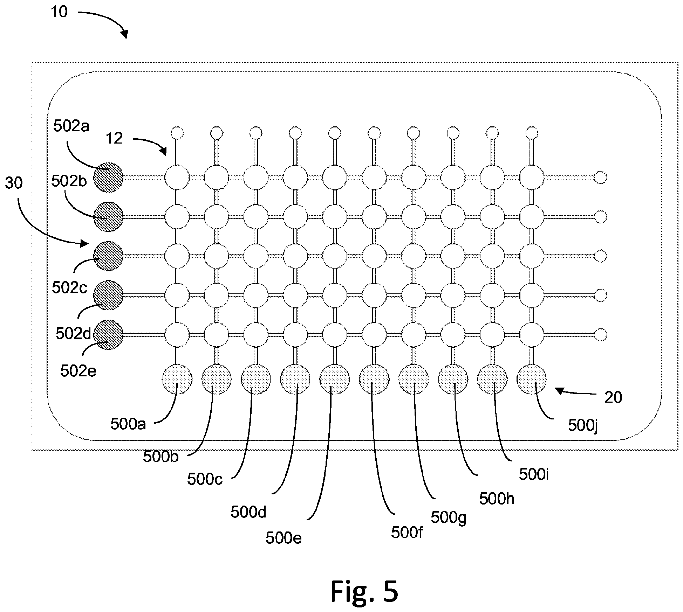

Figs. 5-10F illustrate embodiments of the present disclosure where each of the cavities of the device are supplied with respective fluid ingredients prior to fluid isolation of the cavities, and after fluid isolation of the cavities, subsequent mixing of the contents within corresponding cavities.

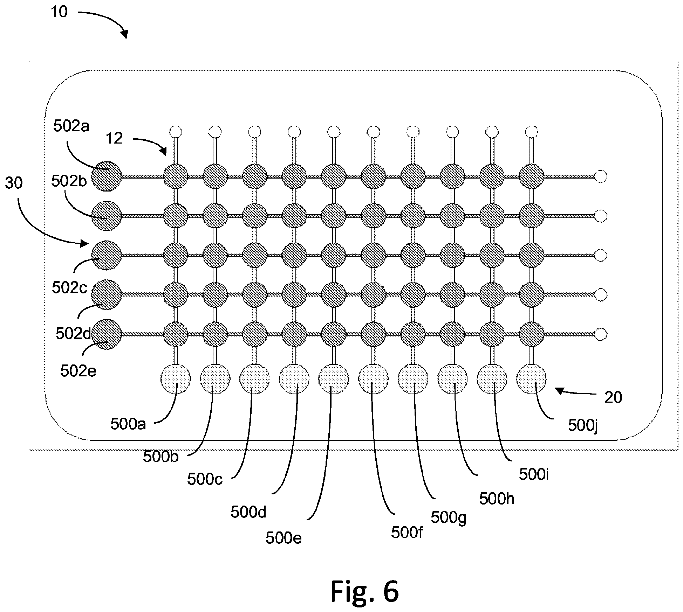

Fig. 5 shows an embodiment of an assembled microfluidic device where a number of fluid source reservoirs are provided as inlets 20, 30. A group of fluid source reservoirs 20 are arranged to provide filling of respective cavities of the first layer 100 with fluid ingredient 500. And another group of fluid source reservoirs 30 are arranged to fill respective cavities of the second layer 100 with fluid ingredient 502. By way of explanation, fluid ingredients 500a, 500b, 500c, 500d, 500e, 500f, 500g, 500h, 500i, 500j filling inlets 20 of the first layer 100 are illustrated to be lighter in color than fluid ingredients 502a, 502b, 502c, 502d, 502e filling inlets 30 of the second layer 110. Fig. 6 illustrates cavities of the second layer 110 having been filled with fluid ingredients 502a, 502b, 502c, 502d, 502e from respective fluid source reservoirs.

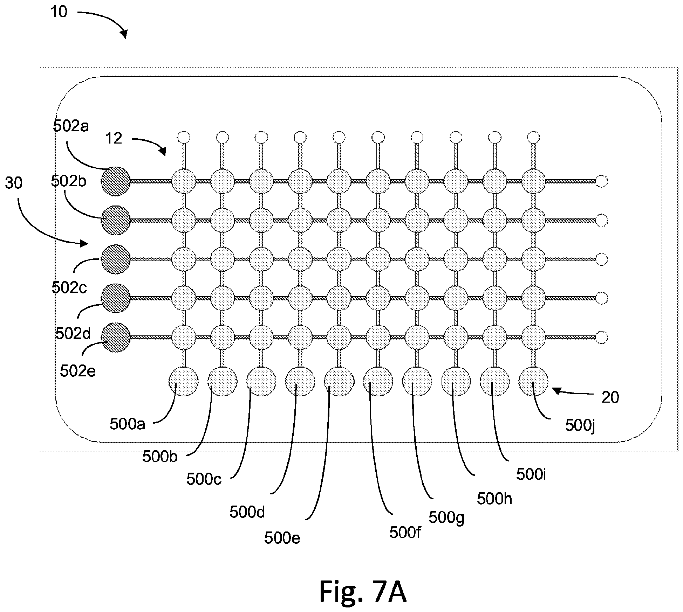

Fig. 7A shows cavities of the first layer 100 having been filled with fluid ingredients 500a, 500b, 500c, 500d, 500e, 500f, 500g, 500h, 500i, 500j from respective fluid source reservoirs. The fluid source reservoirs are provided as inlets 20 and arranged to fill respective cavities 102.

Fluid ingredients may be supplied to respective inlets, cavities and channels by any suitable method. In some embodiments, a machine or user pipettes appropriate reagents into input wells. Or, separate containers may be appropriately connected to respective inlets for supplying fluid held by the containers to the inlets. Cavities and channels may be supplied with respective fluid ingredients, for example, by capillary action, gravity, centrifuging, suction from the vent holes, vacuum suction, pressure on the input wells, and/or any other suitable manner. Thus, any push or pull method may be used to suitably supply cavities and channels with appropriate fluid ingredient(s). Fluid ingredients 500 and 502 may be supplied to cavities 102 and 112 sequentially or simultaneously.

Each input well 20 of the first layer 100 of this example may be suitable to accommodate filling of five cavities and the connecting channels between those cavities. In some cases, an amount of extra fluid ingredient may be left over. Similarly, each input well 30 of the second layer 110 may be suitable to accommodate filling of ten cavities and the connecting channels of those cavities. Vent holes may allow for excess air and/or fluid ingredient to escape from the channels and/or cavities when the channels and cavities are filled with respective fluid ingredients and be exhausted from the system. For instance, compression of the first and second layers relative to one another may reduce the amount of space available and/or increase the fluid pressure within the device (e.g., within cavities and channels) resulting in fluid displacement; hence, vent holes may accommodate for an appropriate amount of overflow to occur.

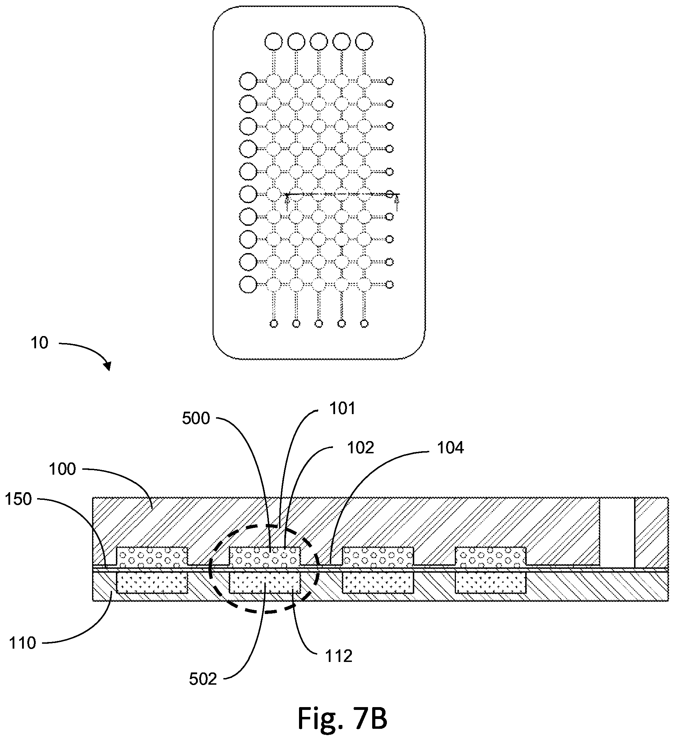

The cross-sectional view depicted in Fig. 7B shows corresponding cavities of each chamber filled with fluid ingredients 500, 502. As indicated by the dashed circle, the chamber 101 includes first cavity 102 and second cavity 112 which are, at this stage, divided by the separating material of the intermediate layer 150 such that fluid is unable to flow between the cavities, hence, mixing of the fluid ingredients 500, 502 with each other is prevented. As further shown in Fig. 7B, the channel 104 provides a fluid connection between other cavities of the first layer having received fluid ingredient from a respective inlet 20. Similarly, the channel 114 (not expressly shown) provides a fluid connection between other cavities 112 of the second layer having received fluid ingredient from a respective inlet 30.

After the cavities are filled with the appropriate fluid ingredients, the cavities are subsequently isolated from one another such that fluid is unable to spill or flow from one cavity to another. In bringing about this fluid isolation, in some embodiments, a sealing material is caused to deform into and substantially fill the space defined by the channels so that fluid flow that was previously permitted between cavities is now blocked.

To cause such sealing of the channels between cavities, in some embodiments, an external force (e.g., compressive) and/or heat is applied to the device. For example, the device (e.g., at exterior surfaces of the layers) may be clamped, rolled or probed so as to be subject to a suitable compressive force. Further, the device may be heated so as to cause deformation of the sealing material itself, which, in some embodiments, also happens to be the separating material.

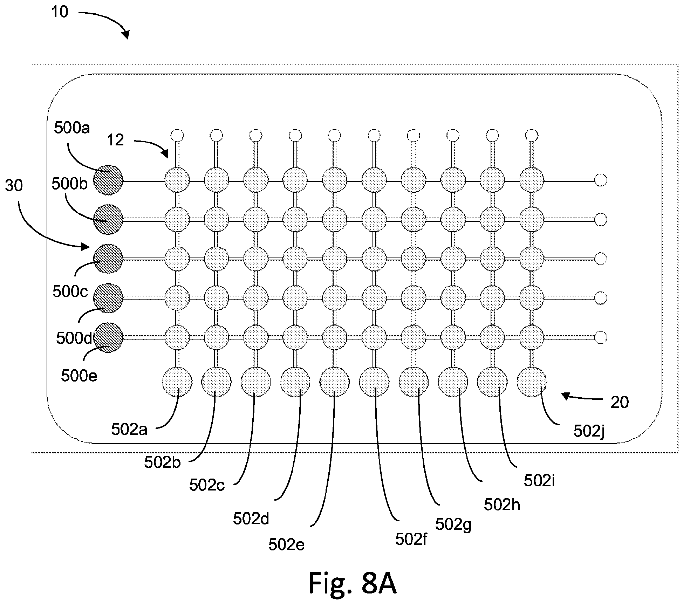

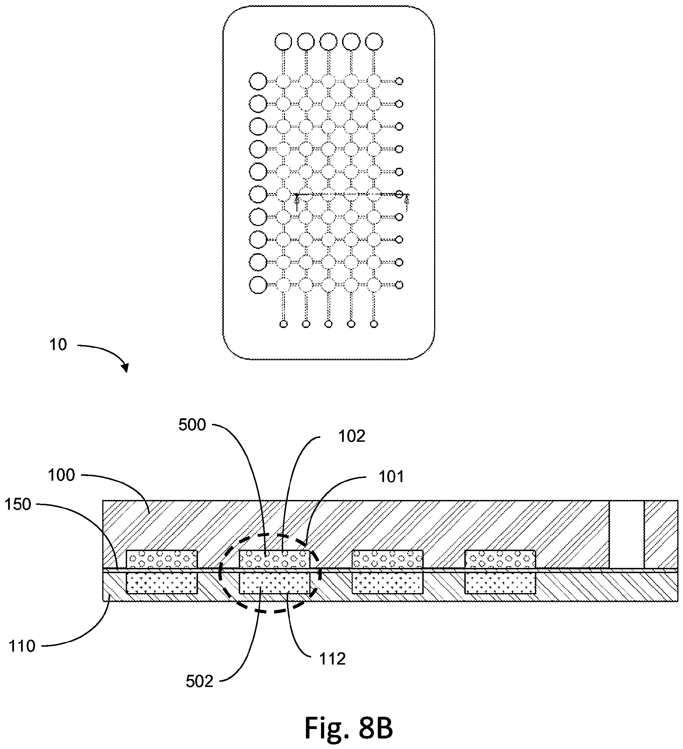

Figs. 8A-8B show an embodiment where application of an appropriate degree of compressive force and/or heat pushes certain portions of the separating/sealing material (e.g., regions of the separating/sealing material aligned with the channels) into the channels, resulting in sealing of the channels and, thus, fluid isolation of the cavities from one another.

In some embodiments, the amount of compressive force exerted on the device sufficient to result in sealing off of the channels may be between about 100 Newtons and about 10,000 Newtons (e.g., 100-1,000 N; 1,000-5,000 N; 5,000-10,000 N), depending on the overall size of the device and the nature of the separating/sealing material. For example, the larger the device (i.e., the more cavities and channels), the more compressive force may be required to seal the channels from flow between cavities. Or, the softer the material, the less compressive force may be needed to deform the material into respective channels of the device.

In some embodiments, the separating/sealing material may be heated to an elevated temperature so as to cause softening of the material sufficient for the material to deform into adjacent channels. Such an elevated temperature may depend on the softening point of the material, for example, between about 40 C and about 90 C (e.g., between about 50 C and about 70 C) for certain polymeric or wax compositions.

It can be appreciated that any suitable method may be used to create a seal within channels such that cavities are fluidly isolated from one another. For example, separate pieces of a sealing material may be distributed throughout the device and located directly adjacent to each channel. Upon application of heat or laser irradiation, locally (e.g., with a heat probe) and/or globally (e.g., with a heated plate) to the overall device, the sealing material may melt, soften, or otherwise deform into the channel so as to cause sealing of the channel resulting in obstruction of fluid flow between cavities. For example, the sealing material may be adapted to, at least partially, melt, soften, or otherwise deform into the channel upon application of external compressive force and/or heat to particular regions of the device, or the device as a whole.

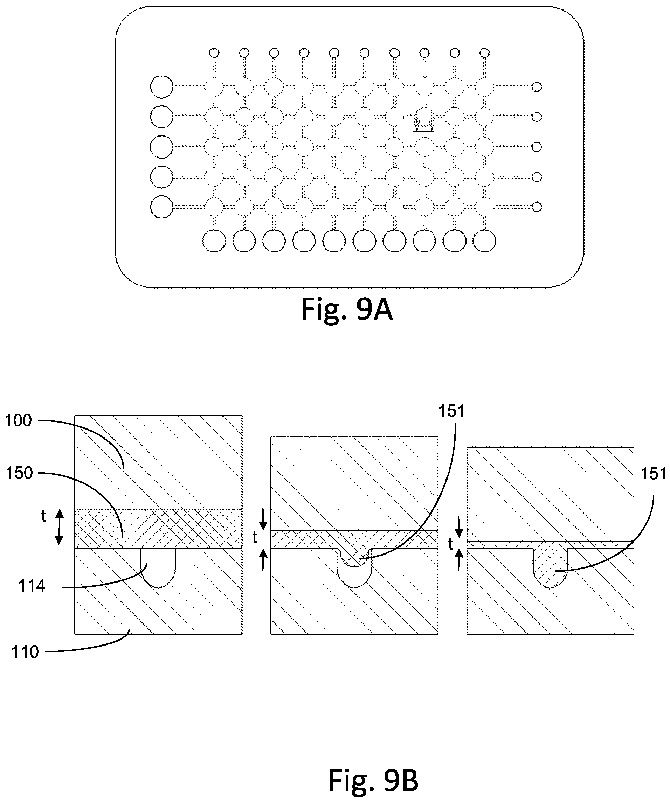

The cross-sectional view provided by Figs. 9A-9B show a process of sealing a channel 114 upon appropriate actuation (e.g., compression, heating and/or other suitable method) of the sealing material. Fig. 9A shows where the cross-section is taken to illustrate Fig. 9B. In Fig. 9B, the intermediate layer 150 disposed between first and second layers 100, 110 includes a separating/sealing material.

The first and second layers 100, 110 are compressed relative to one another such that a portion 151 of the separating/sealing material is caused to deform into the space defined by the channel through which fluid would otherwise be able to flow. As shown, other portions of the separating/sealing material are also compressively deformed as well, depicted by the reduction in thickness t of the intermediate layer 150. In some embodiments, some of the portion 151 of the separating/sealing material that deforms into the channel 114 is supplied by separating/sealing material displaced from areas surrounding the channels, which contributes to the overall reduction in thickness t of the intermediate layer 150. The portion of the separating material 151 that blocks the channel, however, prevents fluid from flowing through the channel 114 between cavities that were previously in fluid communication.

In another embodiment, a portion of the first or second layer(s) itself may be deformed into the channel so as to cause sealing. For instance, the first or second layer may be composed of a deformable material, such as silicone, an elastomer, or the like. Such a material may act as a sealing material. Or, the first and/or second layer may include a material that substantially softens after the application of heat so that the material deforms into the channels.

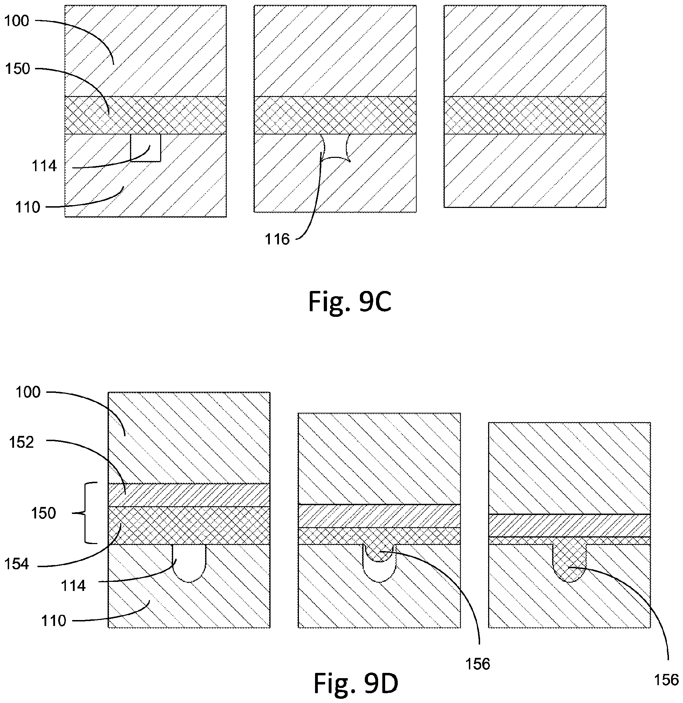

In some embodiments, adjacent layers are compressed relative to one another and material from one of the layers itself behaves as a sealing material and deforms into the channel space. As shown in Fig. 9C, appropriate actuation of the first or second layer(s) may cause channel collapse, that is, deformation of a portion of the sealing material 116 into the space that previously permitted fluid flow there through. Such collapse prevents fluid from flowing through the channel 114 between cavities. Accordingly, fluid located within neighboring cavities that had previously been in fluid communication is no longer able to flow between the cavities.

In another embodiment, the intermediate layer 150 may include a distinct separating material 152 and a sealing material 154 for sealing the channels 104, 114. Fig. 9D depicts an example where the sealing material 154 is disposed directly adjacent to the channels between the separating material 152 and the channel 114.

Appropriate actuation of the sealing material 154 (e.g., application of compressive force, heating, magnetic force, etc.) may cause a portion of the sealing material 154 to be deformed into the channel 114 such that fluid is unable to flow through the channel 114 and between cavities. In some cases, such a sealing material 154 may be more susceptible to deformation (e.g., may have a lower compressive and/or thermal threshold for softening/deforming) than the separating material 152. For instance, when the layers are subject to compression relative to one another (e.g., due to an externally applied force), for this embodiment, the applied compressive force causes the portion of the sealing material 156 to deform into the channel while the separating material 152 of the intermediate layer 150 remains largely without any deformation, if at all.

In some embodiments, the process of sealing the channels is irreversible. For example, a sealing material may be plastically, hence, permanently deformed into the space of the channel through which fluid would otherwise be able to flow. Accordingly, absent disassembly of the microfluidic device to remove the sealing material from the channels, such channel sealing is not a reversible characteristic.

It can be appreciated that alternative methods of actuation may cause a sealing material to deform into the channel, sealing off fluid flow between cavities.

While separate and distinct compositions may be used as a separating material and a sealing material, as described above, the same composition may be used as both a separating material and a sealing material. For example, an intermediate layer 150 may include a membrane composed of a suitable composition (e.g., polymer, wax, or combinations thereof) that may serve to cause sealing of channels between cavities (e.g., by deformation into the channels) as well as to separate corresponding cavities of a reaction chamber from one another prior to mixing. Or, as also discussed with reference to Fig. 9C, a layer that defines cavities and/or channels may itself include a composition that serves as a sealing material to prevent fluid flow between neighboring cavities.

In some cases, any portion of the intermediate layer 150, such as the separating material 152 and/or the sealing material 154, may be used as an adhesive for bonding layers of the device together.

For instances where channels are sealed due to deformation of a sealing material into neighboring channels, any suitable methods for causing the deformation may be used. As discussed above, a sealing material may be caused to appropriately deform due to compressing layers of the device (e.g., externally applied compression, clamping/rolling of exterior surfaces of the layer(s), applying a local probe to various regions, etc.), heating appropriate portions of the device (e.g., using a thermal plate, a heat probe, a laser, etc.), magnetically actuating certain regions of the device, or any other suitable method. It can be appreciated that different regions of the device may be selectively actuated. For example, heat and/or compression may be directed to particular regions where sealing of the channels is desired, rather than to an entire surface of the device.

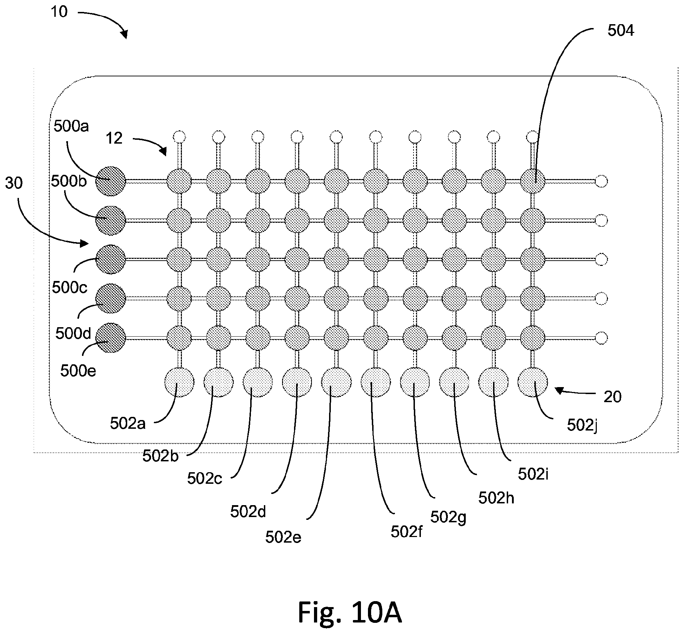

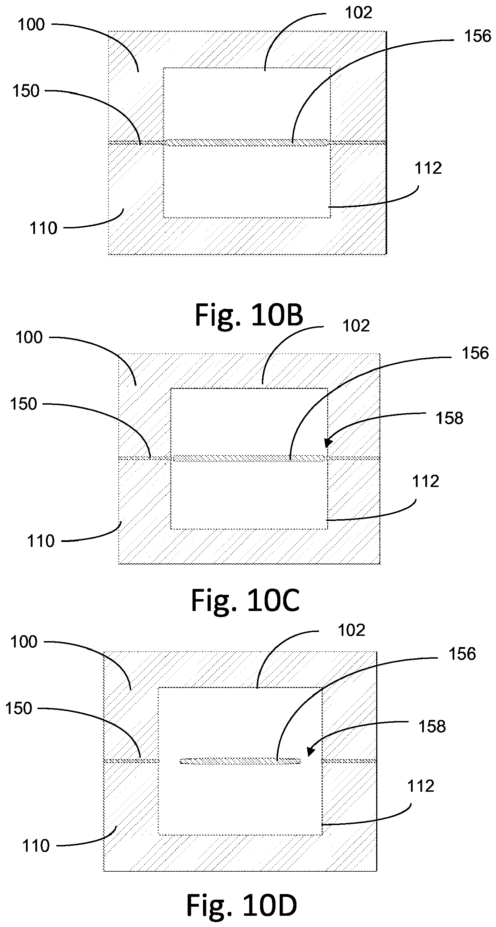

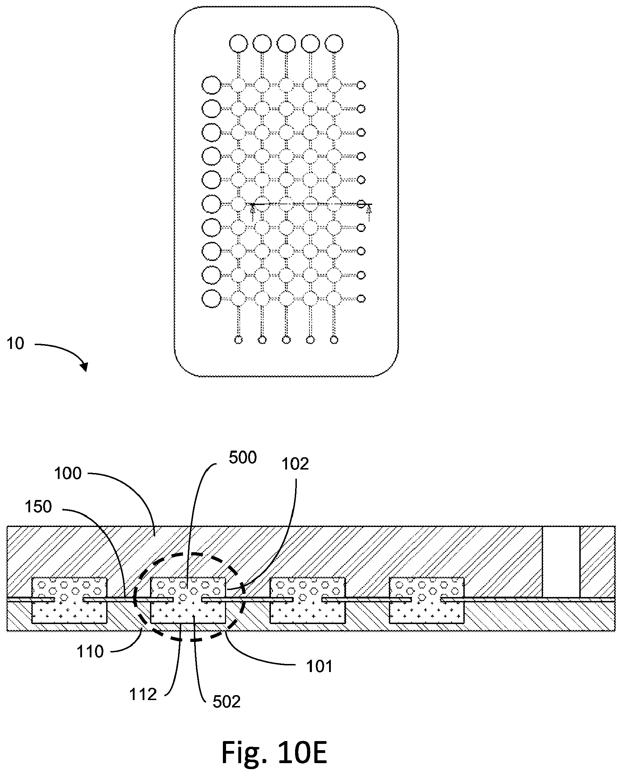

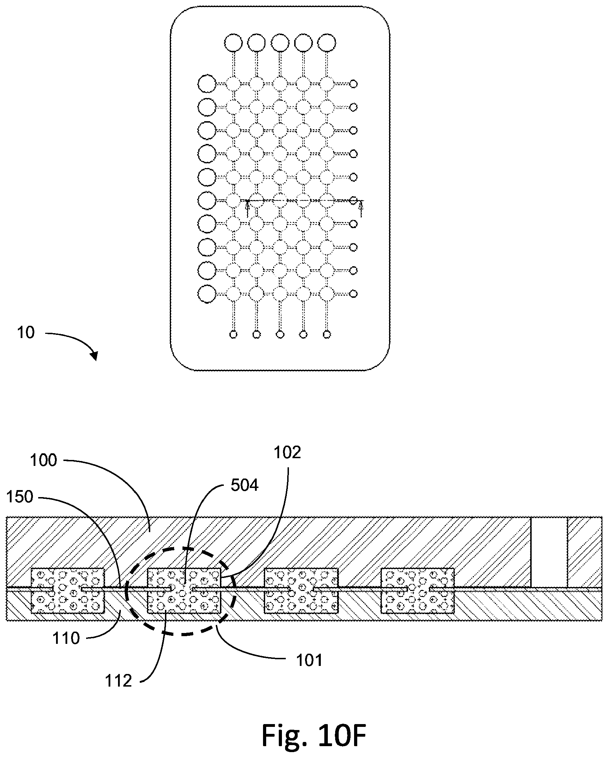

Once the cavities are sealed from one another, the separating material dividing corresponding cavities of each chamber may be appropriately manipulated so that the fluid ingredients 500, 502 within the cavities that make up a chamber are permitted to be combined. Fig. 10A shows an embodiment where openings are created in the separating material resulting in a mixture 504 of fluid ingredients of corresponding cavities of each chamber (shown by the shading of the chambers).

In some embodiments, the strength of the separating material may be substantially reduced when subject to a certain temperature range (e.g., above room temperature), for example, between about 20 C and about 100 C, or between about 50 C and about 90 C. Thus, when the device, or particular sections of the separating material, is heated to an elevated temperature, the portion of the separating material that divides each chamber may be prone to tearing (e.g., tearing upon application of a relatively small amount of stress), allowing contents within corresponding cavities of each chamber to mix.

In some embodiments, the separating material may be suitably weakened during manufacture/assembly of the microfluidic device. For example, the separating material may be pre-stressed (e.g., as would be the case with a shrink film) or thinned prior to assembly of various parts of the microfluidic device. Or, a separating material that includes a polymer (e.g., polyethylene, polyester, polypropylene) and/or paraffin wax may be appropriately stretched prior to attachment of the different layers/layers of the microfluidic device. In some embodiments, the separating material is attached to different adjacent layers while it is in its stretched state, so that the material is under stress in the assembly. Alternatively, certain features that serve to weaken the separating material (e.g., scoring/cut/perforated configurations) while retaining fluid separation between cavities may be added at particular locations (e.g., regions that divide each chamber into corresponding cavities).

In some embodiments, by virtue of different layers of the device being compressed during sealing of the channels, the separating material may be weakened at the edge of each chamber. For instance, in Fig. 10B, the intermediate layer 150 includes a separating/sealing material that serves to seal the channels between cavities and also to provide initial fluid separation between corresponding cavities of a reaction chamber. When the channels between cavities are sealed, the separating material is depicted in Fig. 10B to be relatively thinner in regions surrounding the cavities, for example, due to compression of the layers relative to one another, heating and/or any other method. That is, as portions of the separating material are compressed during sealing of the channels, the separating material may be made relatively thinner at the edges of chambers as compared to in the middle of the chamber where no compressive force is applied. Accordingly, the separating material in the center of the chamber will remain at its original thickness.

As a result, the separating material may be more prone to tearing at edges of the cavities. Thus, when the separating material is heated, dissolved, compressed and/or otherwise suitably manipulated, openings may be formed in the separating material (e.g., from tearing) at the thinner/weakened sections near the edges of chambers. Such openings allow fluid ingredients 500, 502 to combine forming a mixture 504, as further shown in Figs. 10C-10F. In some embodiments, a torn portion of the separating material 156 remains within the chamber.

In some embodiments, to facilitate tearing, as discussed above, the separating material may be stretched prior to adherence to the first and second layers. Placing the separating material under a pre-stress may allow for subsequent manipulation of the material to stretch, tear and/or deform in a controlled manner. For some materials, such as shrink film, the material may be stretched during manufacturing. For example, upon the application of heat, the material shrinks. Such shrinking may promote tearing of the material and may also serve to widen openings in the material, facilitating further fluid communication between the first and second cavity. Alternatively, if the separating material is in a stretched state while being attached to different adjacent layers, larger openings may be created than would otherwise form upon appropriate manipulation (e.g., heating, dissolving). Such stress may further promote tearing of the separating material.

When appropriate, the separating material may be pre-stretched at regions apart from certain channels of the device, or pre-stretched apart from as many channels as possible, so as to decrease the possibility of undesirable tears forming along or over channels that would break the seal between cavities. In some embodiments, the direction of stretch in the separating material can be chosen so that it does not extend substantially parallel to selected channels in order to reduce folding/creasing of the material into these channels.

As discussed previously, the separating material may be a continuous sheet or membrane. Though, the separating material may also include a number of individual components that are separate and distinct from one another. As such, individual components of the separating material may include different material compositions. For example, as discussed previously, the portion of a separating material that is located between corresponding cavities of a chamber may include a heat sensitive composition that is susceptible to deformation (e.g., tearing) upon exposure to elevated temperatures.

Alternatively, the portion of a separating material that is located between corresponding cavities of a chamber may include a resorbable composition (e.g., polyethylene glycol, PLA, PLGA, etc.) that may be dissolved, at least partially, when exposed to an appropriate environment (e.g., aqueous, solvent). For example, portions of the separating material may be soluble in certain solutions such that upon exposure to the solution, the soluble portion dissolves, leaving an opening between previously divided cavities of a reaction chamber. In some embodiments, the solution that instigates dissolving of the separating material may be the fluid ingredient(s) supplied to the cavities itself. In some embodiments, the separating material, or portions thereof, may be substantially soluble when exposed to particular fluids above a certain temperature; thus, heating of the material may increase its solubility.

It can be appreciated that a number of different types of separating materials may be used.

In some embodiments, the separating material may include an adhesive composition. While regions of the separating material that provide fluid separation between corresponding cavities of a chamber may be removed, surrounding areas of the separating material may include an adhesive (e.g., silicone adhesive) that assists in bonding layers together. Such an adhesive may also flow upon compression of the device for sealing of the channels.

In some embodiments, the separating material is embedded with a ferromagnetic or magnetic material. Accordingly, after filling and fluid isolation of the cavities, the separating material may be placed under an external magnetic field to create a stress that results in the creation of an opening in the separating material that permits fluid ingredients contained within corresponding cavities of a chamber to be combined.

In some embodiments, laser irradiation may be used to form openings in the separating material. For example, the separating material may be adapted to absorb a greater intensity of radiation at a particular wavelength range (e.g., ultraviolet, infrared, visible) than wavelengths outside of this range. In some cases, the material that defines the channels and cavities (e.g., material of a layer that has the relative space of cavities and/or channels etched in) may be substantially less absorptive of radiation at wavelengths within this range, allowing radiation to pass through the material without substantial heating or deformation. Such a characteristic allows for a majority of the radiation to be absorbed by the separating material, rather than having been attenuated by a different absorptive material. In some cases, treatment of the separating material with a dye having a high absorption ratio within a particular wavelength range may impart the material with selective absorption properties. Accordingly, when a separating material treated with a wavelength-sensitive dye is exposed to laser irradiation at a wavelength range corresponding to the relatively high absorption for the dye-treated separating material, openings may form in those portions of the separating material exposed to the laser irradiation.

In various embodiments, sealing of channels between cavities occurs before openings are created between corresponding cavities of each chamber. That is, after fluidly connected cavities defined by the same layer are appropriately filled, the cavities are fluidly isolated from one another as well as other cavities in the same layer. In some embodiments, such fluid isolation of the cavities occurs prior to combination of fluid within corresponding cavities of a chamber. This order of process may be advantageous because if openings are formed in the separating material between corresponding cavities of a chamber before neighboring cavities are fluidly isolated from one another, then fluid from those cavities may undesirably leak into surrounding cavities.

In some cases, sealing of channels to fluidly isolate neighboring cavities of the same layer (e.g., via deformation of a separating/sealing material) and creation of openings (e.g., tearing) of separating material between corresponding cavities from different layers may happen simultaneously, or fluid isolation may occur soon after combining corresponding cavities of the chamber. Though, to mitigate cross-contamination of fluid ingredients, sealing of channels between cavities of the same layer would happen before respective fluid ingredients are able to diffuse or mix undesirably into neighboring cavities.

Referring back to the example of Fig. 4, once openings are formed in the separating material of each chamber so as to allow mixing of the contents of the two corresponding cavities, fifty separate combinations of the reagents supplied to respective inlets 20, 30 are created. For a series of PCR reactions, once appropriate mixing has occurred, the device is then ready for thermal cycling. In this example, only three layers (i.e., first layer 100, second layer 110 and intermediate layer 150) are used to produce fifty combinations of reagents (any appropriate set of combinations of reagents may be made) where each chamber is also in fluid isolation from the other chambers.

With such a simple construction, a disposable microfluidic device can be easily manufactured, quickly and at low cost. In some embodiments, one or more of the layers of the microfluidic device is disposable; or one or more layers may be reusable after suitable washing to remove residual reagents/products.

The microfluidic device may include, without limitation, any appropriate number of reaction chambers and cavities corresponding to any appropriate number of reagents to be combined. For example, another format of chambers may include 12x96 (1152 reaction chambers) or 12x32 (384 reaction chambers) arrays of chambers and cavities. It should be understood that this device can be designed to include any desired number of chambers and cavities, corresponding to any desired number of DNA samples and any solution, as the present disclosure is not limited in this respect.

Each chamber and each cavity corresponding to the chamber may define any suitable volume. For example, the volume of chambers of microfluidic devices described may be less than about 10 microliters, less than about 1 microliter, less than about 500 nanoliters, less than about 200 nanoliters (e.g., about 150 nanoliters), less than about 100 nanoliters, less than about 50 nanoliters, less than about 20 nanoliters, less than about 10 nanoliters, less than 5 nanoliters, less than about 1 nanoliter, or any other appropriate volume. The volume defined by cavities corresponding to a particular chamber may also vary. Accordingly, the volume of corresponding cavities of a chamber may be about equal or may substantially differ.

In some embodiments, the microfluidic device provides for the ability to combine three or more reagents instead of two. Accordingly, the microfluidic device may be constructed into an array of chambers where each chamber includes three or more corresponding cavities. Each of the corresponding cavities may be filled, subject to fluid isolation from neighboring cavities, and the corresponding cavities which were previously separated from one another may be fluidly connected so as to allow for mixing of the contents within.

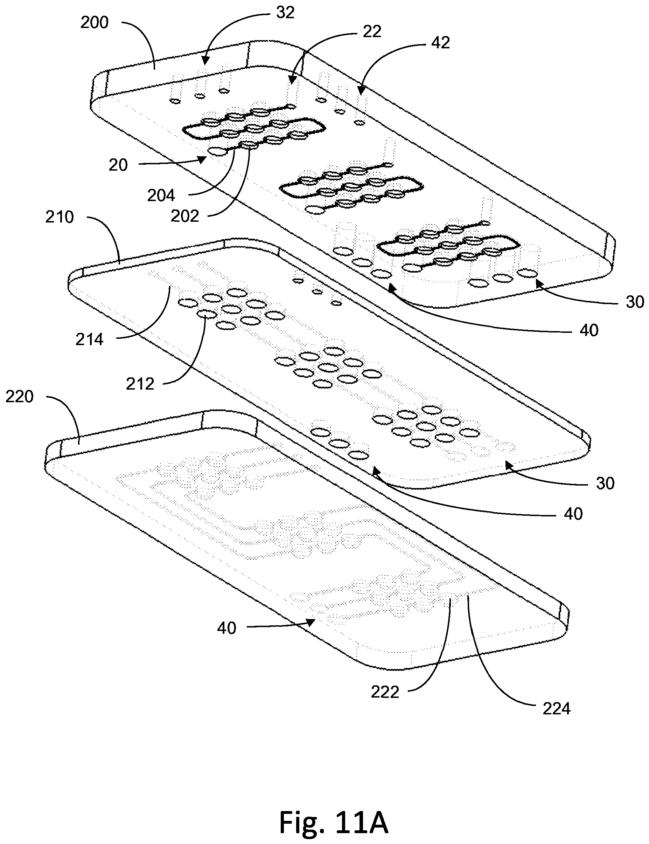

Examples of devices that are able to combine three different reagents within a reaction chamber are shown in Figs. 11A-12B. Though, it can be appreciated that microfluidic devices in accordance with the present disclosure may be configured and arranged to mix together any suitable number of distinct reagents in different combinations.

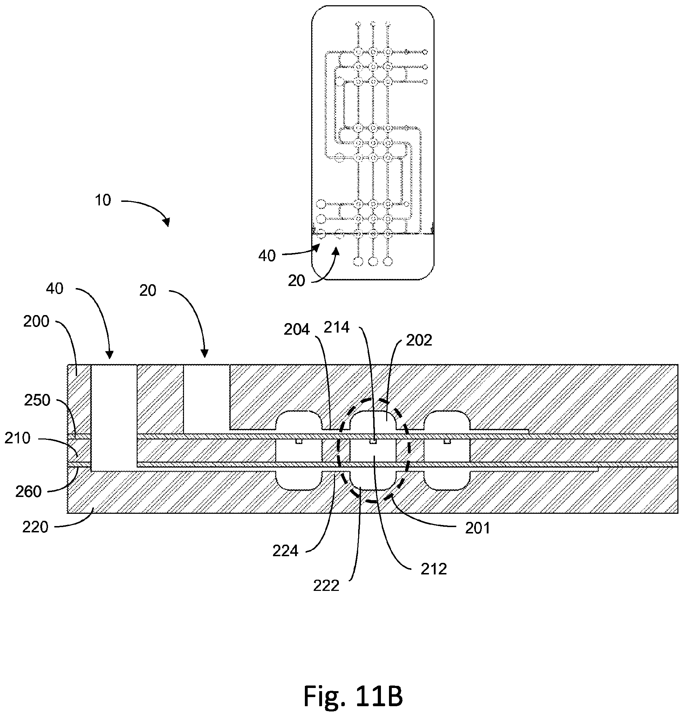

Figs. 11A-11B depict an embodiment of a microfluidic device that facilitates the combination of three different reagents in each reaction chamber. Here, the device includes a first layer 200, a second layer 210 and a third layer 220. Shown in Fig. 11B, intermediate layers 250, 260 are provided on either side of the second layer 210; the first intermediate layer 250 is positioned between first layer 200 and second layer 210, and the second intermediate layer 260 is positioned between second layer 210 and third layer 220.

In this embodiment, chambers in which reactions are contemplated to occur are formed by three corresponding cavities across three layers where each of the layers and, hence, cavities are separated by respective separating materials prior to being fluidly connected.

As shown, the first layer 200 is formed to include a number of inlets 20 for filling cavities 202 that are in fluid connection via channels 204. Each inlet with cavities 202 and channels 204 is also connected to a vent 22 to accommodate potential overflow of fluid ingredient and for exhausting excess gas.

Also, the first layer 200 and second layer 210 include inlets 30 and vents 32 for appropriate supply of cavities 212 which are in fluid communication via channels 214. The inlets 30 extend through the first layer 200 to the second layer 210 so that appropriate fluid ingredients may be added at the surface of the first layer 200 from fluid source reservoirs and flow into the cavities and channels of the second layer 210.

Further, the first layer 200, second layer 210 and third layer 220 include inlets 40 and vents 42 for appropriate supply of cavities 222 which are in fluid communication via channels 224. The inlets 40 extend through the first layer 200 through the second layer 210 and to the third layer 220 so that appropriate fluid ingredients may be added at the surface of the first layer 200 from fluid source reservoirs and flow into the cavities of the third layer 220.

The cross-sectional view of Fig. 11B shows a reaction chamber 201, indicated by the dashed circled region, having corresponding cavities 202, 212, 222 that are initially separated by layers 250, 260. In operation, fluid ingredient is provided through inlet 20 to the cavities 202 of the first layer 200. Further fluid ingredient is provided through inlet 30 to the cavities 212 of the second layer 210. Additional fluid ingredient is provided through inlet 40 to the cavities 222 of the third layer 220. Once the cavities and channels of each of the layers are appropriately supplied with respective fluid ingredients, the channels of each layer are sealed via any suitable method (e.g., methods described above involving a sealing material), resulting in fluid isolation of the cavities. Then, openings are formed in the separating material of the layers 250, 260 that initially had divided corresponding cavities 202, 212, 222. Such openings allow the contents within those cavities corresponding to the chamber 201 to mix.

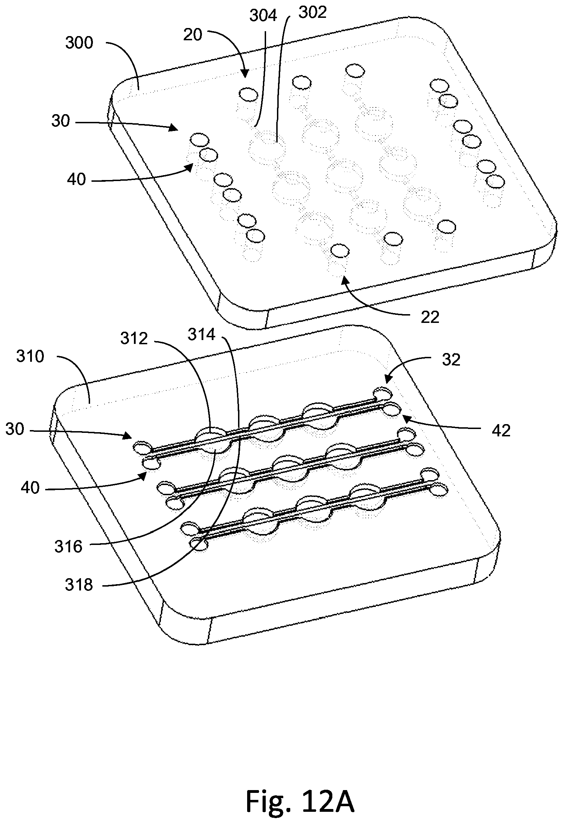

Figs. 12A-12B depict another embodiment of a microfluidic device that is able to combine three different reagents in a reaction chamber. In this embodiment, an intermediate layer 350 including a separating/sealing material is disposed between a first layer 300 and a second layer 310. Similar to the embodiment shown in Figs. 11A-11B, chambers in which reactions are contemplated to occur are formed by three corresponding cavities. However, one of the corresponding cavities of each chamber is defined by the first layer 300 and the other two cavities are defined by the second layer 310. The intermediate layer 350 is used to separate cavities corresponding to a chamber, so only one intermediate layer (having a separating/sealing material) and two layers (e.g., layers that are stiffer) disposed on either side are used for the three-cavity chambers, as opposed to the two intermediate layers and the three layers (e.g., layers that are stiffer) in an alternating arrangement, as provided in the embodiment of Figs. 11A-11B.

As shown, the cavities 302 of the first layer 300 are shown to be larger in volume than the cavities 312, 322 of the second layer 310. It can be appreciated that the shape (e.g., depth, contour, etc.) of the cavities 302, 312 and 322 may be appropriately determined so as to allow for any suitable ratio of combination of the different fluid ingredients. A number of inlets 20 are provided for filling cavities 302 via channels 304, with associated vents 22 to accommodate possible overflow of fluid ingredient and excess gas. The second layer 310 includes inlets 30 and vents 32 that are arranged to supply cavities 312, which form a fluid connection with channels 314, with fluid ingredient. The second layer 310 also includes inlets 40 and vents 42 which are arranged to supply cavities 316 via channels 318 with fluid ingredient.

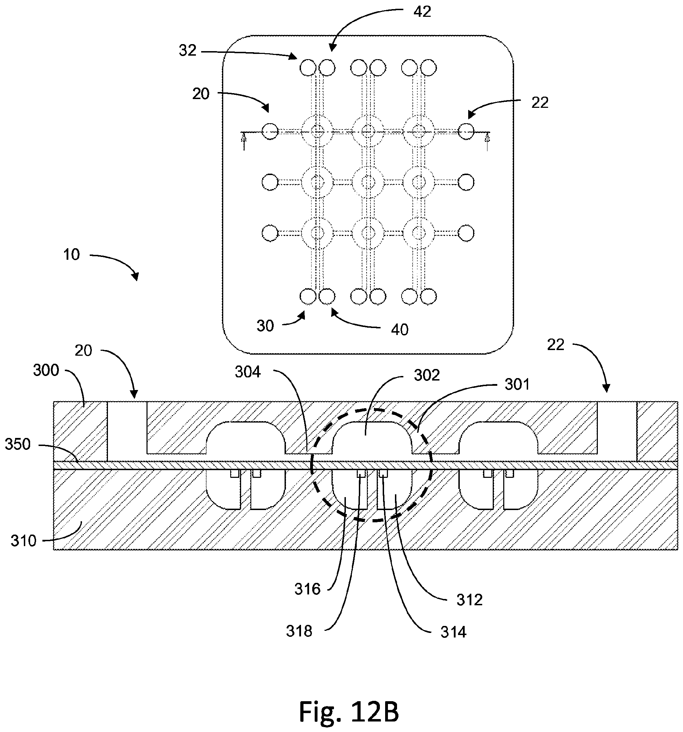

Fig. 12B shows a cross-sectional view of the device of Fig. 12A, where one of the reaction chambers 301 is indicated by the dashed circled region. The chamber has corresponding cavities 302, 312, 316 which are all initially separated by the separating material of layer 350. In use, fluid ingredient is provided through inlet 20 to the cavities 302 of the first layer 300. Further fluid ingredient is provided through inlet 30 to the cavities 312 of the second layer 310. Additional fluid ingredient is provided through inlet 40 to the cavities 316 of the second layer 310.

When the cavities and channels of each of the layers are appropriately filled with respective fluid ingredients, the channels of each layer are sealed via any suitable method, resulting in fluid isolation of the cavities. Then, openings are formed in portions of the separating material that divides corresponding cavities 302, 312, 316 from one another so as to allow contents within all three of the cavities to mix.

It can be appreciated that embodiments of the present disclosure are not meant to be limiting in their particular configuration or arrangement. Accordingly, any suitable number of groups of reagents can be combined, as the present disclosure is not limited in this regard.

In some embodiments, channels connecting adjacent cavities are routed in such a manner so as to limit the area occupied by the channels on the device. For example, channels may be arranged to incorporate multiple bends, allowing for fine control of the distance of channels and between cavities. Control over the distance between channels may assist in controlling bond quality between layers of the device, for example, by providing room for material (e.g., sealing material, fluid, etc.) to be displaced such that the displaced material does not interfere with other components/features of the device.

In some embodiments, layers defining channels that are spaced closer together may exhibit a greater bond quality between layers as compared with layers defining channels that are spaced farther apart, for example, due to potential overflow of material from the channels upon compression. That is, channels that are spaced so as to take up more sealing material (e.g., closer together) upon compression may provide for generally even bonding between layers while channels spaced further apart may take up less sealing material making the sealing material more prone to bunching, hence, decreasing overall bond quality. As discussed further below, the device may include additional space(s) (e.g., relief chambers, additional cavities) that provide room into which excess materials (e.g., fluid ingredient, sealing material, air, etc.) may enter.

In some embodiments, a number of cavities of the device are connected to a relief chamber which functions to reduce the pressure of fluid inside the cavities, particularly if and when the device is compressed.

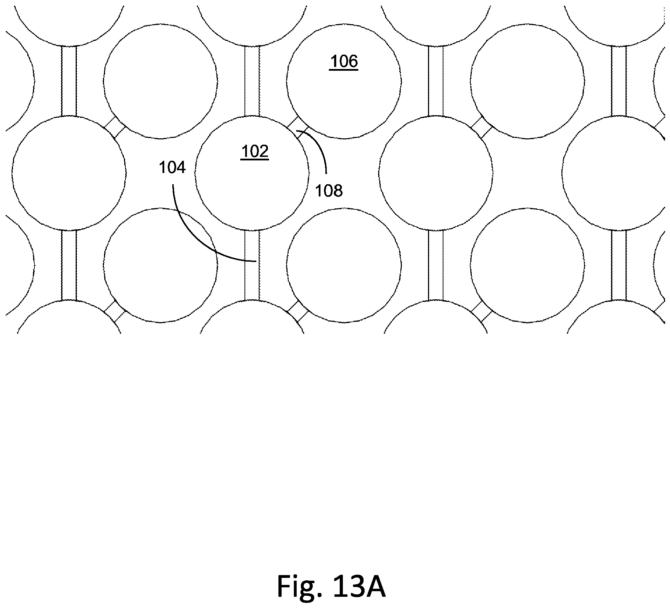

Fig. 13A depicts a number of relief chambers 106, in which reactions (e.g., PCR) are not intended to occur, each chamber 106 connected to a cavity 102 via a channel 108. Each relief chamber 106 has a compressible volume of air that remains within the relief chamber as liquid fills into the cavities. In some embodiments, the relief chamber 106 has only one channel for entry and exit of fluid, substantially preventing the compressible volume of air contained within the chamber from escaping, i.e., the relief chamber is effectively a dead end. Accordingly, the compressible volume of air within relief chambers provides a built-in mechanism that discourages filling of the relief chamber(s) with fluid ingredient while cavities 102 are initially being filled, yet also provides overflow space for the fluid ingredient from the cavities 102 upon compression of the device.

In embodiments where the layers of the device are compressed relative to one another so that channels of the device are sealed with a sealing material, the volume inside the cavities may be reduced, leaving less occupancy space for fluid within the cavities. For a cavity 102 connected to a relief chamber 106 and filled with liquid ingredient, during compression, an excess volume of liquid may overflow from the cavity 102 into the relief chamber 106. The ability for the excess volume of liquid to overflow from the cavity into the relief chamber compresses the air located within the relief chamber but also allows for the reduction of pressure and/or resistance buildup within the device to occur.

In some embodiments, the depth of the channels may affect whether a seal is properly formed within a channel that otherwise fluidly connects neighboring cavities. When the device is subject to an externally applied compressive stress, a shallow channel is more likely to result in a properly formed seal that prevents fluid flow therein as compared to a deeper channel. That is, comparatively less deformation (e.g., provided by applied compression) of the sealing material is required to create a suitable seal in a smaller space, allowing for a fine degree of channel sealing control. Accordingly, the depth of the channels may be designed so as to promote, or discourage, sealing.

In some embodiments, channels that connect cavities to other cavities may be more shallow in depth than channels that are closer to fluid source reservoirs or those that connect cavities with pressure relief chambers. Accordingly, channels that connect cavities to one another may be more easily sealed than channels that are connected to other features of the device.

In some embodiments, the channel depth may vary along the same channel. For example, a channel connecting the first cavity along a channel with a fluid source reservoir in a subset of cavities may require an especially tight seal to be formed near the cavity but such a tight seal might not be required closer to the fluid source reservoir. As a result, the region of the channel nearest to the cavity may be more shallow than the region of the channel nearest to the fluid source reservoir. Or, in some embodiments, deeper regions of a channel may remain substantially unfilled by a sealing material upon compression of the device, and shallower areas may become obstructed and filled by the sealing material upon compression of the device.

Channels which require sealing may have a sufficient amount of a sealing material located around or in otherwise close proximity to the channels so that a sufficient amount of the sealing material may be deformed into the channels during sealing actuation (e.g., compression and/or heating). Accordingly, sealing channels, such as those that fluidly connect cavities with each other, may be constructed to be longer or further away from other features (e.g., fluid source reservoirs, relief chambers) so that more sealing material is available to deform into the channels. And for channels where sealing is not preferable, such as those that connect cavities with relief chambers, the channels may be relatively short and deep so that sealing of these channels does not occur as readily.

In some embodiments, the device may be formed to include additional cavities, or pockets, at appropriate locations that are arranged to collect excess fluid and/or sealing material that may be displaced from various cavities or channels during heating and/or compression of the device. Such additional cavities are generally not intended to house a reaction, and may be connected to vents so as to remain unpressurized after steps of compression/heating of the device. The additional cavities may be located at regions of the device that would otherwise become partially or completely filled with sealing material, for example, cavities or channels at the edge of an array where overflow may be more likely to occur.

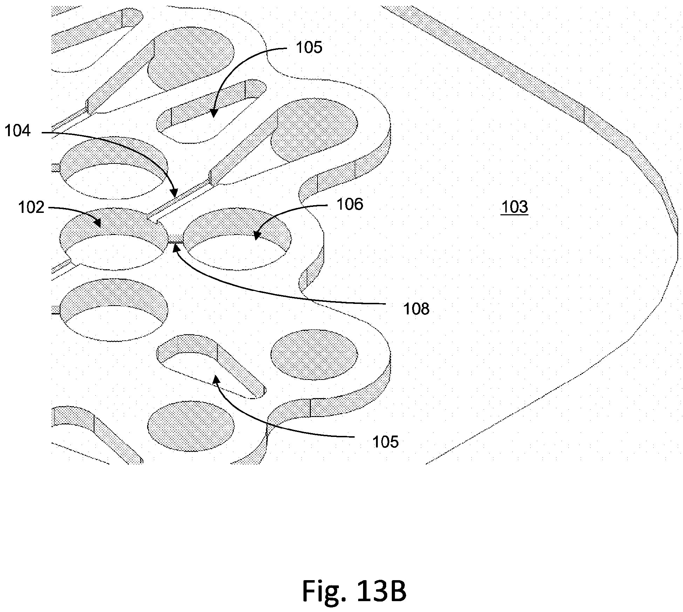

Fig. 13B shows additional cavities 103, 105 of the device that may be suitable for collecting excess sealing material. For example, the additional cavity 103 may collect excess sealing material that overflows resulting from compression of the region between an edge of the device and the cavity. The additional cavities 105 located between fluid input reservoirs may be suitable to collect excess sealing material resulting from compression of the region between a cavity and the fluid input reservoirs, or vents.

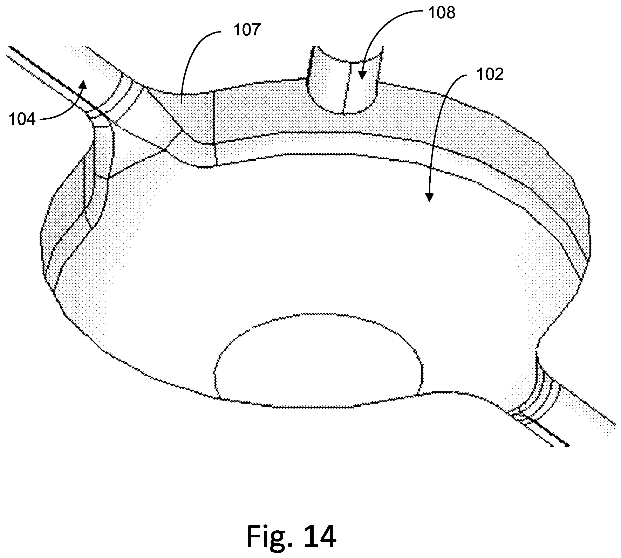

In some embodiments, interfaces of the device may provide for a smooth fluid flow transition between channels and cavities. For instance, Fig. 14 shows gradual interface 107 between channels and cavities that are rounded which allows fluid to flow evenly between channels and cavities. Otherwise, sharp corners between channels and cavities may result in an overall increase in fluid flow resistance within the device, for example, due to capillary resistance from liquid surface tension, or turbulent fluid flow.

In some cases, smooth interfaces between channels and cavities may reduce the overall pressure required for fluid to fill the cavities. What is more, smooth interfaces between channels and cavities may allow for channels to be more easily filled with sealing material than would otherwise arise from a sharper interface.

In some embodiments, the device may include one or more protrusions, such as ribs, inserts, bumps, ridges, etc., that effectively reduce the amount of compressive force that would otherwise be required to seal the appropriate channels. Such protrusions may, for example, be disposed in alignment with the channels so that, upon application of compressive force, compressive stresses are concentrated at channel regions so as to better facilitate sealing of the channels.

This stress concentration may promote deformation of the sealing material at the appropriate region(s) resulting in the sealing material being forced into the channels. That is, the protrusions may reduce the overall compressive force required for the cavities to be sealed. During compression, this arrangement may also result in a smaller amount of compressive stresses in regions other than channels that would otherwise be present, such as over cavity regions. Accordingly, by mitigating compressive stress concentrations in regions such as over cavity regions, the overall amount of fluid overflow/displacement to other areas of the device due to compression is reduced.

In some embodiments, such protrusions may be integral with the sealing material or in contact with the sealing material. Alternatively, the protrusions may be part of one or more layers of the device. Or, the protrusions may be part of an external device/component that may be used to compress layers of the device together. For example, the protrusions may be included as part of a thermocycler assembly, or a separate layer altogether that is used primarily for deforming the sealing material.

As discussed above, once channels of the microfluidic device are sealed such that cavities are isolated and the contents of corresponding cavities of each chamber are allowed to mix, a reaction process may be initiated. In some cases, once reagents are combined, the reaction immediately takes place. In other cases, a thermal cycling sequence occurs to initiate various parts of the reaction, such as in the case of PCR.

Once the desired reactions are completed, the results are collected. One preferred method of collecting the results is through optical techniques. Optical collection may be performed using any suitable method, such as through absorbance, fluorescence and/or luminescence of the contents of the reaction chambers. Or, each chamber may be imaged via microscopy and an operator may manually observe specific features that result from the reactions within the chambers.

In the context of PCR, once the reagents are combined, the microfluidic device would be subject to thermal cycling. In some cases, when appropriate, the thermal cycler may be the same device that provides heat and/or compressive pressure to the device for sealing the channels and deforming (e.g., tearing) the separating/sealing material(s).

Accordingly, a user could fill the device with the appropriate reagents, the steps of cavity isolation and combining fluid ingredients together that were initially separated may be performed (manually or automatically), and the device with combined reagents may be subject to thermal cycling (immediately or after a certain period of time).

In some embodiments, the thermal cycler would provide clamping of the layers of the microfluidic device together so as to result in good thermal contact and, hence, reliably quick, responsive temperature adjustments. Such clamping may also provide for a suitable amount of externally applied compression, for example, to seal off the channels between cavities.

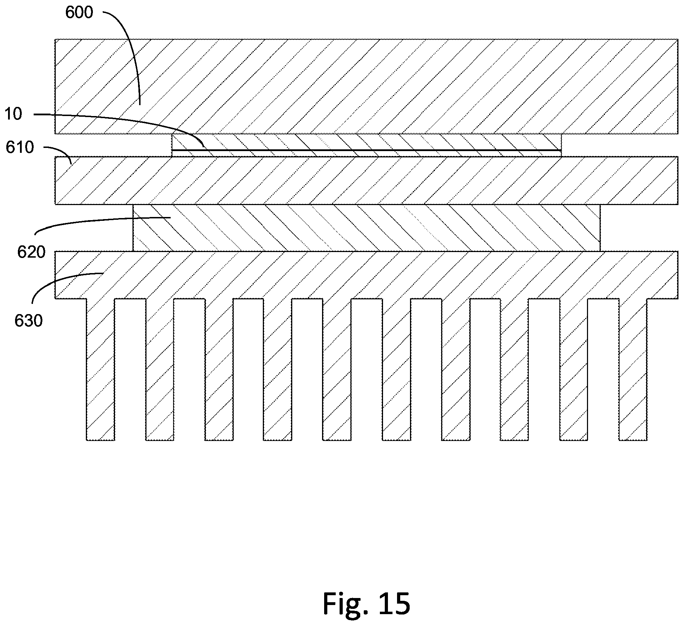

The embodiment illustrated in Fig. 15 depicts a microfluidic device 10 placed between clamping plates 600, 610 of a thermal cycler. Below plate 610, is a thermoelectric element 620 and a heat sink 630, providing temperature control to the system.

In some embodiments, to seal the channels, the thermal cycler provides for compressive force applied by clamping plates 600, 610 and/or an increase in temperature of the device 10, or portions of the device. Though, in some embodiments, at this stage, the temperature would not be high enough to cause tearing of the separating material. Once the channels are sealed, the thermal cycler may increase the temperature further to cause the formation of openings in the separating material. Once openings are formed in the separating material, reagents contained within the corresponding cavities of each chamber are combined. Once the reagents are suitably combined, the device is subject to thermal cycling appropriate for PCR to proceed.

In some cases, thermal cycling is preceded by a period of time (e.g., between 1 and 15 minutes) of high temperature exposure so as to activate the PCR enzyme. The reagents may then be cycled between two or more temperature ranges appropriate for PCR. Typically the amount of target DNA is doubled at the conclusion of each cycle.

PCR detection may be implemented in a number of ways. For instance, in end point PCR, the device undergoes a number of thermal cycles, and after thermal cycling is complete, the fluorescence of each reaction chamber is measured. In real time PCR, the fluorescence of each chamber is measured periodically during or after cycles, allowing for the amount of DNA in each chamber to be quantified in real time.

For end point PCR detection, the optical detection assembly can be completely separate from the thermal cycling assembly. Thus, the device can be moved from the thermal cycler to the optical detection assembly after thermal cycling is complete.

For real time PCR detection, an optical detection assembly may be combined with the thermal cycling assembly allowing for the device to be analyzed without having to be removed from the thermal cycler. In some embodiments, the clamping plate of the thermal cycler may be translucent to allow for reactions to be optically measured without having to remove the clamp.

In some embodiments, microfluidic devices described herein may be used for digital PCR where the amount of DNA in a sample is quantified. As discussed above, in digital PCR, a DNA sample is divided into a large number of separate aliquots. Once the sample volume is divided into the several aliquots, it is amplified through PCR, and the amount of DNA from the original sample can then be calculated by counting the number of aliquots that have undergone exponential growth through PCR. The analysis for digital PCR is a binary process where an aliquot either undergoes PCR because at least one molecule of target DNA was present within the aliquot, or the aliquot does not undergo PCR because no target DNA was present within the aliquot. Thus, the original concentration of DNA (e.g., prior to dilution) may be determined based on a calculated distribution (e.g., Poisson distribution) of positive and negative aliquots.

For digital PCR, the samples share the same master mix and primer solutions, as the goal for digital PCR is to use a large array of aliquots into which sample volumes of DNA are provided, to determine how many molecules of DNA were present in an original sample. Accordingly, it is not necessary to combine different primer solutions with each sample, as would often be the case in non-digital PCR.

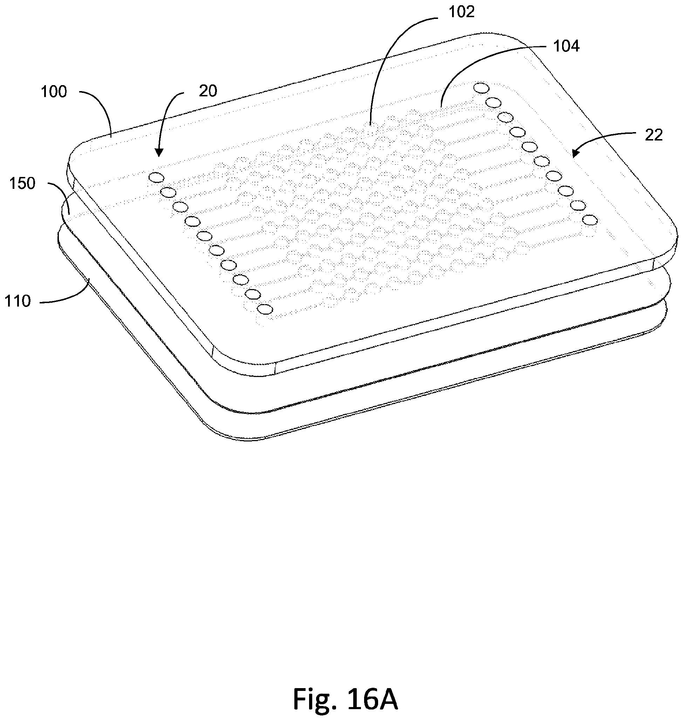

In an embodiment of a microfluidic device that may be used for digital PCR, shown in Figs. 16A-16C, the microfluidic device 10 includes a first layer 100, a second layer 110 and an intermediate layer 150 sandwiched between the layers. The first layer 100 includes an array of cavities 102, channels 104, inlets 20 and vents 22. In this embodiment, each reaction chamber includes a single cavity, as the second layer 110 is a material without any channels or cavities defined therein. While not meant to be limiting, the first and/or second layer(s) may include a material that is stiffer (e.g., relatively rigid in comparison) than the material of the intermediate layer. Alternatively, in some embodiments, the material of the intermediate layer is stiffer than the material making up the first and/or second layers. The intermediate layer 150 includes a sealing material that is adjacent to each of the channels 104 of the first layer 100.

While not required, the cavities 102 and channels 104 are further divided into subsets that are each fluidly connected to a respective inlet 20. Accordingly, the same fluid ingredient or different fluid ingredients may be supplied to each inlet and the cavities associated with each inlet. In some embodiments, a microfluidic device suitable for digital PCR may include single inlet that supplies a fluid ingredient to all cavities of the device through an appropriate network of channels interconnected with one another and with the cavities.

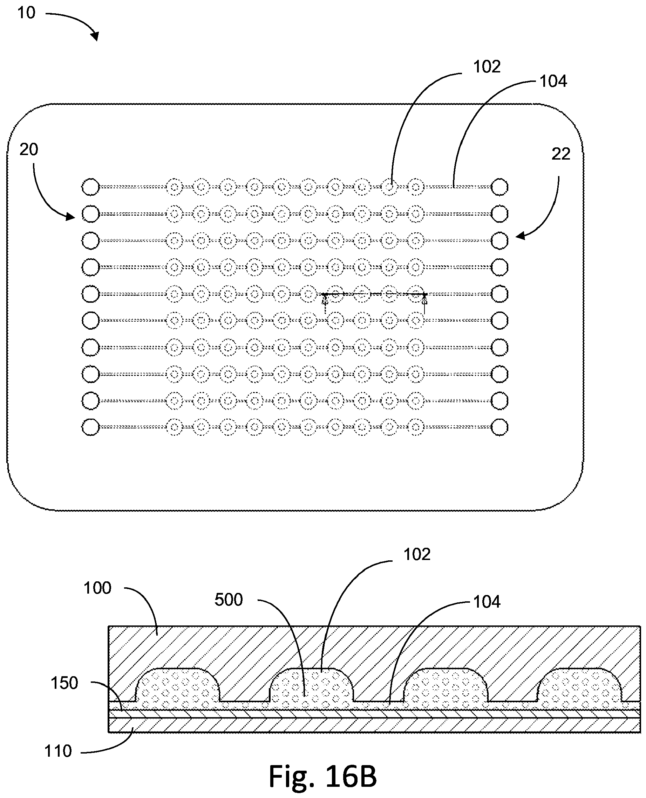

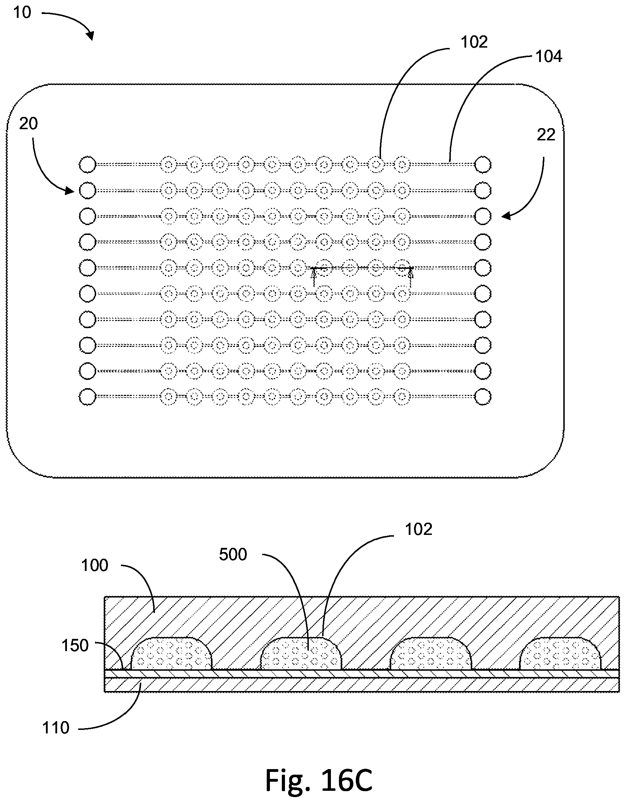

The sealing material is arranged to deform into the channels upon appropriate actuation (e.g., compression, heating, etc.) according to any suitable manner so as to provide fluid isolation between the cavities 102. As shown in Fig. 16B, prior to appropriate actuation of the device, the channels 104 permit fluid flow between cavities 102. Though, after actuation, the channels 104 are sealed causing the cavities 102 to be fluidly isolated, as shown in Fig. 16C. One of skill in the art would appreciate that any suitable method may be used to cause fluid isolation of the cavities, for example, methods described and illustrated with respect to Figs. 9B-9D, or other techniques not explicitly shown.

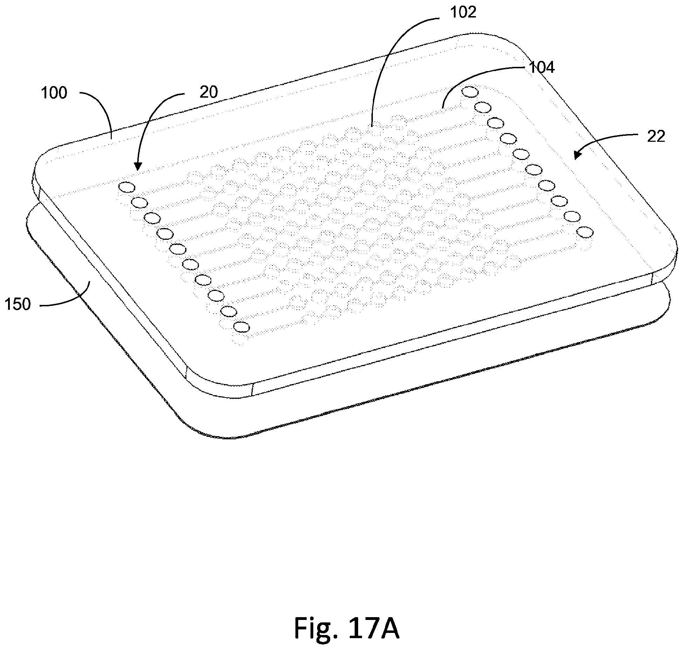

Another embodiment of a microfluidic device that may be used for digital PCR is shown in Figs. 17A-17C. The microfluidic device includes a first layer 100 and a second layer 110. The first layer 100 includes an array of cavities 102, channels 104, inlets 20 and vents 22. The second layer 110 in this embodiment is similar to the intermediate layer 150 shown in Figs. 16A-16C in that the second layer includes a sealing material that surrounds each of the channels 104 of the first layer 100.

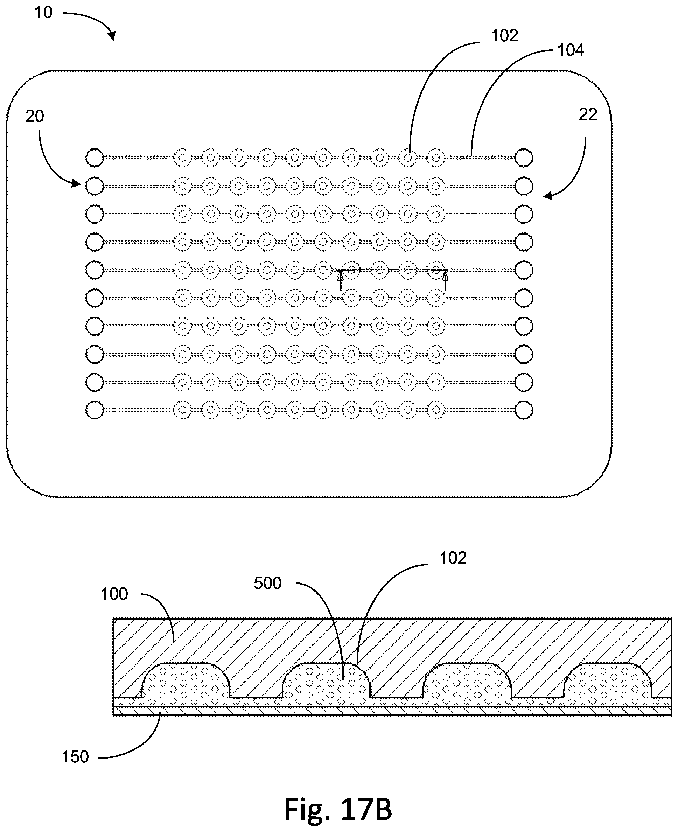

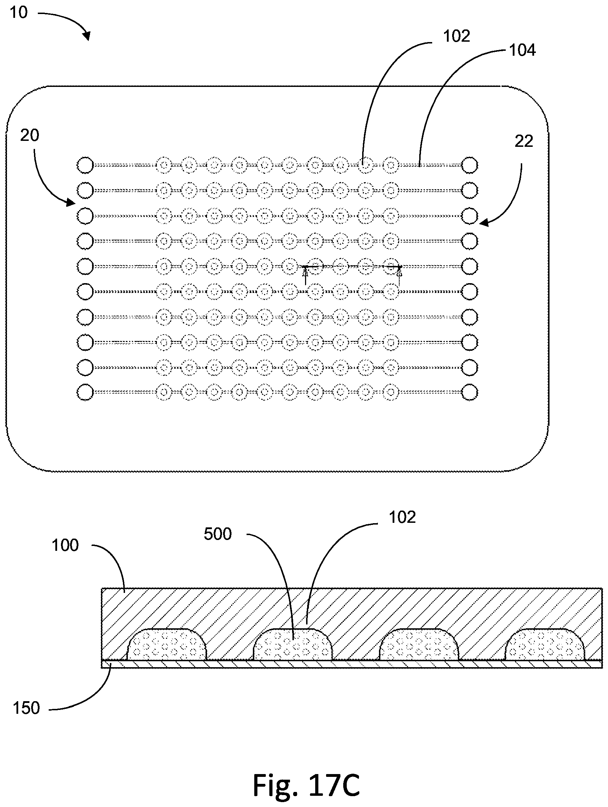

As shown in Fig. 17B, prior to actuation (e.g., compression and/or heating) of the device, the channels 104 permit fluid flow between cavities 102. Though, after actuation, the channels 104 are sealed causing the cavities 102 to be fluidly isolated, as shown in Fig. 17C.

In some embodiments, the sealing material of the second layer 150 may include an adhesive material disposed on a substrate (e.g., plastic backing). Alternatively, this layer may be disposed on the first layer 100, or may be composed of a continuous membrane.

It can be appreciated that for embodiments in accordance with the present disclosure, the sealing material is not required to be a continuous monolithic layer, nor is it necessary for it to be of the same external dimensions as the first layer in which the cavities are defined. It can be appreciated that the layer(s) of the device, including the sealing material, are not required to have dimensions where the layer(s) come(s) into alignment. Nor is it required that the layer defining the cavities be above or below the sealing material.

Thus, in this embodiment, after the cavities are filled with a suitable DNA sample solution, the layer 150 is subject to heating and/or compression. It can be appreciated that the sealing material is not required to be a continuous layer, as the sealing material may include a number of separate components.

As discussed above, microfluidic devices described herein may include, or may otherwise engage with another device/component with, protrusions that enhance the effects of compression at selected locations. Protrusions may be structural projections that extend/jut outwardly from a layer. In some embodiments, protrusions may have at least one dimension that extends along the plane parallel to the layer that is less than the respective dimension of the cavities of the device. For example, the ratio of the width w_{c} of a cavity to the width wₚ of a protrusion may be between 1 and 8, between 1.5 and 5, or between 2 and 4.

In some embodiments, protrusions may be provided in alignment with particular channel regions so that when the overall device is compressed, the protrusions provide a greater amount of stress to the channel regions as compared with other regions that are not aligned with the protrusions. While the inclusion of protrusions in certain regions may provide for a greater degree of compressive stress to those regions (e.g., regions of channels to be sealed off), the absence of protrusions in other regions may result in an effective reduction of compressive stress that would otherwise occur over regions where reactions are intended to occur (e.g., cavities, chambers). Mitigating the compressive stress at regions where reactions are intended to occur may be beneficial to reduce the overall amount of fluid displaced by compression, and further reduces the overall pressure acting on the sealed regions.

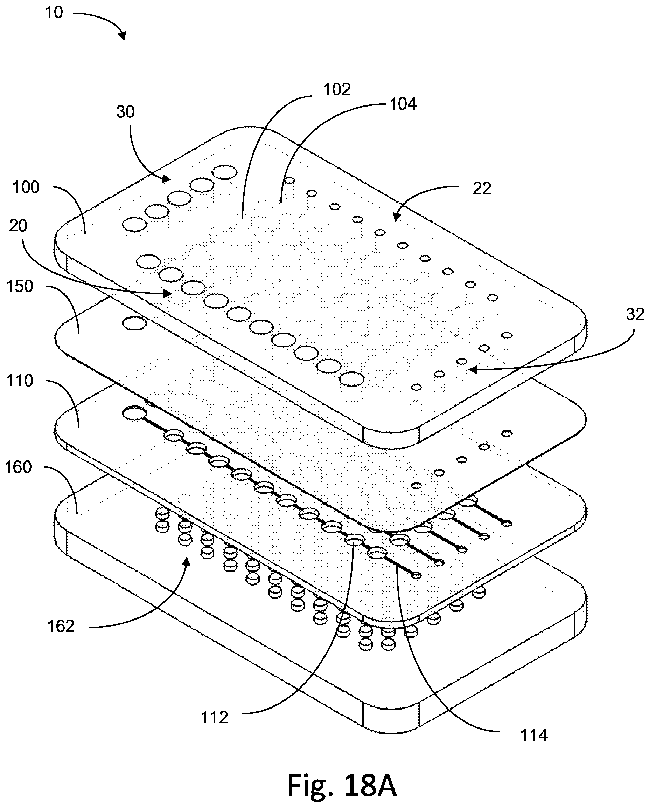

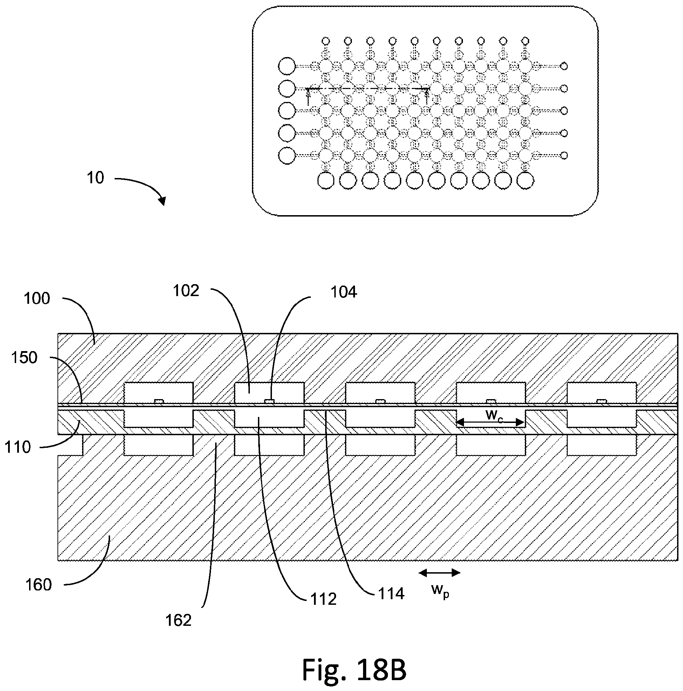

Figs. 18A-18B depict an embodiment of a microfluidic device 10 similar to that shown in Figs. 1-4, yet includes an additional layer 160 that has protrusions 162 that provide for enhanced compression at certain channel regions of the device. As shown in Fig. 18B, the protrusions 162 are aligned with channels 114 of the second layer 110 and channels 104 of the first layer 100, such that upon compression of the layers of the device 10 together, hence pressing of the protrusions toward the channels 104, 114, the channels are subject to a greater degree of compressive stress than, for example, the cavities 102, 112. Accordingly, the protrusions allow the channels 104, 114 to be more easily sealed, i.e., less externally applied compressive force is necessary for the channels 104, 114 to be sealed off than would otherwise be required if the aligned protrusions were not present. In addition, the width wₚ of the protrusions is shown to be less than the width w_{c} of the cavities.

Such protrusions (e.g., ribs, bumps, ridges, patterned projections, etc.) for enhancing compressive stresses may be patterned in any suitable manner. As discussed above, the protrusions may be part of the microfluidic device itself, a separate thermal cycling apparatus, and/or may be a separate layer/component that is used primarily for compression. Alternatively, appropriate protrusions may be formed on the surface of any of the layers of the device (e.g., on a separating/sealing material, on appropriate regions of a layer defining cavities and/or channels, etc.).

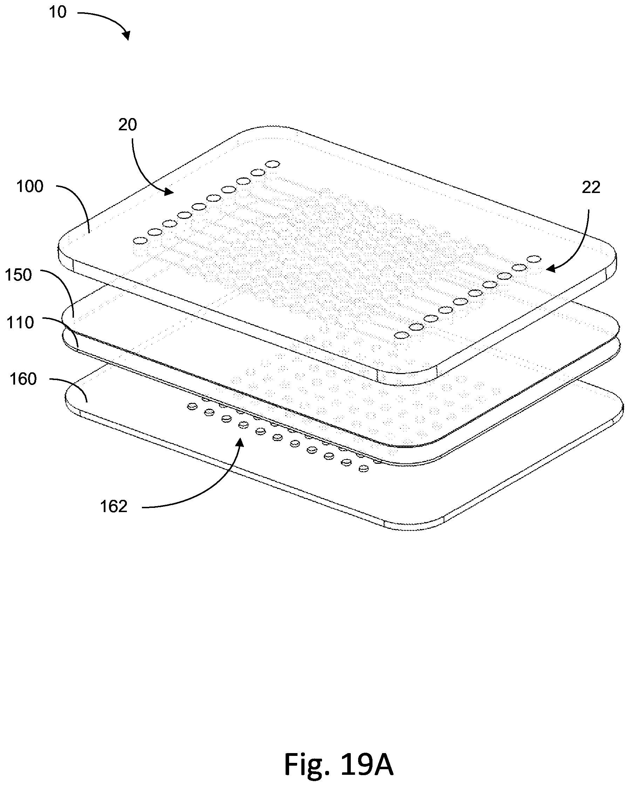

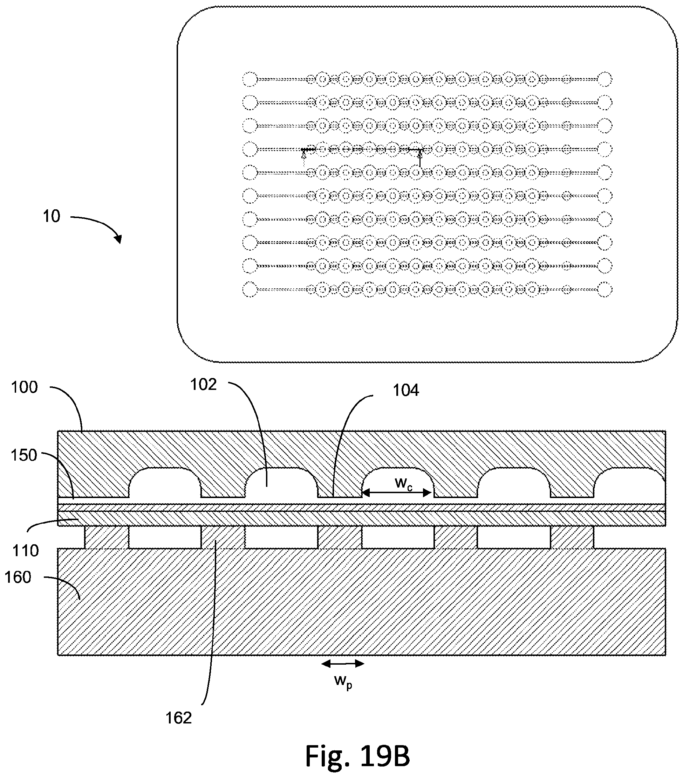

Figs. 19A-19B show an embodiment of a microfluidic device 10 similar to that illustrated in Figs. 16A-16C, yet includes an additional layer 160 that has protrusions 162 that provide for enhanced compression at channel regions of the device.

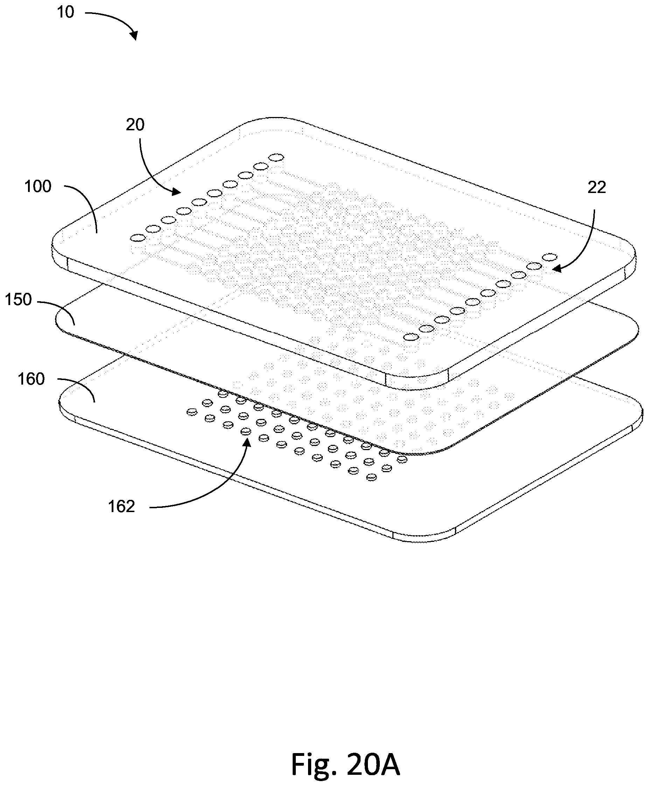

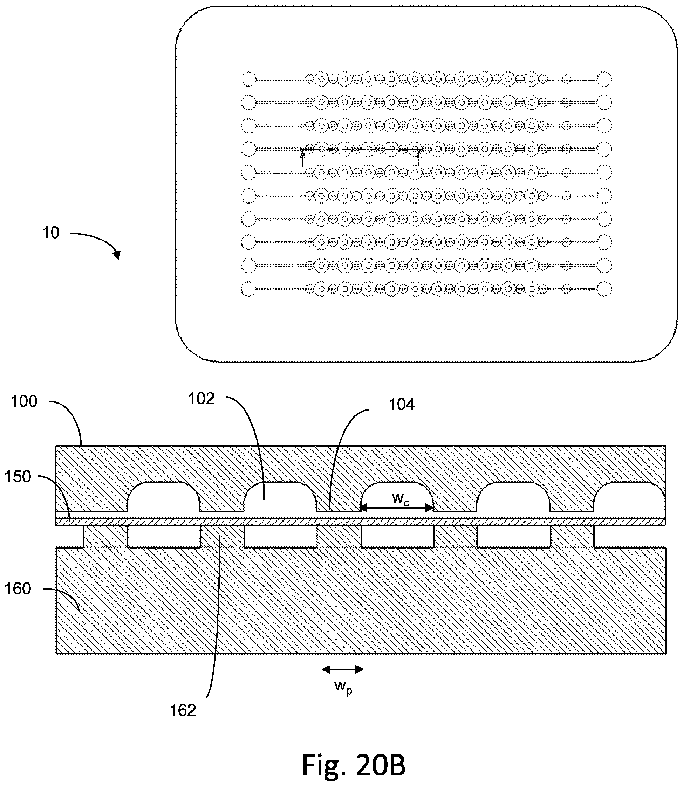

Figs. 20A-20B depict an embodiment of a microfluidic device 10 similar to that illustrated in Figs. 17A-17C, though, the additional layer 160 having protrusions 162 that provide for enhanced compression is also included. Here, during compression, the protrusions 162 are placed in direct contact with the sealing material of the layer 150.

In some embodiments, a sealing material may be selectively compressed so as to create a number of reaction cavities. For example, channels defined by a layer may be filled with a fluid ingredient and a sealing material may be actuated in a manner that results in partitioning of the channel into reaction cavities that are fluidly isolated from one another.

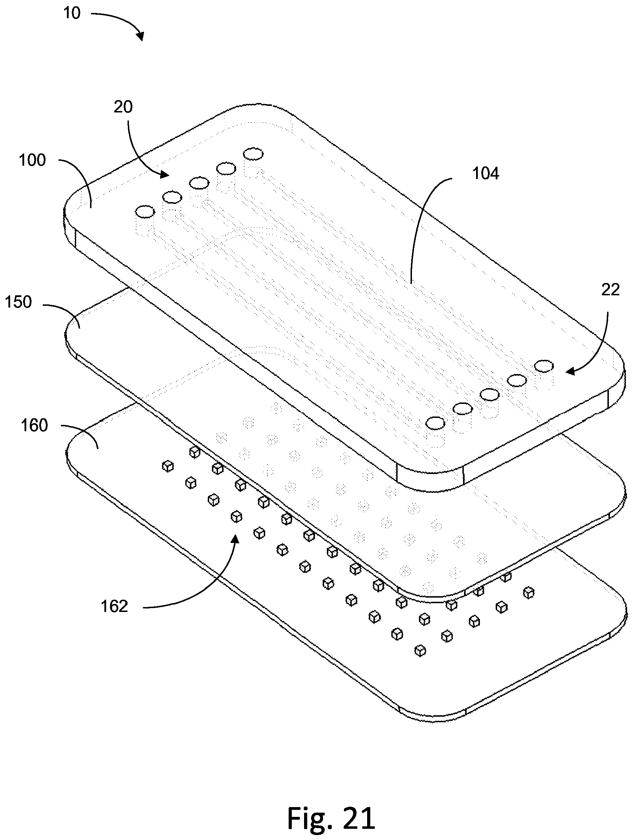

In an embodiment shown in Fig. 21, reaction cavities may be formed by deforming the sealing material of layer 150 into the channels 104 defined by first layer 100 at intervals along the channel; actuated by compression, heat or a combination of heat and compression of the device. The additional layer 160, which may, for example, be a part of the device, part of an external compression system, or part of a thermal cycling device on which the microfluidic device is heated, contains an array of protrusions 162 which partition the channels into suitable lengths, creating cavities corresponding to the desired volume(s) of fluid ingredient. In some embodiments, such protrusions 162 may be adapted to jut into the channel with the sealing material. Or, the protrusions may remain outside the space initially defined by the channel while suitably deforming the sealing material into the channel(s). Alternatively, such protrusions may be formed on the sealing material 150, or the first layer 100.

As discussed further above, the sealing material may include any suitable composition. In some embodiments, the sealing material may be an adhesive, e.g., a hot melt adhesive, acrylic adhesive, or other appropriate adhesive material, positioned on a plastic backing. Alternatively, the sealing material may be a wax, elastomer, or other relatively deformable material.

Such a sealing material may be provided as a standard adhesive tape (e.g., packing tape), allowing for relatively simple device assembly. Accordingly, for some embodiments, a molded first layer may define a number of channels (with optional cavities), input wells, and vent holes. A piece of tape may be attached to the molded layer, covering the channels (and optional cavities) and the device would essentially be ready for use.

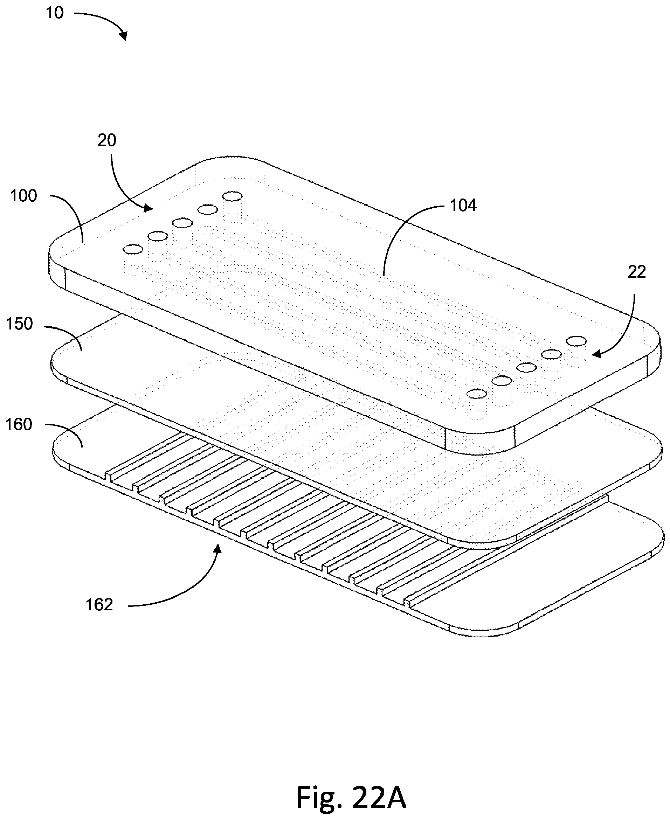

The embodiment of the micro fluidic device 10 shown in Figs. 22A-22C is similar to that of Fig. 21 except that the additional layer 160 includes protrusions 162 which are formed as elongated ridges . The elongated ridges are provided to control selective compression of the sealing material and are arranged to extend substantially perpendicular to the channels 104. Accordingly, when the device is subject to compression, the ridges act to concentrate the compressive force in a manner that causes deformation of the sealing material into the channels so as to define an array of reaction cavities in fluid isolation from one another, as well as any fluid source reservoir(s).

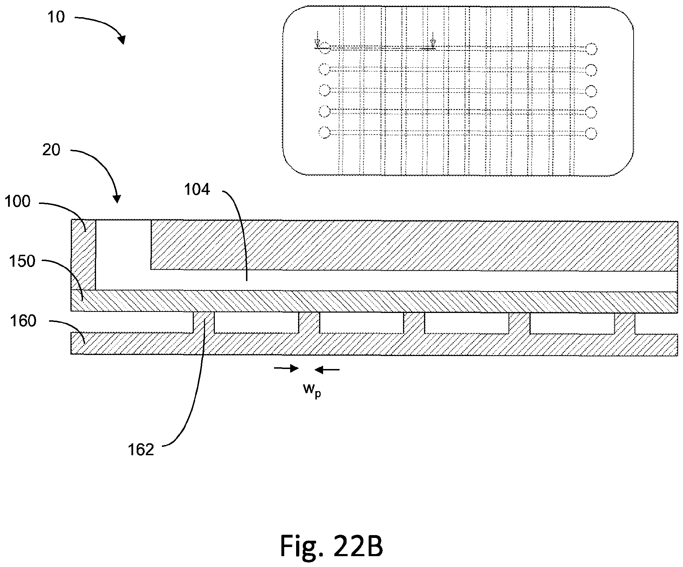

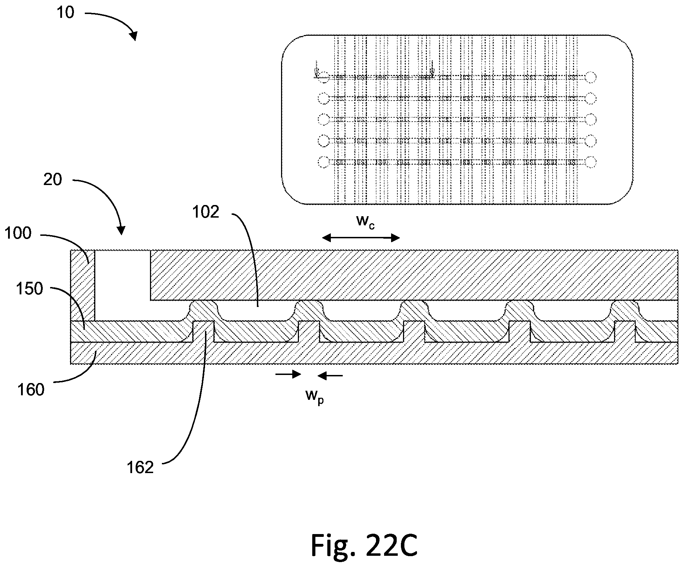

Fig. 22B shows the device prior to compression where fluid is permitted to flow throughout the channel 104 and cavities are not yet formed. That is, in such an embodiment, pre-formed cavities, prior to compression of the sealing material, are absent. Upon compression, the protrusions 162 are pressed into the sealing material of layer 150 resulting in partitioning of the channel into cavities 102, shown in Fig. 22C. The resulting cavities 102 are in fluid isolation, providing for individual reactions (e.g., PCR) to occur in each. As shown, while not required, the width wₚ of the protrusions is less than the width w_{c} of the resulting cavities.

The resulting cavities in which reactions are able to occur separate from other cavities may define any suitable length corresponding to any desired volume of fluid ingredient. As a result, the use of protrusions to form separate cavities in which reactions may occur is advantageous in allowing for simple manufacturing and assembly of a microfluidic device 10 that does not require substantial effort in aligning various components/layers of the device.

Accordingly, a suitable sealing material may be deformed into the space of the channels through which fluid would otherwise be able to flow and may further result in appropriate partitioning of the channel into cavities within which separate reactions are able to occur. This deformation may be plastic, hence, permanent in nature. Thus, absent disassembly of the microfluidic device to remove the sealing material from the channels, such channel sealing is irreversible.

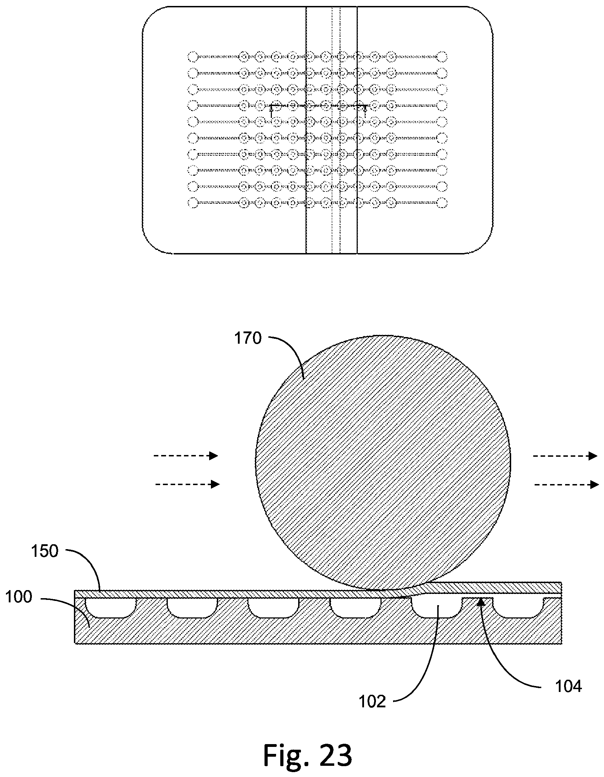

It can be appreciated that various aspects of sealing described herein are applicable for different applications, such as digital and non-digital PCR, and/or partitioning of channels into separate cavities. As shown in Fig. 23, the microfluidic device may also be compressed through the use of a roller. For example, a roller 170 may be provided so as to travel along the length of the channel(s) 104 (e.g., shown by the direction indicated by the dashed arrows) resulting in serial deformation of the sealing material and sealing of the channels 104 and cavities 102 connected by the channels. This method may be advantageous in that the roller would effectively function to progressively displace fluid from each cavity or channel being compressed into the next uncompressed cavity or out through the vent.

As illustrated in Fig. 23, as the roller 170 moves along and compresses the channel 104, excess material (e.g., fluid ingredient, air) that flows from the channel 104 and cavities 102 is displaced to neighboring cavities and channels until the excess material is vented or contained in an appropriate additional cavity and/or relief chamber. This sequential displacement would reduce the overall pressure that would otherwise arise in the cavities and channels due to the compression of the fluid ingredient, and would therefore result in stronger sealing of the channels.

Devices of the present disclosure may be useful for digital PCR and/or non-digital PCR. While devices illustrated by the figures are depicted to have relatively few cavities/aliquots, it can be appreciated that any appropriate number of cavities/aliquots may be implemented. For example, devices used for digital PCR may form 100-10,000 aliquots per sample input. In general, the greater the number of partitions for a digital PCR application, the larger the dynamic range and, hence, the better statistical precision of quantification of the sample.

The microfluidic device may provide any suitable volume for each cavity/aliquot. In some embodiments, a suitable range of volume per partition (e.g., forming reaction cavities) may be between 10 picoliters and 300 nanoliters, between 500 picoliters and 200 nanoliters, or between 1 nanoliter and 100 nanoliters. With the ability to produce a large number of aliquots, the volume of each individual aliquot can be lowered so as to reduce the amount of reagents needed and, hence, the overall cost.

Digital PCR presents several advantages over quantitative PCR. Since the reaction does not need to be imaged throughout the amplification process, but is only imaged after cycling is complete, it is not necessary to provide a system that combines the use of a thermal cycling device together with a fluorescent imaging device. Also, digital PCR can provide results that are more accurate than quantitative PCR, since it is not sensitive to minute changes that may affect the overall efficiency of the PCR reaction.

The present disclosure relates to microfluidic devices that provide for the separation of a single fluid ingredient into many fluidly isolated partitions, inexpensively and efficiently. For instance, in a laboratory setting, a user needing to perform the same experiment many times with the same solution (e.g., digital PCR nucleic acid amplification and detection) may easily implement embodiments of microfluidic devices discussed herein to achieve this goal.

In accordance with various embodiments, a microfluidic device is provided for separating a single fluid ingredient into many fluidly isolated partitions. One or more groups of cavities may be defined by a first surface (e.g., lower/bottom side) of a first layer, connected by one or more channels also defined, at least in part, by the first surface. The channels may further be connected to a vent well and an input well. A second layer (e.g., sealing material) may be provided, disposed adjacent to the first surface of the first layer, providing a boundary for the otherwise open-face channels and cavities. Compression of the second layer into the first layer may result in irreversible deformation of the second layer into the channels, thereby permanently occluding the plurality of cavities from further fluid entry or exit.

According to some embodiments of the present disclosure, a plurality of cavities may be connected by a plurality of channels supplied by a single fluid input and connected to a single fluid outlet. In some embodiments, the plurality of channels may be oriented in parallel.

According to some embodiments of the present disclosure, the device may be further comprised of a second surface (e.g., upper/top side) on the first layer, which may comprise a back side to the device. In some embodiments, the back side may contain input and vent wells, said wells being connected to the channels and cavities defined by the first surface on the other side of the first layer by through holes passing through the first layer.

According to some embodiments, the second layer may be deformed into the channels connecting adjacent cavities. In some embodiments, this deformation is permanent and irreversible without substantial destruction of the assembly. This deformation may be performed sequentially along the length of the channel (e.g., in the direction of fluid flow into the channel) connecting adjacent cavities. Sequentially sealing and isolating each cavity may allow excess air and fluid to be directed towards the fluid outlet, preventing excess pressure to build up from within the cavity which may undesirably cause blocked channels connecting the cavity to adjacent cavities to be unblocked. In some embodiments, this deformation may be performed with a roller arranged so as to sequentially apply pressure to the second layer along the length of the channel connecting the plurality of cavities such that the cavities are fluidly isolated in a serial manner one after another.

According to yet other embodiments, a method of partitioning a fluid sample into a plurality of fluidly isolated cavities is provided. The method includes the step of providing an assembly containing a plurality of cavities connected by at least one channel defined by a first surface of a first layer and containing a second layer disposed adjacent to the first surface of the first layer.

The method may, according to some embodiments, further comprise the steps of filling the plurality of cavities and partitioning them. In some embodiments, the providing step may comprise depositing a fluid sample into an input well. Preferably, the input well may be arranged at one end of the channel connecting the plurality of cavities, and the other end of the channel may be terminated by a vent well. The filling step may further comprise the use of a hand pipette or automated liquid handling device.

The partitioning step may further comprise providing a second layer adjacent to the first surface. In a preferred embodiment, the second layer comprises an adhesive. The second layer may be irreversibly deformed into the channels connecting the plurality of cavities so as to permanently occlude them from further fluid entry.

The filling step may further comprise sealing the device from further fluid entry with a layer sealing the input and vent wells. The input and vent wells may be sealed using a plate seal or other suitable adhesive. Sealing the device may also prevent contamination of the device, any equipment used in conjunction with the device, and the workspace surrounding the device.

Aspects of the present disclosure provide for arrangement(s) and/or technique(s) for making the process of partitioning a fluid ingredient into separate fluidly isolated cavities quick and efficient. It can be appreciated that microfluidic devices described herein may include any suitable number of layers, components, separating materials, sealing materials, adhesives, etc., in any appropriate arrangement or configuration, and that particular examples of the present disclosure are not intended to be limiting.

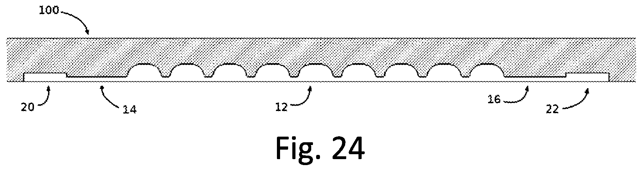

Fig. 24 depicts a cross-sectional view of an embodiment of a first layer 100 of a microfluidic device, having a plurality of cavities 12. The plurality of cavities 12 is connected to an input well 20 via a supply channel 14, and to a vent well 22 through an outlet channel 16. Input well 20 and supply channel 14 allow for the filling of cavities 12 with a fluid ingredient, and vent well 22 and outlet channel 16 allow for the outlet of pressure and excess fluid ingredient.

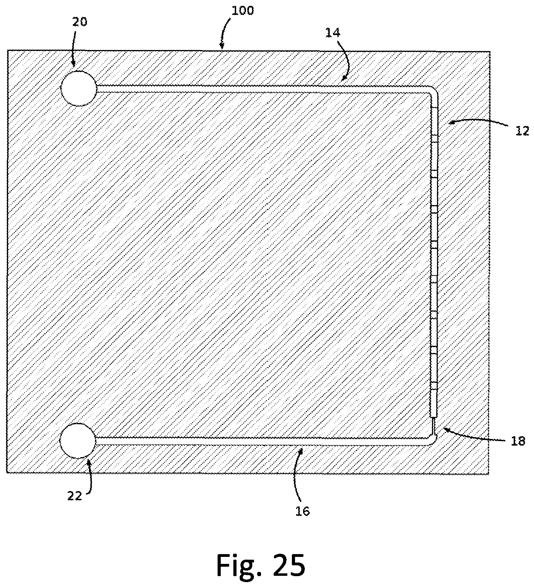

In some embodiments, as shown in Fig. 25, a restriction channel 18 may be located between the supply channel 30 and the outlet channel 16. The restriction channel 18 may be characterized by having a reduced cross-sectional area relative to the supply channel and/or outlet channel. This length of channel with reduced cross-sectional area may serve to restrict the speed of fluid flow through the apparatus so as to enable the channels between cavities 12, and cavities themselves, to fill in a generally even manner while under pressure from an input well 20. Otherwise, absent the restriction channel, in some cases, fluid flow through the apparatus would be too fast and some cavities would fill faster than others, leading to waste of the fluid ingredient as fluid from faster filling cavities would spill or leak out toward the exit.

Fig. 25 depicts a top plan view of an embodiment showing an arrangement of channels 14 and 16, input and vent wells 20 and 22,and plurality of cavities 12. As discussed further below, the plurality of cavities 12 may be connected to outlet channel 16 by a restriction channel 18, which has a reduced cross-sectional area as compared with the channel connecting the cavities 12 together. The restriction channel 18 may serve to reduce the overall speed of fluid flow through the channels from the input well 20 toward the vent well 22, resulting in lesser degree of overfilling of the plurality of cavities 12 and spillage therefrom. When the cavities are less prone to overflowing, fluid ingredient is better conserved.

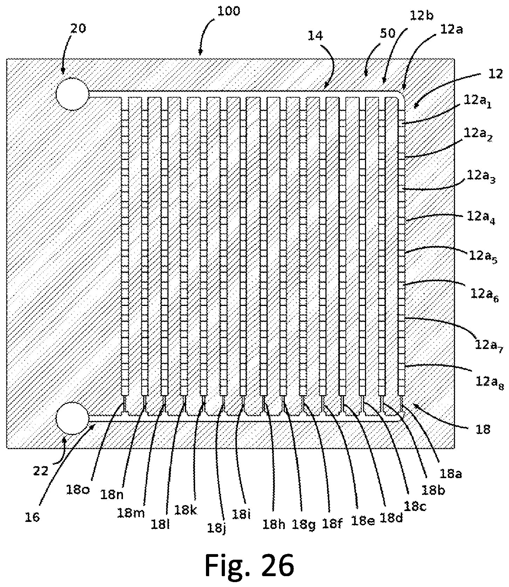

In some embodiments, as discussed herein and shown in Fig. 26, an input well 20 may provide fluid ingredient to an input supply channel 14 branched into multiple supply channels in parallel where each supply channel, in turn, supplies one or more cavities 12. A restriction channel 18 located downstream of a corresponding supply channel 14 may be adapted to allow air to exit freely from the device but to restrict the flow of a liquid (e.g., supplied as a fluid ingredient from an input well).

In accordance with various embodiments of the present disclosure, the plurality of cavities may be provided in a largely rectangular area or other shape with appropriate dimensions. The cavities may be disposed within an area that is less than 81 square millimeters. Preferably, the channels connecting adjacent cavities may be provided as running parallel to at least one of the edges of the rectangular area.

As provided herein, channels 14 may include any part of the passageway through which fluid may flow, for example, between an input well 20 and an outlet channel 16, or between two or more of the cavities 12. Thus, a single channel may be considered to include multiple cavities by virtue of the cavities being in fluid communication. For example, a channel 14 may include multiple columns 12a and 12b. Column 12a may contain each of the cavities 12a₁, 12a₂, 12a₃, 12a₄, 12a₅, 12a₆, 12a₇, and 12a₈, which are in fluid communication. Column 12b, similarly, may contain each of the cavities 12b₁, 12b₂, 12b₃, 12b₄, 12b₅, 12b₆, 12b₇, and 12b₈, which are also in fluid communication. Accordingly, channel 14 may be considered to include each of the columns 12a and 12b, as well as each of the cavities 12a₁, 12a₂, 12a₃, 12a₄, 12a₅, 12a₆, 12a₇, 12a₈, 12b₁, 12b₂, 12b₃, 12b₄, 12b₅, 12b₆, 12b₇, and 12b₈.

According to various embodiments of the present disclosure, the device may comprise a plurality of assemblies, each consisting of a plurality of cavities, a plurality of channels, an input well, and a vent well, and all disposed on the same first layer. Each plurality of cavities may be disposed within an area that is less than 81 square millimeters. In a preferred embodiment of the present disclosure, the plurality of assemblies may consist of rows and columns of repeated assemblies, the distance between adjacent rows being 9 millimeters, and the distance between adjacent columns being 9 millimeters.

As shown, in this embodiment, a plurality of cavities 12 are divided into subsets of cavities arranged in columns, terminating in a length of channel with reduced cross-sectional area. Each column of cavities is connected to input supply channel 14 directly, and connected to outlet channel 16 through a restriction channel 18. Such an arrangement may be advantageous due to its spatial density of cavities and the speed in which such an arrangement can be filled and, as discussed further below, sealed. A fluid ingredient may be supplied through inlet 20 to each of the column of cavities 12a, 12b, 12c, 12d, 12e, 12f, 12g, 12h, 12i, 12j, 12k, 121, 12m, 12n, and 12o via a supply channel 14. Within one column of cavities 12a, each cavity 12a₁, 12a₂, 12a₃, 12a₄, 12a₅, 12a₆, 12a₇, and 12a₈ may be serially filled with fluid ingredient one after another and, as discussed further below, serially sealed one after another. Each column of cavities 12a may be connected to outlet channel 16 via a restriction channel 18, which may prevent overfilling of the column, thereby conserving fluid ingredient. Restriction channels 18 may also promote even filling of each column of cavities 12a. A fluid ingredient supplied through a supply channel 14 that, due to aberrations in geometry or surface roughness, fills one column of cavities 12a before another column of cavities 12b, will then be forced through a restriction 18a, which will resist the pressure differential driving fluid flow and cause fluid to flow through the filled subset 12a slower than the unfilled subset 12b, thereby equalizing the fluid volume in each subset of cavities.

For example, if a supply channel 14a fills all of its corresponding connected cavities 12a with fluid ingredient 500 before another supply channel 14b fills all of its corresponding connected cavities 12b, it may be advantageous to obstruct or restrict further fluid flow through channels between cavities 12a so as to conserve fluid ingredient 500, which may be expensive or limited in quantity. Accordingly, restriction channel 18a may limit fluid flow through channel 14a (corresponding to one group of cavities 12a) to a smaller volumetric flow than through channel 14b (corresponding to another group of cavities 12b), so as to limit the amount of fluid ingredient 500 forced into vent well 22 through channel 14a. Alternatively, restriction channel 18b may, in turn, restrict fluid flow through channel 14b, which may be advantageous if channel 14b fills with fluid ingredient before channel 14a. As a result, the use of restriction channels 18 may limit the amount of excess fluid ingredient needed to supply all cavities 12 with fluid ingredient. In some embodiments, restriction channels 18 may be of a similar depth as channels 14, yet with a comparatively smaller width, which may enable restriction channels 18 to remain unfilled by sealing material 150 after sealing material 150 is forced into channels 14.

Individual layers of microfluidic devices described herein may include any suitable material and may be composed of similar or different materials. In some embodiments, a layer is made of a relatively rigid plastic, for example, polypropylene, polyethylene, polycarbonate, PTFE, etc. Alternatively, a layer may include a flexible, rubber-like material such as silicone or other elastomer. Other potential materials include glass, ceramics, silicon, or the like. As such, a layer may be rigid or deformable. Such materials may be translucent or clear so as to easily allow for optical measurements of the contents within the cavities, or opaque so as to prevent ambient light from contacting the cavities.

In some embodiments, different layers may define cavities and channels that are initially in fluid communication. For example, a first layer may define a number of cavities without necessarily defining the channels that connect the cavities together; an additional layer adjacent to the first layer may define those channels that connect the cavities. Such channels may be appropriately sealed, for example, by compression of the two layers relative to each other.

In other embodiments, a portion of the first layer itself may be deformed into the channel so as to cause sealing. For instance, the first layer may be composed of a deformable material, such as silicone, an elastomer, or the like. Such a material may act as a sealing material. Or, the first layer may include a material that substantially softens after the application of heat so that the material deforms into the channels.

Individual layers of the microfluidic device may be made by any suitable method. In some embodiments, layers are fabricated via injection molding, by embossing the cavities and channels into a thin sheet of plastic, etching, or any other suitable method. For example, spaces that define the cavities and channels may be formed (e.g., molded, etched) in a plastic/polymer or elastomeric material that makes up the layer.

Injection molding may be a preferred method for providing the first layer with high reproducibility and low cost. In some embodiments, a method of injection molding may include a mold comprising two halves, one half containing positive features defining a plurality of cavities connected by channels, and the other half containing positive features defining input wells, vent wells, and structural features of the layer. In other embodiments, the first layer may instead be embossed.

In accordance with some embodiments, the plurality of channels may terminate in a length of channel with reduced cross-sectional area. This length of channel may serve as a restriction so as to enable the channels in the cavity area to fill evenly under pressurization from an input well.

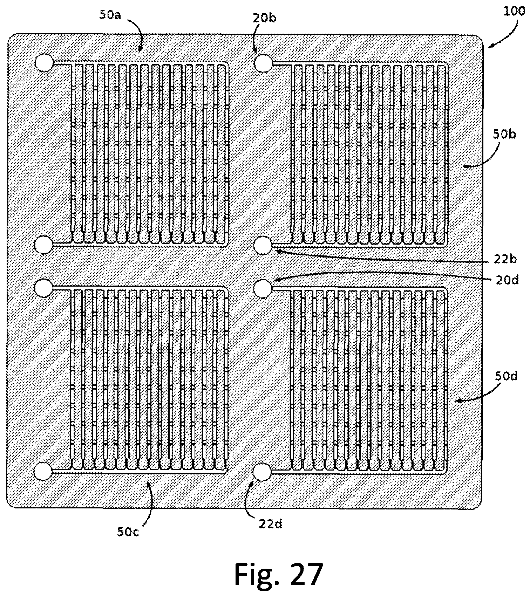

Fig. 27 depicts an embodiment of the present disclosure which includes multiple input wells 20 and vent wells 22, each connected to a plurality of cavities 12 through a supply channel 14, an outlet channel 16, and restriction channels 18. Each subset of an input well 20, vent well 22, supply channel 14, outlet channel 16, and plurality of cavities 12 defines a subassembly 50. First layer 100 may contain a plurality of such subassemblies. For example, first layer 100 may contain subassemblies 50a, 50b, 50c and 50d, each containing an input well, vent well, supply channel, outlet channel, and plurality of cavities. Subassembly 50a, by way of further example, may contain an input well 20a, vent well 22a, plurality of cavities 12a, supply channel 14a, and outlet channel 16a. Subassembly 50a may also include a plurality of restriction channels 18a connecting the plurality of cavities 12a to outlet channel 16a.

The microfluidic device may include, without limitation, any appropriate number of cavities and any number of subassemblies. For example, another format of chambers may include 8x12 (96) subassemblies of 16x31 (496) cavities. It should be understood that this device can be designed to include any desired number of cavities and subassemblies, as the present disclosure is not limited in this respect.

Each cavity may define any suitable volume. For example, the volume of cavities of microfluidic devices described may be less than about 10 microliters, less than about 1 microliter, less than about 500 nanoliters, less than about 200 nanoliters (e.g., about 150 nanoliters), less than about 100 nanoliters, less than about 50 nanoliters, less than about 20 nanoliters, less than about 10 nanoliters, less than 5 nanoliters, less than about 1 nanoliter, or any other appropriate volume. The volume defined by cavities corresponding to a particular subassembly may also vary. Accordingly, the volume of corresponding cavities of a subassembly may be about equal or may substantially differ.

In some embodiments, a sealing material (e.g., layer of compliant material) may be provided, arranged to bound the otherwise open surface of a plurality of channels and cavities. Said sealing material may be deformed into the channels between cavities in order to fluidly isolate a plurality of cavities 12, as described further below.

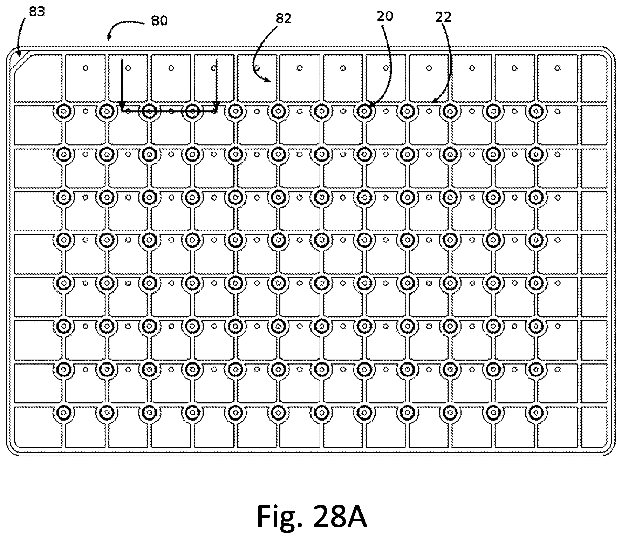

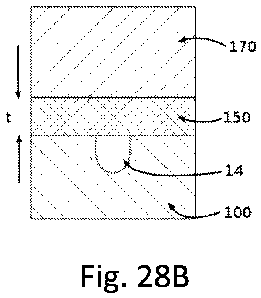

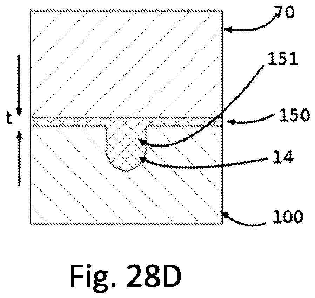

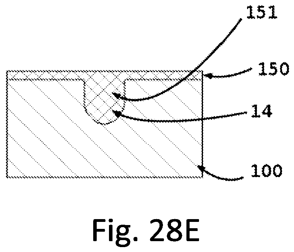

The views provided by Figs. 28A - 28E show a process of sealing a channel 14 upon appropriate actuation (e.g., compression, heating and/or other suitable method) of a sealing material. Fig. 28A shows where the cross-section is taken to illustrate Figs. 28B - 28E. In Fig. 28B, a sealing material 150 is provided, arranged adjacent to a first layer 100, bounding the open surface of a channel 14. Figs. 28a - 28d also contain a compression instrument 70, arranged to provide compressive force to sealing material 150. In Fig. 28e, the compression instrument has been removed upon sealing channel 14.

According to embodiments of the present disclosure, the sealing material may comprise an adhesive layer. In some embodiments, the adhesive may be selected on the basis of its compatibility with polymerase chain reaction. The adhesive may be disposed on a backing layer, and may be arranged with the adhesive contacting the surface defining the channel.

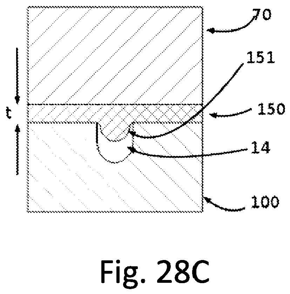

A sealing material 150 and the first layer 100 may be compressed relative to one another such that a portion 151 of the material layer is caused to plastically deform into the space defined by a channel 14 through which fluid would otherwise be able to flow, as further shown in Figs. 28C - 28E. As shown, other portions of the sealing material are also compressively deformed as well, depicted by the reduction in thickness t of sealing material 150. In some embodiments, some of the portion 151 of the sealing material that deforms into the channel 14 is supplied by separating material displaced from areas surrounding the channels, which contributes to the overall reduction in thickness t of sealing material 150. The portion of the sealing material 151 that blocks the channel 14, however, prevents fluid from flowing through the channel 14 between cavities that were previously in fluid communication.

A sealing material may be composed of any suitable material or composition. In some embodiments, the separating material includes a plastic/polymer, such as polyethylene, polypropylene, ethylene-vinyl acetate, an elastomer such as silicone rubber, or a wax such as paraffin or microcrystalline wax, or combinations thereof. As such, the sealing material may include a blend of several different compositions or may be provided in various configurations, such as in layered or more discrete arrangements, where different pieces of the sealing material are placed at various locations.

In some embodiments, the process of sealing the channels is irreversible. For example, a sealing material may be plastically, hence, permanently deformed into a space of a channel through which fluid would otherwise be able to flow. Accordingly, absent disassembly of the microfluidic device to remove the sealing material from the channels, such channel sealing is not a reversible characteristic.

In some embodiments, the amount of compressive force exerted on the device sufficient to result in sealing off of the channels may be between about 100 Newtons and about 10,000 Newtons (e.g., 100-1,000 N; 1,000-5,000 N; 5,000-10,000 N), depending on the overall size of the device and the nature of the sealing material. For example, the larger the device (i.e., the more cavities and channels), the more compressive force may be required to seal the channels from flow between cavities. Or, the softer the material, the less compressive force may be needed to deform the material into respective channels of the device.

For certain materials, the application of an appropriate amount of compression and/or heat may result in certain characteristics of the sealing material, or other components of the device, to change. For example, at elevated temperatures, certain materials such as wax will become increasingly tacky and/or adhesive, resulting in strong adherence between components of the device. Accordingly, the different layers of the device, including a wax layer, may be assembled and then subject to compression and heating for an appropriate period of time, allowing the wax to create a bond. In some embodiments, one or more appropriate solvents may be used to promote bonding between layers.

Various components (e.g., layers, adhesives, etc.) of microfluidic devices described herein may be adhered together by any suitable method. For example, an adhesive may be used to bond one or more components together, such as for bonding a sealing material and the first layer. In some embodiments, the components of the microfluidic device are compressed together (e.g., via clamping, rolling, or other externally applied force) so as to result in an evenly distributed bond between surfaces of different layers.

Accordingly, in some embodiments, a layer may include acrylic adhesive, natural rubber adhesive, or silicone adhesive. Such materials may be suitable to deform into channels of the device (e.g., as a sealing material) when subject to compression. In some embodiments, adhesives may be disposed on a relatively rigid layer, or alternatively, on a separate backing. Examples of suitable backings may include polypropylene, polyethylene, polycarbonate, and/or other suitable plastics.

In some embodiments, the sealing material may be heated to an elevated temperature so as to cause softening of the material sufficient for the material to deform into adjacent channels. Such an elevated temperature may depend on the softening point of the material, for example, between about 40 C and about 90 C (e.g., between about 50 C and about 70 C) for certain polymeric or wax compositions. It can be appreciated that a number of different types of sealing materials may be used.

It can be appreciated that any suitable method may be used to create a seal within channels such that cavities are fluidly isolated from one another. For example, separate pieces of a sealing material may be distributed throughout the device and located directly adjacent to each channel. A sealing material may be caused to appropriately deform due to compressing layers of the device (e.g., externally applied compression, clamping/rolling of exterior surfaces of the layer(s), applying a local probe to various regions, etc.), heating appropriate portions of the device (e.g., using a thermal plate, a heat probe, a laser, etc.), magnetically actuating certain regions of the device, or any other suitable method. It can be appreciated that different regions of the device may be selectively actuated. For example, heat and/or compression may be directed to particular regions where sealing of the channels is desired, rather than to an entire surface of the device. The sealing material may be adapted to, at least partially, melt, soften, or otherwise deform into the channel upon application of external compressive force and/or heat to particular regions of the device, or the device as a whole.

It can be appreciated that for embodiments in accordance with the present disclosure, while the following features may be true of the microfluidic device, the sealing material is not required to be a continuous monolithic layer, nor is it necessary for it to be of the same external dimensions as the first layer in which the cavities are defined. It can be appreciated that the layer(s) of the device, including the sealing material, are not required to have dimensions where the layer(s) come(s) into alignment. Nor is it required that the layer defining the cavities be above or below the sealing material.

In some embodiments, the depth of the channels may affect whether a seal is properly formed within a channel that otherwise fluidly connects neighboring cavities. When the device is subject to an externally applied compressive stress, a shallow channel is more likely to result in a properly formed seal that prevents fluid flow therein as compared to a deeper channel. That is, comparatively less deformation (e.g., provided by applied compression) of the sealing material is required to create a suitable seal in a smaller space, allowing for a fine degree of channel sealing control. Accordingly, the depth of the channels may be designed so as to promote, or discourage, sealing.

In some embodiments, channels connecting adjacent cavities are routed in such a manner so as to limit the area occupied by the channels on the device. For example, channels may be arranged to incorporate multiple bends, allowing for fine control of the distance of channels and between cavities. Control over the distance between channels may assist in controlling bond quality between layers of the device, for example, by providing room for material (e.g., sealing material, fluid, etc.) to be displaced such that the displaced material does not interfere with other components/features of the device.

In some embodiments, the channel depth may vary along the same channel. For example, a channel connecting the first cavity along a channel with an input well in a subset of cavities may require an especially tight seal to be formed near the cavity but such a tight seal might not be required closer to the fluid source reservoir. As a result, the region of the channel nearest to the cavity may be more shallow than the region of the channel nearest to the fluid source reservoir. Or, in some embodiments, deeper regions of a channel may remain substantially unfilled by a sealing material upon compression of the device, and shallower areas may become obstructed and filled by the sealing material upon compression of the device.

In some embodiments, channels that connect cavities to other cavities may be more shallow in depth than channels that are closer to input or vent wells. Accordingly, channels that connect cavities to one another may be more easily sealed than channels that are connected to other features of the device.

Channels which require sealing may have a sufficient amount of a sealing material located around or in otherwise close proximity to the channels so that a sufficient amount of the sealing material may be deformed into the channels during sealing actuation (e.g., compression and/or heating). Accordingly, sealing channels, such as those that fluidly connect cavities with each other, may be constructed to be further away from other features (e.g., input wells, other channels) so that more sealing material is available to deform into the channels.

According to various embodiments of the present disclosure, the plurality of cavities may be surrounded by features comprising additional cavities or channels not meant for fluid entry. These features may be arranged to maintain an equal degree of deflection and compression of the second layer, so as to maintain an even thickness of the second layer across the first surface. These features may also be arranged to collect excess fluid and/or sealing material that may be displaced from various cavities or channels during heating and/or compression of the device. In a preferred embodiment, these additional cavities or channels may be disposed adjacent to cavities or channels in regions of the device that would otherwise become partially or completely filled with sealing material, for example, cavities or channels at the edge of a subassembly where overflow may be more likely to occur. In another embodiment, these additional cavities or channels may be disposed between adjacent pluralities of cavities. An even thickness of the second layer may be beneficial to avoid overfilling of the channels or excessive filling of the cavities due to an excess of deformed material from the second layer during compression of the first and second layers relative to one another.

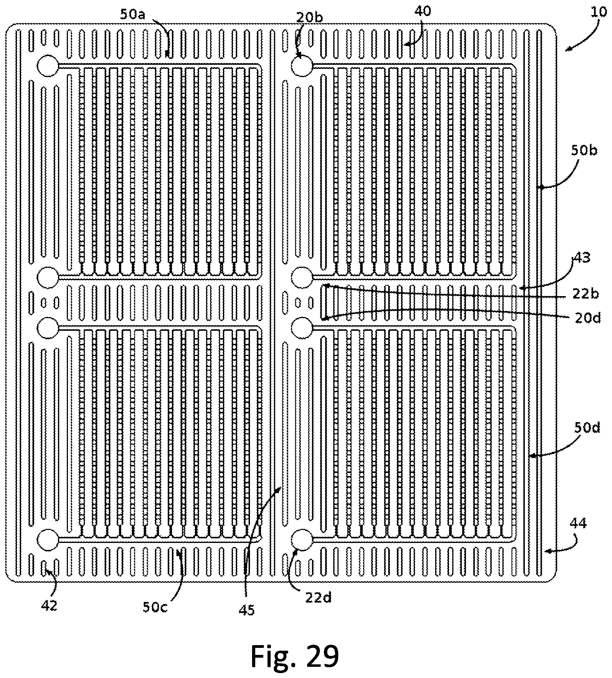

Fig. 29 shows additional channels 40, 42, 43, 44, 45 that may be suitable for collecting excess sealing material from a microfluidic device 10 upon heating and/or compression of the sealing material. For example, the additional channels 40 may collect excess sealing material that overflows resulting from compression of regions between an edge of the device and supply channel 30. The additional channels 42 and 44 may collect excess sealing material that overflows resulting from compression of regions around input wells 20 or vent wells 22. Additional channels 43 may collect excess sealing material that overflows resulting from compression of regions between subassemblies 50. Additional channels 45 may collect excess sealing material that overflows resulting from compression of regions between input wells 20, vent wells 22, and plurality of cavities 12.

In some embodiments, the microfluidic device may comprise a dust skirt surrounding the first surface that protrudes beyond said first surface. This dust skirt may prevent the device from resting on its first surface, and thereby prevent it from accumulating dust and other particles that may affect imaging or fluorescence readings taken from the cavities. In some embodiments, this protrusion may also prevent ambient light from entering the cavities.

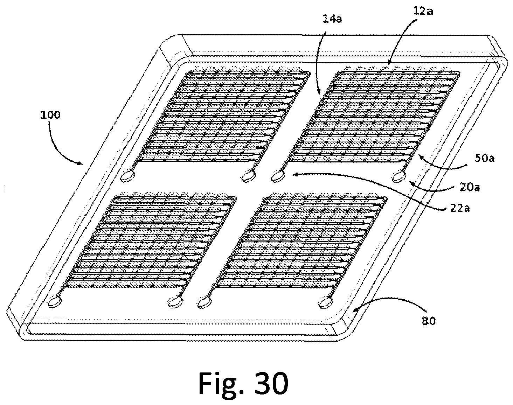

Fig. 30 depicts an embodiment providing a dust skirt 80, wherein, when the device is placed on a flat surface, the dust skirt 80 is adapted to prevent the surface defining cavities 12 from contacting the flat surface and acquiring dust or dirt particles that may contaminate the cavities, or conversely to prevent the cavities 12 from contacting and contaminating the flat surface with any fluid ingredient inside cavities 12.

In various embodiments, the device may comply with ANSI/SLAS microplate standards. Accordingly, the first layer may be disposed on an area that is 127.76 millimeters in length and 85.48 millimeters in width. The device may comprise rows and columns of assemblies containing a plurality of channels, cavities, a single input well and a single vent well. In a preferred embodiment, the number of such assemblies is at least 96, arranged as eight rows by twelve columns, and the distance between each adjacent row and between each adjacent column is 9 millimeters. The device may also have a corner radius of 3.18mm.

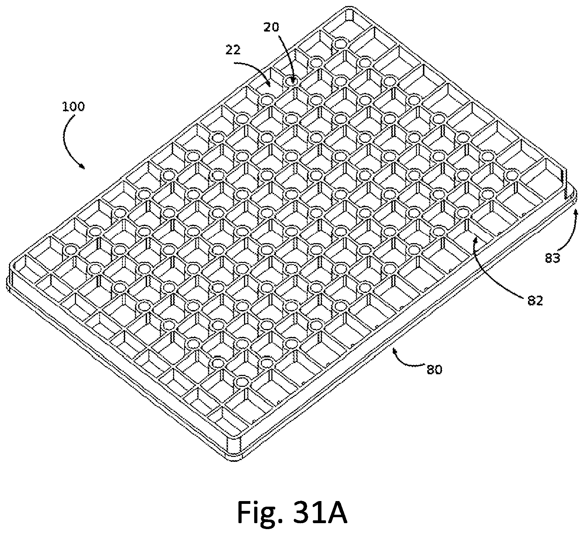

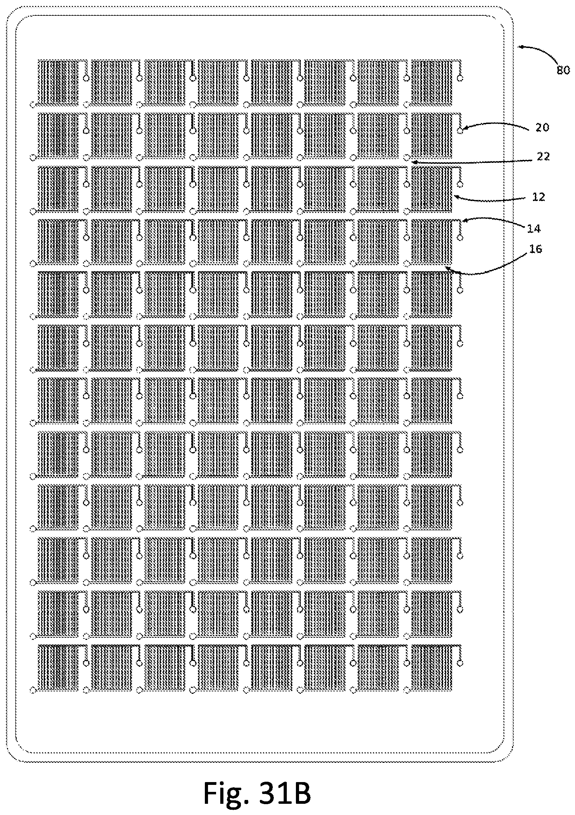

Figs. 31A-31B depict an embodiment wherein a first layer 100 is in a microplate compatible format. In accordance with standard plate dimensions, the dust skirt 80 may be 85.48 millimeters in width by 127.76 millimeters in length, with four outside corners having a radius of 3.18 millimeters. The ribs 82 form boundaries for vent wells 22 and also add rigidity to the layer 100. The layer 100 may also contain orientation features over one or more wells, such as a chamfered corner 83 of a vent well 22.

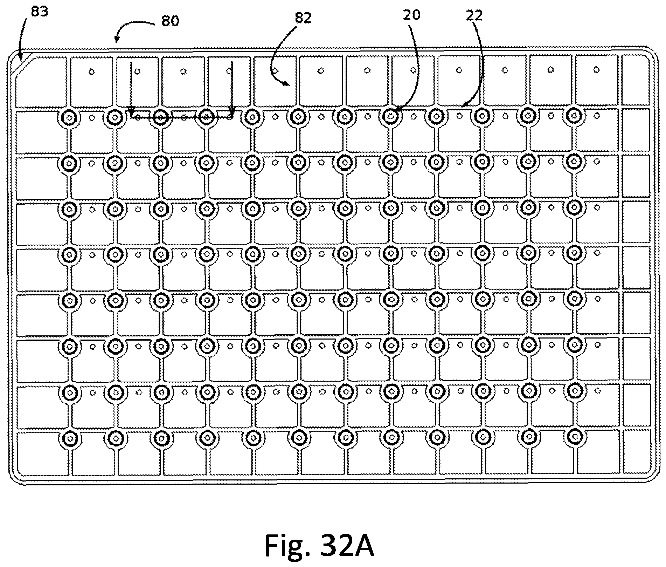

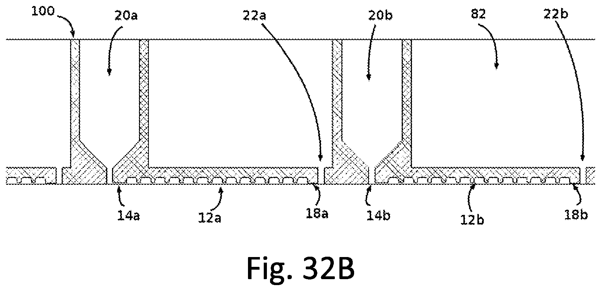

Figs. 32A - 32F illustrate embodiments of the present disclosure during the sealing process. Fig. 32A shows where the cross-section is taken to illustrate Fig. 32B. In Fig. 32B, an embodiment is shown wherein input wells 20 and vent wells 22 are disposed on one surface of first layer 100, and a plurality of cavities 12 is disposed on the opposite surface. Vent wells 22 may be bounded by rib features 82, which serve a dual purpose in providing rigidity to first layer 100. Supply channels 14 and vent channels 16 may be provided as channels through first layer 100, providing a fluid path from input wells 20 and vent wells 22 on one surface of layer 100 to pluralities of channels 12.

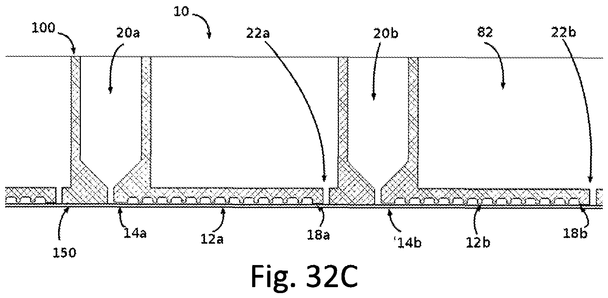

In the embodiment depicted in Fig. 32C, a sealing material 150 is arranged to bound the open surfaces of supply channels 14, outlet channels 16, restriction channels 18, and pluralities of cavities 12. The sealing material 150 does not initially obstruct channels 14 from supplying the plurality of cavities 12. In this form, device 10 may be distributed, stored, or shipped, as it has been sufficiently prepared to receive fluid ingredients through input wells 20.

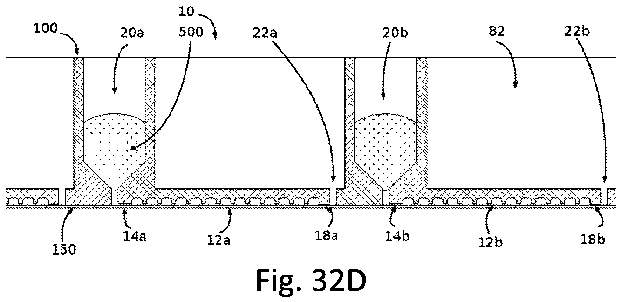

In Figs. 32D - 32F, a fluid ingredient 500 is supplied to a plurality of cavities 12 through input wells 20. If microfluidic device 10 is to be used for digital PCR analysis, this fluid ingredient 500 may comprise a solution containing a DNA sample, DNA polymerase, and a 'master mix' solution containing nucleotides and other reagents necessary for polymerase chain reaction. Fig. 32D depicts an embodiment of microfluidic device 10 wherein fluid ingredient 500 has been supplied to input wells 20. Fluid ingredient 500 may be prevented from entering supply channel 14 by surface tension.

Fluid ingredients may be supplied to respective inlets, cavities and channels by any suitable method. In some embodiments, a machine or user pipettes appropriate reagents into input wells. Or, separate containers may be appropriately connected to respective input wells for supplying fluid held by the containers to the input wells. Cavities and channels may be supplied with respective fluid ingredients, for example, by capillary action, gravity, centrifuging, suction from the vent holes, vacuum suction, pressure on the input wells, and/or any other suitable manner. Thus, any push or pull method may be used to suitably supply cavities and channels with appropriate fluid ingredient(s).

In some cases, smooth interfaces between channels and cavities may reduce the overall pressure required for fluid to fill the cavities. What is more, smooth interfaces between channels and cavities may allow for channels to be more easily filled with sealing material than would otherwise arise from a sharper interface. Smooth interfaces may also reduce the tendency of the sealing material to shear, puncture or otherwise tear, allowing fluid ingredients to escape the cavities or channels they were contained in. Accordingly, the microfluidic device may incorporate smooth interfaces between channels and cavities where possible.

In some embodiments, an input well may be sealed from further fluid entry by the use of a third layer 140 (e.g., plate/well seal), disposed adjacent to a first layer. This third layer 140 may be used to prevent contamination of or by fluid ingredient 500 in input well 20 and/or vent well 22. It may be desired that fluid ingredient 500 not be contaminated, as fluid ingredient 500 may contain sensitive reagent. Contamination by foreign bodies may inhibit, prevent, or promote excessive reactivity of reagents contained in fluid ingredient 500, which may negatively impact the results and data from reactions involving the ingredient. Additionally, after amplification, in the case of polymerase chain reaction, fluid ingredient 500 may contain high concentrations of amplicon, arising from multiple replication events, which may then result in a risk for contamination of any apparatus or workspace that contacts microfluidic device 10.

Accordingly, it may be desirable to obstruct or otherwise substantially prevent fluid flow to or from the input well 20 and/or vent well 22. Immediately following the filling of input well 20 with fluid ingredient 500, third layer 140 may be used to seal input well 20 and vent well 22 from further fluid flow. Alternatively, third layer 140 may include a suitable structure that accommodates filling of cavities 12 with fluid ingredient 500, such as a membrane having self-sealing holes or punctures, which would permit third layer 140 to be positioned adjacent to input well 20 and vent well 22 prior to filling input well 20 with fluid ingredient 500. Third layer 140 generally would not prevent or obstruct fluid flow within and between channels 14, wells 20 and 22, and cavities 12, but rather would provide for a closed fluidic system between all connected elements.

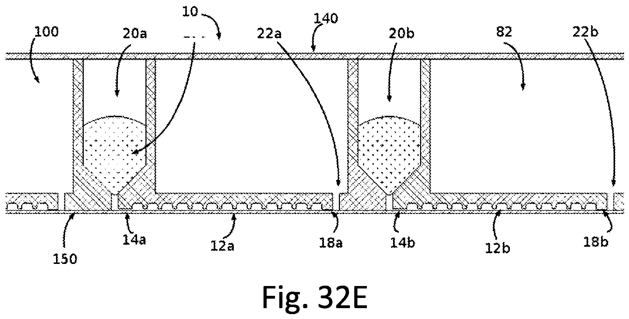

In the embodiment depicted in Fig. 32E, after supplying microfluidic ingredient 500 to microfluidic device 10, a third layer 140 is used to seal input wells 20 and vent wells 22 from further fluid entry. Third layer 140 comprises a flat deformable layer with adhesive properties, which is arranged across the top surface of input wells 20 and output wells 22. Sealing input wells 20 and vent wells 22 does not prevent fluid transfer between plurality of cavities 12, input wells 20, vent wells 22, supply channels 14, outlet channels 16, and/or restriction channels 18. Third layer 140 may also prevent fluid ingredient 500 from evaporating or otherwise escaping input wells 20 and vent wells 22, thereby preventing contamination of microfluidic device 10 or its environment.

It can be appreciated that for embodiments in accordance with the present disclosure, the third layer is not required to be a continuous monolithic layer, nor is it necessary for it to be of the same external dimensions as the first layer in which the cavities are defined. It can be appreciated that the layer(s) of the device, including the sealing material, are not required to have dimensions where the layer(s) come(s) into alignment. Nor is it required that the layer defining the cavities be above or below the third layer.

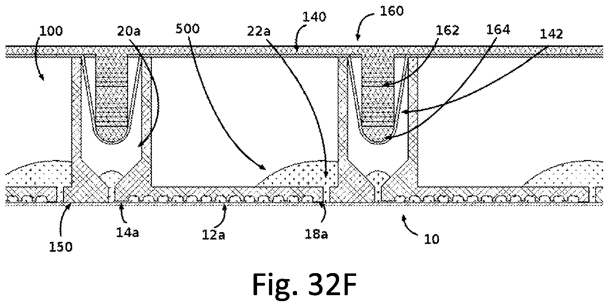

In some embodiments, after sealing input well 20 and vent well 22 from further fluid flow therebetween, third layer 140 may be used to force fluid ingredient 500 into cavities 12 by providing added pressure to the volume defined by input well 20. Fig. 32F depicts an embodiment wherein a filling tool 160 comprises a plurality of protrusions 162, where each of the protrusions is arranged for insertion into a corresponding space defining an input well 20. When the filling tool 160 is pressed down toward the first layer 100, the protrusions of the instrument are configured to deform corresponding portions of the third layer 140 into respective input wells 20. As corresponding portions of the third layer 140 are deformed into the space defined by the respective input wells 20, the volume of the space is reduced, resulting in a pressure increase within the wells, forcing fluid ingredient into the channel(s) and cavities. Protrusions 162 may comprise rounded ends 164, or any other suitable shape, that limits tearing or cutting of the third layer 140.

Thus, by controlling the geometry of protrusions 162, along with restriction channels 18, fluid ingredient 500 may be forced to sufficiently fill a plurality of cavities 12 while resulting in minimal amounts of excess volume. In some embodiments, sealing of a plurality of cavities 12 may be performed while filling tool 160 is providing pressure to the fluid ingredient 500. In other embodiments, sealing of plurality of cavities 12 may be performed after the plurality of cavities are filled with fluid ingredient 500 and the filling instrument 160 is removed.

In some embodiments, the filling of the plurality of cavities and the partitioning of the plurality of cavities may be performed by an automated filling machine. The automated filling machine may pressurize the input wells by deflecting a third layer into the input wells so as to force the fluid into the plurality of cavities through a combination of pressurization and positive displacement. In one embodiment, this deflection may be performed by a plurality of protrusions arranged corresponding to each of the input wells. The plurality of protrusions may be disposed on a rigid backing layer and be of sufficient height so as to enable the protrusions to fully displace the third layer without causing the rigid backing layer to contact the input wells. The automated filling machine may also enable sequentially compressing of a sealing material into the channels connecting adjacent cavities, such as a motorized roller.

In some embodiments, once the cavities are suitably filled with fluid ingredient, the sealing material 150 may be forced into channel 14, for example, by application of a roller, adapted to provide compressive pressure to the sealing material 150 in a sequential manner along the direction of fluid flow within the channel that connects adjacent cavities.

This is in contrast to other embodiments where the sealing material 150 is forced into channels 14 around all cavities 12 simultaneously. Pushing sealing material into each of the cavities along a channel simultaneously may result in the volume within the cavities 12 to build pressure. Pressure buildup in cavities 12 may tend to cause separation of the sealing material 150 from channel 14 (e.g., bulging up of the sealing material from the channels and cavities), which would effectively remove fluid isolation between cavities 12 and allow contents within the cavities to undesirably mix.

Alternatively, through compression of the sealing material into channels and cavities of the first layer 100, if cavities 12 are sequentially isolated, or otherwise isolated in series one after another, along the direction of fluid flow within the supply channel 14, pressurized fluid ingredient 500 may be forced successively into neighboring unsealed cavities 12 and ultimately into vent wells 22 (when all of the respective cavities within a channel are sealed/isolated). The vent wells 22 are of a sufficient volume to receive excess fluid ingredient 500 without resulting in a pressure build up within cavities that would otherwise tend to separate the first layer 100 from the sealing material 150 and/or the third layer 140.

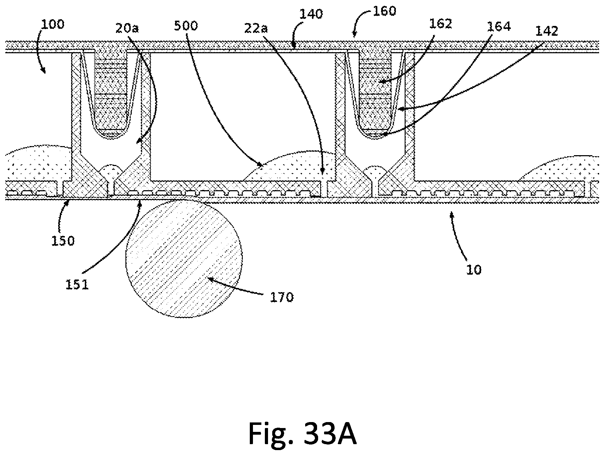

However, if the cavities disposed further from input well 20 along channel 14 are sealed/isolated before cavities closer to input well 20 along channel 14 (e.g., roller applies pressure by rolling the sealing material in a direction counter to that of fluid flow through the channel), pressure may build up within respective volumes defined by the channels and cavities, leading to undesirable results. Figs. 33A - 33C depict various embodiments of the present disclosure wherein compression of sealing material 150 into supply channel 14 is performed by a roller 170.

In some embodiments, the roller 170 and/or a layer between the roller and the sealing material 150 may include a material that is compliant with respect to the first layer 100, which is suitable to maintain even compression of the sealing material 150 relative to first layer 100. As a result, such a compliant material may provide tolerance in accommodating for any irregularities that may arise between the sealing material 150, first layer 100, or roller 170, e.g., due to differences in thickness or surface imperfections. For example, the roller 170 may tend to force any protruding irregularities into the surface of first layer 100, or to raise up from the surface of first layer 100.

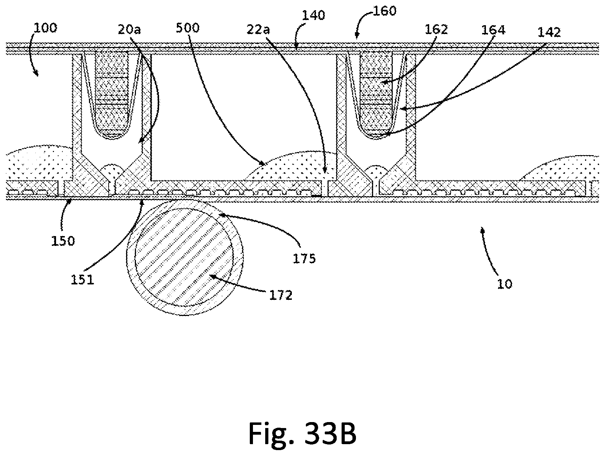

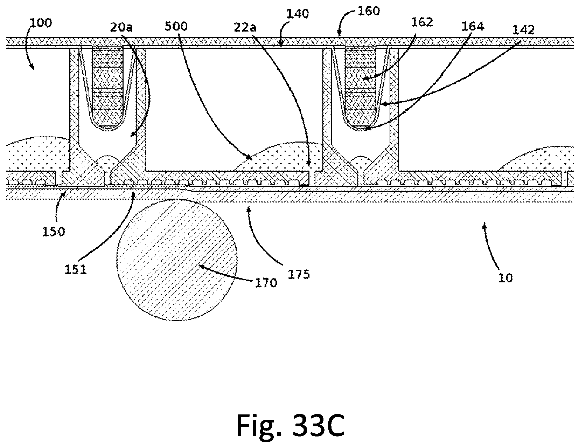

Providing the roller 170 with a compliant material (e.g., on the perimeter of the roller) may minimize the impact of local irregularities in the thickness of any of first layer 100, sealing material 150, or roller 170. Fig. 33A depicts an embodiment where the roller 170 is composed largely of a compliant material. In Fig. 33B, the roller includes a rigid core 172 surrounded by a compliant material 175. In Fig. 33C, a compliant material 175 is provided between the roller 170 and the sealing material 150.

In some embodiments, if the roller 170 is excessively compliant, it may deform in such a way that the sealing material surrounding multiple cavities is simultaneously compressed. This may have the effect of creating a pressure buildup in those cavities similar to that which arises when the cavities are not sequentially isolated in order one after another. Accordingly, the compliant material 175 may be of suitable dimensions and composition so as to allow for an appropriate degree of compliance.

In some embodiments, following the sealing step, the method of partitioning a fluid sample may include removing any compressive force or pressure from the device. The device is thereby fully partitioned and sealed and may be handled and used with other devices or apparatuses as needed.

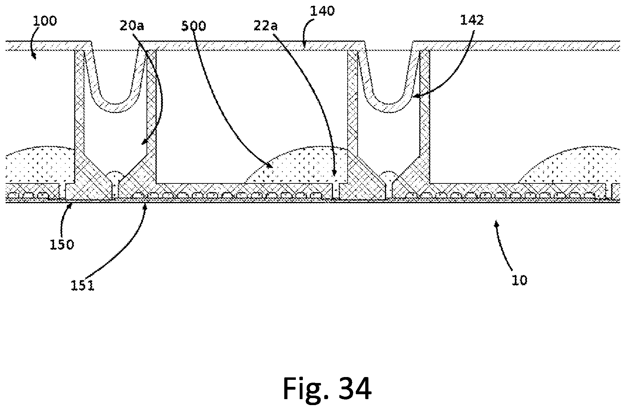

After compression of sealing material 150 into supply channels 14 and outlet channels 16, the plurality of cavities 12 is sealed from further fluid entry. Microfluidic device 10 may then be handled, stored, or used in an experiment. In some embodiments, microfluidic device 10 may be thermocycled, so as to perform PCR on the fluid ingredient 500 contained in plurality of cavities 12. Fig. 34 depicts an embodiment of microfluidic device 10 which has been filled with fluid ingredient 500 and sealed by sealing material 150 and third layer 140. Areas 142 of third layer 140 remain plastically deformed after removal of filling tool 160 and protrusions 162.

In the context of PCR, once the reagents are combined, the microfluidic device may be subject to thermal cycling. In some cases, when appropriate, the thermal cycler may be the same device that provides heat and/or compressive pressure to the device for sealing the channels and deforming the sealing material. The plurality of cavities may be provided with the necessary reagents for polymerase chain reaction prior to this thermal cycling. These reagents may comprise a DNA sample, a DNA primer formulated to complement the DNA sample at specific gene locations, and a "master mix" solution containing DNA polymerase and various reagents (e.g., nucleotides) that facilitate the activities of the polymerase.

Accordingly, a user could fill the device with the appropriate reagents, the steps of filling the cavities with a fluid ingredient and isolating the cavities may be performed (manually or automatically), and the device may be subject to thermal cycling (immediately or after a certain period of time).

In some embodiments, the thermal cycler would provide clamping of the layers of the microfluidic device together so as to result in good thermal contact and, hence, reliably quick, responsive temperature adjustments. Such clamping may also provide for a suitable amount of externally applied compression, for example, to seal off the channels between cavities.

In some cases, thermal cycling is preceded by a period of time (e.g., between 1 and 15 minutes) of high temperature exposure so as to activate the PCR enzyme. The reagents may then be cycled between two or more temperature ranges appropriate for PCR. Typically the amount of target DNA is doubled at the conclusion of each cycle.

PCR detection may be implemented in a number of ways. For instance, in end point PCR, the device undergoes a number of thermal cycles, and after thermal cycling is complete, the fluorescence of each reaction chamber is measured. In real time PCR, the fluorescence of each chamber is measured periodically during or after cycles, allowing for the amount of DNA in each chamber to be quantified in real time.

In end point PCR, once the desired reactions are completed, the results are collected. One preferred method of collecting the results is through optical techniques. Optical collection may be performed using any suitable method, such as through absorbance, fluorescence and/or luminescence of the contents of the reaction chambers. Or, each chamber may be imaged via microscopy and an operator may manually observe specific features that result from the reactions within the chambers. The optical detection assembly can be completely separate from the thermal cycling assembly. Thus, the device can be moved from the thermal cycler to the optical detection assembly after thermal cycling is complete.

In some embodiments, imaging of the device may be performed according to the arrangement of each plurality of cavities connected to distinct input wells and vent wells. In one embodiment, images of the device may be taken in eight rows and twelve columns, each row being separated from adjacent rows by a distance of 9 millimeters and each column being separated from adjacent columns by a distance of 9 millimeters. In accordance with some embodiments, imaging may be performed by an automated imaging system, comprised of a camera oriented perpendicular to the plane of travel defined by a two-axis stage. In some embodiments, the excitation light may be provided by a light arranged outside of the optical path from the device to the camera. In some embodiments, this light may be provided by a software-controlled LED.

In one embodiment, the device may be imaged with a fluorescent microscopy setup. An excitation light source may be provided to cause fluorescence in fluorescent molecules in the solution contained within the plurality of cavities. Fluorescent emission light from the molecules in the solution contained within the plurality of cavities may then be captured by a camera. The excitation light provided may be at a different wavelength than the emission light so as to improve the signal-to-noise ratio of the emission light. The wavelengths of the excitation and emission light may be controlled through the use of optical filters. In some embodiments, the device may be imaged with one or more sets of filters. A fluorescent probe may be added to the solution inside the plurality of cavities which is independent of the nucleic acid amplification reaction and is thus uniformly bright regardless of whether the nucleic acid amplification reaction contained the necessary reagents. This fluorescent probe may be used as a passive reference dye to calibrate the software analysis by showing differences in the volumes contained within the plurality of cavities and/or differences in illumination of the cavities by the excitation light. For example, one such passive reference dye that may be used is ROX reference dye.

In some embodiments, two or more fluorescent dyes may be used in the same reaction. This may be useful for detecting the presence of multiple genes, which can result in cost savings and increased efficiencies due to the reduction in number of reactions needed. The two or more fluorescent dyes may be imaged sequentially and compared to a passive reference dye in order to normalize any uneven illumination or fluid ingredient volume in the cavities. Each fluorescent dye may be imaged using a different excitation filter and emission filter. In some embodiments, the imaging may be performed by an automated imager with the ability to automatically switch the excitation and emission filters.

A magnet may be incorporated with at least one of the camera and the frame of the imager. The emission and excitation filters may be arranged in pairs in a single filter assembly, which may then be switched as needed. In accordance with some embodiments, imaging of the cavities may be performed under different settings for each dye or fluorescent molecule, as necessitated by the fluorescence of the solution within the cavities.

In some embodiments, software analysis of the device may comprise the use of a template corresponding to the known arrangement and size of the cavities. Such a template may be divided into a plurality of areas corresponding to the area of the first surface defining cavities ("positive areas") and an area corresponding to the area of the first surface not defining any negative features ("negative areas"). This template may be positioned and oriented on the image by maximizing the ratio of the sum total of all pixel values within positive areas to the sum total of all pixel values within negative areas.

Devices of the present disclosure may be useful for digital PCR and/or non-digital PCR. While devices illustrated by the figures are depicted to have relatively few cavities/aliquots, it can be appreciated that any appropriate number of cavities/aliquots may be implemented. For example, devices used for digital PCR may form 100-10,000 aliquots per sample input. In general, the greater the number of partitions for a digital PCR application, the larger the dynamic range and, hence, the better statistical precision of quantification of the sample.

In some embodiments, microfluidic devices described herein may be used for digital PCR where the amount of DNA in a sample is quantified. As discussed above, in digital PCR, a DNA sample is divided into a large number of separate aliquots. Once the sample volume is divided into the several aliquots, it is amplified through PCR, and the amount of DNA from the original sample can then be calculated by counting the number of aliquots that have undergone exponential growth through PCR. The analysis for digital PCR is a binary process where an aliquot either undergoes PCR because at least one molecule of target DNA was present within the aliquot, or the aliquot does not undergo PCR because no target DNA was present within the aliquot. Thus, the original concentration of DNA (e.g., prior to dilution) may be determined based on a calculated distribution (e.g., Poisson distribution) of positive and negative aliquots.

The microfluidic device may provide any suitable volume for each cavity/aliquot. In some embodiments, a suitable range of volume per partition (e.g., forming reaction cavities) may be between 10 picoliters and 300 nanoliters, between 500 picoliters and 200 nanoliters, or between 1 nanoliter and 100 nanoliters. With the ability to produce a large number of aliquots, the volume of each individual aliquot can be lowered so as to reduce the amount of reagents needed and, hence, the overall cost.

With such a simple construction, a disposable microfluidic device can be easily manufactured, quickly and at low cost. In some embodiments, one or more of the layers of the microfluidic device is disposable; or one or more layers may be reusable after suitable washing to remove residual reagents/products.
The following numbered statements provide further disclosure of the present subject matter.
1. A microfluidic device, comprising:
   a first layer defining a first cavity;
   a first channel arranged to provide fluid entry to the first cavity;
   a second layer defining a second cavity;
   a second channel arranged to provide fluid entry to the second cavity; and
   at least one separating material providing fluid separation between the first cavity and the second cavity, wherein compression of the first and second layers relative to one another causes sealing of the first channel and the second channel resulting in obstruction of the first cavity and the second cavity from further fluid entry, and wherein manipulation of the at least one separating material causes removal of the fluid separation allowing for fluid communication between the first cavity and second cavity.
2. The microfluidic device of statement 1, wherein the first layer defines a plurality of first cavities and the second layer defines a plurality of second cavities, the plurality of first and second cavities corresponding to an array of chambers, and wherein each chamber is adapted to house a reaction upon removal of the fluid separation according to a combination of fluid ingredients provided by a plurality of fluid source reservoirs.
3. The microfluidic device of statement 1, wherein compression of the first and second layers relative to one another causes fluid isolation of the first and second cavities from adjacent first and second cavities.
4. The microfluidic device of statement 1, wherein compression of the first and second layers relative to one another causes substantial filling of the first and second channels with a sealing material.
5. The microfluidic device of statement 4, wherein the at least one separating material comprises the sealing material.
6. The microfluidic device of statement 5, wherein the at least one separating material and the sealing material comprise a single deformable film.
7. The microfluidic device of statement 4, wherein the at least one separating material is independent of the sealing material.
8. The microfluidic device of statement 7, wherein the first layer or the second layer comprises the sealing material.
9. The microfluidic device of statement 4, wherein compression of the first and second layers relative to one another causes plastic deformation of the sealing material.
10. The microfluidic device of statement 4, wherein heating of the sealing material promotes substantial filling of the first and second channels with the sealing material.
11. The microfluidic device of statement 1, wherein manipulation of the separating material causes irreversible removal of the fluid separation between the first cavity and second cavity.
12. The microfluidic device of statement 1, wherein tearing of the at least one separating material causes removal of the fluid separation between the first cavity and second cavity.
13. The microfluidic device of statement 12, wherein the at least one separating material is in a stressed or stretched state that, upon manipulation, promotes tearing of the at least one separating material.
14. The microfluidic device of statement 12, wherein the at least one separating material is in a scored or at least partially cut state that, upon manipulation, promotes tearing of the at least one separating material.
15. The microfluidic device of statement 1, wherein the at least one separating material is adapted to contract under application of heat.
16. The microfluidic device of statement 1, wherein manipulation of the at least one separating material comprises application of heat.
17. The micro fluidic device of statement 1, wherein manipulation of the at least one separating material comprises application of at least one of a compressive force, a magnetically driven force, laser irradiation and centrifugation.
18. The micro fluidic device of statement 1, further comprising at least one relief cavity fluidly connected to a corresponding cavity and adapted to receive an overflow of fluid from the corresponding cavity.
19. The micro fluidic device of statement 18, wherein the at least one relief cavity is adapted to remain substantially filled with a volume of air upon supply of the corresponding cavity with fluid.
20. The microfluidic device of statement 4, further comprising at least one storage cavity adapted to prevent excess sealing material from filling the first cavity or the second cavity.
21. The microfluidic device of statement 1, wherein the at least one separating material comprises at least one of polycarbonate, PTFE, silicone, polypropylene and paraffin wax.
22. The microfluidic device of statement 1, in combination with a system arranged to perform polymerase chain reaction.
23. The microfluidic device of statement 1, wherein the first and second channels are substantially aligned with a plurality of protrusions extending from at least one of the first layer, the second layer and an additional layer.
24. A method of microfluidic handling, the method comprising:
   filling a first cavity defined by a first layer with fluid through a channel;
   filling a second cavity defined by a second layer with fluid through a channel;
   providing a fluid separation between the first cavity and the second cavity;
   compressing the first and second layers relative to one another to cause sealing of the channels resulting in obstruction of the first cavity and the second cavity from further fluid entry; and
   removing the fluid separation and allowing for fluid communication between the first cavity and second cavity.
25. The method of statement 24, wherein compressing the first and second layers relative to one another causes fluid isolation of the first and second cavities from adjacent first and second cavities.
26. The method of statement 24, wherein compressing the first and second layers relative to one another causes substantial filling of the first and second channels with a sealing material.
27. The method of statement 26, wherein compressing the first and second layers relative to one another causes plastic deformation of the sealing material.
28. The method of statement 26, further comprising heating the sealing material to promote substantial filling of the first and second channels with the sealing material.
29. The method of statement 24, wherein manipulation of the separating material causes irreversible removal of the fluid separation between the first cavity and second cavity.
30. The method of statement 24, wherein removing the fluid separation comprises tearing of the at least one separating material.
31. The method of statement 24, wherein removing the fluid separation comprises heating or dissolving at least one separating material between the first and second cavities.
32. The method of statement 24, wherein removing the fluid separation comprises applying at least one of a compressive force, a magnetically driven force, laser irradiation and centrifugation.
33. The method of statement 24, wherein removing the fluid separation causes mixing of fluid ingredients contained within the first and second cavities.
34. The method of statement 33, further comprising thermally cycling the first and second cavities to perform a polymerase chain reaction.
35. A microfluidic device, comprising:
   a first layer defining a first cavity;
   a first channel arranged to provide fluid entry to the first cavity;
   a second layer defining a second cavity;
   a second channel arranged to provide fluid entry to the second cavity; and
   at least one separating material providing fluid separation between the first cavity and the second cavity, wherein the first and second channels are adapted to be sealed resulting in obstruction of the first cavity and the second cavity from further fluid entry, and wherein heating or dissolving of the at least one separating material causes removal of the fluid separation allowing for fluid communication between the first cavity and second cavity.
36. The microfluidic device of statement 35, wherein the first layer defines a plurality of first cavities and the second layer defines a plurality of second cavities, the plurality of first and second cavities corresponding to an array of chambers, and wherein each chamber is adapted to house a reaction upon removal of the fluid separation according to a combination of fluid ingredients provided by a plurality of fluid source reservoirs.
37. The microfluidic device of statement 35, wherein compression of the first and second layers relative to one another causes sealing of the first and second cavities from one another.
38. The micro fluidic device of statement 35, wherein compression of the first and second layers relative to one another causes substantial filling of the first and second channels with a sealing material.
39. The micro fluidic device of statement 35, wherein heating or dissolving of the at least one separating material comprises tearing of the at least one separating material to cause removal of the fluid separation between the first cavity and second cavity.
40. The microfluidic device of statement 39, wherein the at least one separating material is in a stressed or stretched state that, upon heating or dissolving, promotes tearing of the at least one separating material.
41. The microfluidic device of statement 39, wherein the at least one separating material is in a scored or cut state that, upon heating or dissolving, promotes tearing of the at least one separating material.
42. The microfluidic device of statement 35, wherein the at least one separating material is adapted to contract under application of heat.
43. The microfluidic device of statement 35, further comprising at least one relief cavity fluidly connected to a corresponding cavity and adapted to receive an overflow of fluid from the corresponding cavity.
44. The microfluidic device of statement 43, wherein the at least one relief cavity is adapted to remain substantially filled with air upon supply of the corresponding cavity with fluid.
45. The microfluidic device of statement 38, further comprising at least one storage cavity adapted to prevent excess sealing material from filling the first cavity or the second cavity.
46. The microfluidic device of statement 35, wherein the at least one separating material comprises at least one of polycarbonate, PTFE, silicone, polypropylene and paraffin wax.
47. The microfluidic device of statement 35, in combination with a system arranged to perform polymerase chain reaction.
48. The microfluidic device of statement 35, wherein the first and second channels are substantially aligned with a plurality of protrusions.
49. A method of microfluidic handling, the method comprising:
   filling a first cavity defined by a first layer with fluid through a channel;
   filling a second cavity defined by a second layer with fluid through a channel;
   providing at least one separating material as a fluid separation between the first cavity and the second cavity;
   sealing the channels of the first and second layers resulting in obstruction of the first cavity and the second cavity from further fluid entry; and
   heating or dissolving the at least one separating material to remove the fluid separation and allowing for fluid communication between the first cavity and second cavity.
50. The method of statement 49, wherein sealing the channels of the first and second layers comprises compressing the first and second layers relative to one another.
51. The method of statement 49, wherein heating or dissolving the at least one separating material comprises tearing of the at least one separating material.
52. The method of statement 51, further comprising pre-stressing the at least one separating material prior to heating or dissolving.
53. The method of statement 51, further comprising pre-cutting the at least one separating material prior to heating or dissolving.
54. The method of statement 49, wherein heating or dissolving the at least one separating material causes mixing of fluid ingredients contained within the first and second cavities.
55. The method of statement 54, further comprising thermally cycling the first and second cavities to perform a polymerase chain reaction.
56. A microfluidic device, comprising:
   a first layer defining a plurality of cavities;
   a plurality of channels arranged to provide fluid entry to the plurality of cavities;
   a second layer disposed adjacent to the first layer; and
   wherein compression of the first and second layers relative to one another causes sealing of the plurality of channels resulting in obstruction of the plurality of cavities from further fluid entry.
57. The microfluidic device of statement 56, wherein compression of the first and second layers relative to one another causes deformation of a sealing material into space defined by the plurality of channels.
58. The microfluidic device of statement 57, wherein the first layer or the second layer comprises the sealing material.
59. The microfluidic device of statement 57, wherein the sealing material is separate from the first layer and the second layer.
60. The microfluidic device of statement 59, wherein the sealing material comprises the plurality of channels.
61. The microfluidic device of statement 57, wherein compression of the first and second layers relative to one another causes plastic deformation of the sealing material.
62. The microfluidic device of statement 57, wherein the first layer or the second layer comprises a material substantially more rigid than the sealing material.
63. The microfluidic device of statement 57, wherein the sealing material includes an adhesive.
64. The microfluidic device of statement 57, wherein the sealing material includes a wax.
65. The microfluidic device of statement 56, further comprising a third layer disposed adjacent to the first layer and the second layer.
66. The microfluidic device of statement 65, wherein the second layer or the third layer comprises an adhesive membrane disposed on a backing layer.
67. The microfluidic device of statement 56, in combination with a system arranged to perform digital polymerase chain reaction.
68. The microfluidic device of statement 56, wherein compression of the first and second layers relative to one another comprises irreversible sealing of the plurality of channels.
69. The microfluidic device of statement 56, wherein the plurality of cavities are adapted to receive and isolate substantially equal volumes of a fluid ingredient.
70. The microfluidic device of statement 56, wherein the plurality of cavities includes a first plurality of cavities and a second plurality of cavities disposed in fluid communication with one another, the second plurality of cavities adapted to retain a volume of air after filling of the first plurality of cavities.
71. The microfluidic device of statement 56, wherein the first and second layers are adapted to be compressed by a roller.
72. The microfluidic device of statement 56, wherein application of a single compressive force on the first and second layers relative to one another causes a fluid ingredient to be split into a plurality of substantially equal volumes fluidly isolated from one another.
73. The microfluidic device of statement 56, wherein external compression of the first and second layers relative to one another causes sealing of the plurality of channels.
74. The microfluidic device of statement 56, wherein the plurality of channels are substantially aligned with a plurality of protrusions.
75. The microfluidic device of statement 74, wherein the second layer comprises the plurality of protrusions.
76. The microfluidic device of statement 56, in combination with a system arranged to perform polymerase chain reaction.
77. A microfluidic device, comprising:
   a first layer defining at least one channel;
   a second layer having a plurality of protrusions disposed adjacent to the at least one channel; and
   a sealing material disposed adjacent to the at least one channel, wherein the plurality of protrusions are adapted to force at least a portion of the sealing material into the at least one channel upon application of pressure toward the at least one channel, causing partitioning of the at least one channel into a plurality of separate cavities.
78. The microfluidic device of statement 77, wherein the plurality of protrusions comprises an array of ridges arranged such that the at least one channel is adjacent to a plurality of ridges.
79. The microfluidic device of statement 77, wherein each of the plurality of protrusions is substantially elongated in shape.
80. The microfluidic device of statement 77, wherein a width of one of the plurality of protrusions is less than a width of one of the plurality of separate cavities.
81. The microfluidic device of statement 77, wherein the sealing material is separate from the first layer and the second layer.
82. The microfluidic device of statement 77, wherein the application of pressure upon the plurality of protrusions toward the at least one channel causes plastic deformation of the sealing material.
83. The microfluidic device of statement 77, wherein the application of pressure upon the plurality of protrusions toward the at least one channel causes irreversible sealing of the at least one channel.
84. The microfluidic device of statement 77, wherein the application of pressure upon the plurality of protrusions toward the at least one channel comprises compression of the first and second layers relative to one another.
85. The microfluidic device of statement 77, wherein the sealing material includes an adhesive.
86. The microfluidic device of statement 77, wherein the sealing material includes a wax.
87. The microfluidic device of statement 77, in combination with a system arranged to perform digital polymerase chain reaction.
88. The microfluidic device of statement 77, wherein the plurality of separate cavities define substantially equal volumes.
89. A method of microfluidic handling, the method comprising:
   supplying a fluid to at least one channel defined by a first layer, the at least one channel disposed adjacent to a sealing material and a second layer having a plurality of protrusions;
   pressing the plurality of protrusions toward the at least one channel; and
   forcing at least a portion of the sealing material into the at least one channel to partition the at least one channel into a plurality of separate cavities containing the fluid.
90. The method of statement 89, further comprising heating the sealing material during pressing of the plurality of protrusions toward the at least one channel.
91. The method of statement 89, wherein pressing the plurality of protrusions toward the at least one channel comprises irreversible sealing of the at least one channel.
92. The method of statement 89, wherein pressing the plurality of protrusions toward the at least one channel comprises plastically deforming the sealing material.
93. A method of fluidly isolating a plurality of cavities connected to a channel bounded by a sealing material, the method comprising:
   filling said plurality of cavities with a fluid ingredient containing nucleic acids; and
   forcing said sealing material into said channel such that adjacent cavities are fluidly isolated serially one after another.
94. The method of statement 93, wherein forcing said sealing material into said channel comprises using a compression member to push said sealing material toward said channel.
95. The method of statement 94, wherein forcing said sealing material into said channel comprises rolling the compression member over said sealing material.
96. The method of statement 94, wherein forcing said sealing material into said channel comprises distributing compressive force of the compression member through a compliant material.
97. The method of statement 93, wherein filling said plurality of cavities comprises limiting fluid flow into the cavities by flowing fluid through a reduced cross-sectional area of a portion of at least one branch of said channel.
98. The method of statement 93, wherein limiting fluid flow into the cavities comprises flowing fluid through the reduced cross-sectional area of the portion of the at least one branch of said channel after said plurality of cavities have been filled with fluid ingredient.
99. The method of statement 93, wherein forcing said sealing material into said channel is irreversible.
100. A method of fluidly isolating a plurality of cavities formed by a surface of a first layer and connected to at least one input well formed by a second surface of said first layer, said first layer contacting a sealing material, the method comprising:
   filling said plurality of cavities with a fluid ingredient containing nucleic acids; and
   compressing said sealing material so as to obstruct further fluid flow between said plurality of cavities.
101. The method of statement 100, wherein filling said plurality of cavities with the fluid ingredient comprises forcing the fluid ingredient through a channel fluidly connected to said plurality of cavities.
102. The method of statement 100, further comprising obstructing the at least one input well from further fluid flow with a sealing material.
103. The method of statement 102, wherein filling said plurality of cavities comprises deforming said sealing material so as to apply pressure to the at least one input well.
104. The method of statement 100, wherein compressing said sealing material comprises irreversibly deforming the sealing material.
105. The method of statement 100, wherein filling said plurality of cavities comprises reducing a volume of the at least one input well by forcing a portion of a sealing layer into the at least one input well.
106. A microfluidic device, the device comprising:
   a plurality of cavities;
   at least one input well providing fluid entry to said plurality of cavities; and
   wherein said plurality of cavities and said input well are disposed in different surfaces of a layer.
107. The microfluidic device of statement 106, wherein the at least one input well is connected to the plurality of cavities through a channel.
108. The microfluidic device of statement 107, wherein said channel is branched.
109. The microfluidic device of statement 108, wherein said branches are arranged along a direction such that each branch forms an angle of less than 90 degrees with said direction.
110. The microfluidic device of statement 108, wherein said channel comprises sections of reduced cross-sectional area arranged to restrict flow of fluid ingredient after filling any of said plurality of cavities.
111. The microfluidic device of statement 106, further comprising a sealing material arranged to prevent fluid entry to said input well.
112. The microfluidic device of statement 106, wherein the at least one input well comprises at least 96 input wells.
113. The microfluidic device of statement 106, wherein the at least one input well comprises a plurality of input wells arranged at a pitch of around 9 millimeters.
114. The microfluidic device of statement 106, wherein the layer is between 80 to 100 millimeters in width by 120 to 140 millimeters in depth.
115. The microfluidic device of statement 106, further comprising a ridge around said layer protruding above at least one surface.

## Claims

1. A microfluidic device, comprising:
a first layer defining a plurality of cavities;
a plurality of channels arranged to provide fluid entry to the plurality of cavities;
a second layer disposed adjacent to the first layer; and
wherein compression of the first and second layers relative to one another causes sealing of the plurality of channels resulting in obstruction of the plurality of cavities from further fluid entry.

2. The micro fluidic device of statement 1, wherein compression of the first and second layers relative to one another causes deformation of a sealing material into space defined by the plurality of channels.

3. The micro fluidic device of statement 2, wherein the first layer or the second layer comprises the sealing material.

4. The microfluidic device of statement 2, wherein the sealing material is separate from the first layer and the second layer.

5. The microfluidic device of statement 4, wherein the sealing material comprises the plurality of channels.

6. The microfluidic device of statement 2, wherein compression of the first and second layers relative to one another causes plastic deformation of the sealing material.

7. The microfluidic device of statement 2, wherein the first layer or the second layer comprises a material substantially more rigid than the sealing material.

8. The microfluidic device of statement 2, wherein the sealing material includes an adhesive.

9. The microfluidic device of statement 2, wherein the sealing material includes a wax.

10. The microfluidic device of statement 1, further comprising a third layer disposed adjacent to the first layer and the second layer.

11. The microfluidic device of statement 10, wherein the second layer or the third layer comprises an adhesive membrane disposed on a backing layer.

12. The microfluidic device of statement 1, in combination with a system arranged to perform digital polymerase chain reaction.

13. The microfluidic device of statement 1, wherein compression of the first and second layers relative to one another comprises irreversible sealing of the plurality of channels.

14. The microfluidic device of statement 1, wherein the plurality of cavities are adapted to receive and isolate substantially equal volumes of a fluid ingredient.

15. The microfluidic device of statement 1, wherein the plurality of cavities includes a first plurality of cavities and a second plurality of cavities disposed in fluid communication with one another, the second plurality of cavities adapted to retain a volume of air after filling of the first plurality of cavities.

16. The microfluidic device of statement 1, wherein the first and second layers are adapted to be compressed by a roller.

17. The microfluidic device of statement 1, wherein application of a single compressive force on the first and second layers relative to one another causes a fluid ingredient to be split into a plurality of substantially equal volumes fluidly isolated from one another.

18. The microfluidic device of statement 1, wherein external compression of the first and second layers relative to one another causes sealing of the plurality of channels.

19. The microfluidic device of statement 1, wherein the plurality of channels are substantially aligned with a plurality of protrusions.

20. The microfluidic device of statement 19, wherein the second layer comprises the plurality of protrusions.

21. The microfluidic device of statement 1, in combination with a system arranged to perform polymerase chain reaction.
